# FASCICULE DE BREVET EUROPEEN

(11) **EP 3 532 197 B1**
(45) Date de publication et mention de la délivrance du brevet: **10.01.2024**
(21) Numéro de dépôt: 17797409.4
(22) Date de dépôt: 27.10.2017
(51) Int. Cl.: B01J 31/02, B01J 31/06, B01J 31/18, B01J 31/22, B01J 31/24

(54) **CATALYSEURS SUPPORTES CYCLIQUES**
ZYKLISCHE GETRÄGERTE KATALYSATOREN
CYCLIC SUPPORTED CATALYSTS

(30) Priorité: 27.10.2016 FR 1660471
(43) Date de publication de la demande: 04.09.2019
(73) Titulaire: Université Paris-Saclay, 91190 Saint-Aubin (FR); Centre National de la Recherche Scientifique, 75794 Paris Cedex 16 (FR)
(72) Inventeur: HUC, Vincent, Germain, 91400 Orsay (FR); MARTINI, Cyril, August, Roger, 91140 Villebon Sur Yvette (FR); ABDELLAH, Ibrahim, 35200 Rennes (FR); SCHULZ, Emmanuelle, 78470 Saint Remy Les Chevreuse (FR)
(74) Mandataire: Grosset-Fournier, Chantal Catherine
(86) Numéro de dépôt international: PCT/FR2017/052980
(87) Numéro de publication internationale: WO 2018/078304

(56) Documents cités:
- WO-A1-2008/124468
- WO-A1-2011/050300
- JP-A- 2005 255 564
- F. ARNAUD-NEU ET AL: "Extraction and Complexation of Alkali, Alkaline Earth, and F-Element Cations by Calixaryl Phosphine Oxides", CHEMISTRY - A EUROPEAN JOURNAL, vol. 5, no. 1, 4 janvier 1999 (1999-01-04) , pages 175-186, XP055361826, ISSN: 0947-6539, DOI: 10.1002/(SICI)1521-3765(19990104)5:1<175:: AID-CHEM175>3.0.CO;2-P
- LADA N. PUNTUS ET AL: "Lanthanide Complexes with a Calix[8]arene Bearing Phosphinoyl Pendant Arms", EUROPEAN JOURNAL OF INORGANIC CHEMISTRY - CHEMISCHE BERICHTE, vol. 2007, no. 16, juin 2007 (2007-06), pages 2315-2326, XP055361809, DE ISSN: 1434-1948, DOI: 10.1002/ejic.200601180
- JOHN F. MALONE ET AL: "Calix[n]arene phosphine oxides. A new series of cation receptors for extraction of europium, thorium, plutonium and americium in nuclear waste treatment", JOURNAL OF THE CHEMICAL SOCIETY, CHEMICAL COMMUNICATIONS., no. 20, janvier 1995 (1995-01), page 2151, XP055361827, GB ISSN: 0022-4936, DOI: 10.1039/c39950002151
- F. Arnaud-Neu ET AL: "Binding of Lanthanides(III) and Thorium(IV) by Phosphorylated Calixarenes" In: "Calixarenes for Separations", 20 juillet 2000 (2000-07-20), American Chemical Society, Washington, DC, XP055361811, ISBN: 978-0-8412-1788-1 vol. 757, pages 150-164, DOI: 10.1021/bk-2000-0757.ch012, abrégé pages 160-163 figures 8-10
- TILMANN FAHLBUSCH ET AL: "N-Heterocyclic Carbene Complexes of Mercury, Silver, Iridium, Platinum, Ruthenium, and Palladium Based on the Calix[4]arene Skeleton", ORGANOMETALLICS, vol. 28, no. 21, 9 novembre 2009 (2009-11-09), pages 6183-6193, XP055361831, US ISSN: 0276-7333, DOI: 10.1021/om900642x
- MARKUS FRANK ET AL: "Calix[4]arene-SupportedN-Heterocyclic Carbene Ligands as Catalysts for Suzuki Cross-Coupling Reactions of Chlorotoluene", EUROPEAN JOURNAL OF ORGANIC CHEMISTRY, vol. 2004, no. 3, février 2004 (2004-02), pages 607-613, XP055361834, DE ISSN: 1434-193X, DOI: 10.1002/ejoc.200300542

## Description

La présente invention concerne les complexes métalliques comprenant des ligands basés sur les calixarènes et leur utilisation en tant que catalyseurs homogènes ou hétérogènes.

La catalyse métallique représente toutefois un moyen d'accélérer, voire de rendre possible certaines réactions et d'accéder à un grand nombre de composés à des coûts de production très inférieurs aux voies classiques de synthèse organique (nécessitant parfois un nombre important d'étapes). L'utilisation de composés calixarènes, comme catalyseurs est connue (WO2011/050300, JP 2005 255564, WO 2008/124468). Notamment des calixarènes de faibles tailles sont utilisés, par exemple un calix[4]arène comme catalyseur est divulgué dans Tillmann Fahlbusch et al. (Organometallics, vol 28, no 21, 2009, p6183-6193) et Markus Frank et al. (Eur. J. Org. Chem., Vol 2004, no 3, 2004, p 607-613). Des calixarènes comprenant des phosphines et des oxydes de phosphine ont été décrits. Ils sont divulgués comme pouvant être utilisés pour se lier aux métaux, notamment aux lanthanides, dans des objectifs d'extraction ou de purification comme dans F. Arnaud-Neu et al (Chemistry A European Journal, vol 5, no 1, 1999, p 175-186 ; Livre « Calixarenes for Séparation » American Chemical Society, chap 12, 2000, vol 757, page 150-164), Lada N. Puntus et al. (Eur. J. Chem. 2007, 2315-2326) et John F. Malone et al. (J. Chem. Soc, Chem. Commun, no 20, 1995, p 2151).

Les exigences en matière de métaux résiduels dans les produits à destination humaine, en particulier dans les produits à usage pharmaceutique, représentent à l'heure actuelle un frein à l'utilisation de la catalyse métallique dans la fabrication de tels produits. Par exemple, le taux résiduel de métaux de transition des classes 1A et 1B doivent être de moins de 10 ppm pour une administration orale et de moins de 1 ppm pour une administration parentérale.

Différentes voies ont été envisagées pour réduire la quantité de métaux présente dans le produit fini sans nécessité d'étapes de purification coûteuses et/ou fastidieuses.

Parmi ces méthodes, la catalyse hétérogène représente une voie de première importance. L'inconvénient des catalyseurs hétérogènes réside toutefois dans leurs moindres performances par rapport à des catalyseurs homogènes similaires. A l'inverse, l'utilisation de catalyseurs homogènes susceptibles d'être séparés du produit fini par simple filtration à l'issue de la réaction dans laquelle ils ont été engagés (soit après une étape de précipitation, soit par ultafiltration) est une alternative qui a été explorée. Le point commun à ces deux voies réside dans la lixiviation du métal (en anglais « *leaching* ») dans la solution due à la décomplexation du ligand, et donc sa présence dans le produit final.

Un objet de la présente invention est un catalyseur possédant une activité catalytique élevée par rapport aux catalyseurs existants.

Un autre objet de l'invention est un catalyseur susceptible d'être utilisé sous la forme d'un catalyseur homogène ou sous la forme d'un catalyseur hétérogène aisément séparable du produit.

Un encore autre objet de la présente invention est un catalyseur capable de fortement réduire la lixiviation du métal au cours de la réaction dans laquelle il est engagé et l'obtention de produits finis contenant une quantité très faible de métal, notamment inférieure à 100 ppm, voire inférieure à 10 ou à 5 ppm.

La présente invention est définie dans les revendications et concerne des composés de formule (IC) comme définis ci-après. Certaines parties du présent texte décrivent, à titre d'enseignement, d'autres composés qui ne font pas partie de l'invention telle que revendiquée.

Le présent texte décrit et enseigne un composé de formule générale (I) suivante : 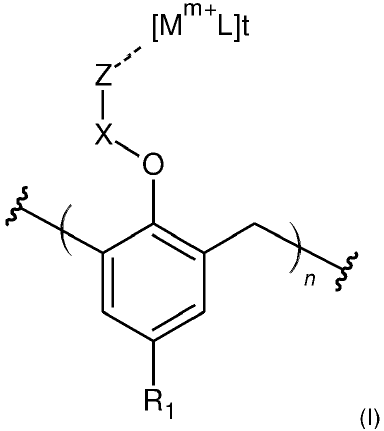 dans laquelle :
n représente un nombre entier de 7 à 20 ou supérieur à 20, notamment de 21 à 220,
X est un alkyle linéaire ou ramifié comprenant de 1 à 10 atomes de carbone, un polyéthylène glycol comprenant de 1 à 5 unités éthylène glycol ou (alkyle linéaire ou ramifié comprenant de 0 à 10 atomes de carbone)-aryle, l'aryle étant notamment choisi parmi phényle et naphthyle, R₁ représente un alkyle linéaire ou ramifié comprenant de 1 à 8 atomes de carbone, O-alkyle linéaire ou ramifié comprenant de 1 à 8 atomes de carbone ou O-(alkyle linéaire ou ramifié comprenant de 0 à 3 atomes de carbone)-aryle,
M^{m+} représente un métal à l'état d'oxydation m ou un agrégat métallique comprenant un ensemble de métaux à l'état d'oxydation m, m étant 0, 1, 2, 3, 4 ou 5, notamment 0, 1, 2 ou 3,
L est constitué d'un ou plusieurs ligands neutres ou chargés négativement liés au métal, et ledit composé a la formule (IA) dans laquelle t vaut 0 et Z représente un groupement Q choisi dans le groupe constitué des ligands phosphorés tels que les phosphonites et les phosphinites, à l'exception des phosphines et des oxydes de phosphine, des carbènes N-hétérocycliques tels que les 1,3-imidazolylidènes, les 1,3-imidazolinylidènes, les 1,2,4-triazolylidènes, les 1,3-benzimidazolylidènes, les 1 ,2,4-triazolylidènes et les 1 ,3-thiazolylidènes, ou des ligands salen, ledit composé a la formule (IB) dans laquelle t vaut 0 et Z représente un groupement Q', précurseur d'un groupement Q, choisi dans le groupe constitué des azoliums tels que les 1,3-imidazolium, les 1,3-imidazolinium, les 1,3-benzimidazolium, les 1,2,4-triazolium, les 1,3-thiazolium, les précurseurs de ligands phosphorés à l'exception des phosphines et des oxydes de phosphine, ou les chalcogénures, en particulier les sulfures, de phosphine, ou des précurseurs de ligands salen, en particulier des dérivés du salicylaldéhyde,
ledit composé a la formule (IC) dans laquelle t vaut 1 et Z représente un groupement Q choisi dans le groupe constitué des ligands phosphorés tels que les phosphines, les phosphonites, les phosphinites, et des carbènes N-hétérocycliques tels que les 1,3-imidazolylidènes, les 1,3-imidazolinylidènes, les 1,2,4-triazolylidènes, les 1,3-benzimidazolylidènes, les 1,2,4-triazolylidènes et les 1,3-thiazolylidènes, ou des ligands salen.

La présente invention est définie dans les revendications et concerne un composé cyclique de formule générale (IC) suivante : 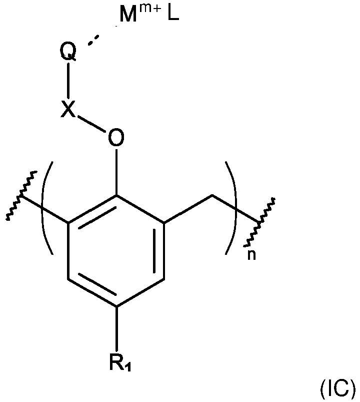 dans laquelle :
n représente un nombre entier de 7 à 220,
X est :
   - un alkyle linéaire ou ramifié comprenant de 1 à 10 atomes de carbone, ou
   - un polyéthylène glycol comprenant de 1 à 5 unités éthylène glycol ou
   - (alkyle linéaire ou ramifié comprenant de 0 à 10 atomes de carbone)-aryle, l'aryle étant de préférence choisi parmi phényle et naphthyle,
R₁ représente :
   - un alkyle linéaire ou ramifié comprenant de 1 à 8 atomes de carbone, ou
   - O-alkyle linéaire ou ramifié comprenant de 1 à 8 atomes de carbone ou
   - O-(alkyle linéaire ou ramifié comprenant de 0 à 3 atomes de carbone)-aryle,
M^{m+} représente un métal à l'état d'oxydation m ou un agrégat métallique comprenant un ensemble de métaux à l'état d'oxydation m, m étant 0, 1, 2, 3, 4 ou 5, de préférence 0, 1, 2 ou 3,
L est constitué d'un ou plusieurs ligands neutres ou chargés négativement liés au métal, et Q représente un groupement choisi dans le groupe constitué des ligands phosphorés, et des carbènes N-hétérocycliques, ou des ligands salen.

Au sens de la présente invention, on entend par « alkyle linéaire ou ramifié comprenant de 1 à 10 atomes de carbone » une chaîne carbonée acyclique, saturée, linéaire ou ramifiée, comprenant 1 à 10 atomes de carbone. Il s'agit des groupements méthyle, éthyle, propyle, butyle, pentyle, hexyle, heptyle, octyle, nonyle et décyle. La définition de propyle, butyle, pentyle, hexyle, heptyle, octyle, nonyle et décyle inclut tous les isomères possibles. Par exemple, le terme butyle comprend n-butyle, iso-butyle, sec-butyle et ter-butyle. Un ou plusieurs atomes d'hydrogène peuvent être remplacés dans la chaîne alkyle par un atome de fluor ou par un groupement CF₃.

Au sens de la présente invention, on entend par « unité éthylène glycol » un groupement de formule -CH₂-CH₂-O. Un polyéthylène glycol ayant de 1 à 5 unités éthylène glycol est donc une chaîne de formule -(CH₂-CH₂-O)ₙ-CH₃ où n vaut 1 à 5.

Au sens de la présente invention, on entend par « aryle » un monocycle aromatique comprenant de 5 à 6 atomes de carbone, pouvant être lui-même fusionné avec un second cycle saturé, insaturé ou aromatique. Le terme aryle inclut, sans restriction, le phényle et ses dérivés dans lesquels un ou plusieurs atomes d'hydrogène ont été remplacés par un groupe indépendamment choisi parmi les groupes alkyle, halogène, alkyle-halogène, hydroxyle, alkoxy, amino, amido, nitro, cyano, trifluorométhyle, acide carboxylique ou ester carboxylique et le naphthyle. Des exemples d'aryles substitués incluent, sans restriction, le 2-, 3- ou 4-(N,N-diméthylamino)-phényle, 2-, 3- ou 4-cyanophényle, le 2-, 3- ou 4-nitrophényle, le 2-, 3- ou 4-fluoro-, chloro-, bromo- ou iodo-phényle, le 2-, 3- ou 4-méthoxyphényle.

Au sens de la présente invention, on entend par (alkyle linéaire ou ramifié comprenant de 1 à 10 atomes de carbone)-aryle, un groupement comprenant une chaîne carbonée acyclique, saturée, linéaire ou ramifiée, comprenant 1 à 10 atomes de carbone telle que définie ci-dessus liée à un aryle. Des exemples d'alkyle linéaire ou ramifié comprenant de 1 à 10 atomes de carbone)-aryle sont notamment les groupements benzyles et homobenzyles.

Au sens de la présente invention, « M^{m+} » représente un atome métallique à l'état d'oxydation 0, 1, 2, 3, 4 ou 5, notamment 0, 1, 2 ou 3. Ledit atome métallique est lié à autant de ligands que nécessaires pour obtenir une espèce stable et neutre. Par exemple, lorsque le métal est le palladium à l'état d'oxydation 2, il peut être lié à deux ions chlorure, au groupement Q des composés selon la présente invention et à un autre ligand L, tel qu'une pyridine ou l'un de ses dérivés. La nature des ligands auxquels le métal M est lié varie selon le précurseur métallique et les conditions utilisées pour la préparation du complexe métallique. Le métal M peut également faire partie d'un agrégat métallique ou *cluster.* A titre d'exemple de tels agrégats, on peut citer les agrégats de métaux carbonyles, notamment le dodécacarbonyle de triruthénium Ru₃(CO)₁₂.

Les carbènes N-hétérocycliques sont bien connus de l'Homme du Métier et ont fait l'objet d'articles de revues et d'ouvrages. On peut en particulier citer comme référence sur les carbènes N-hétérocycliques l'ouvrage N-Heterocyclic Carbenes: Effective Tools for Organometallic Synthesis (Steven P. Nolan Editor ; ISBN : 978-3-527-33490-2).

Les carbènes N-hétérocycliques ont la formule générale suivante (M représentant un métal auquel ils sont attachés) : 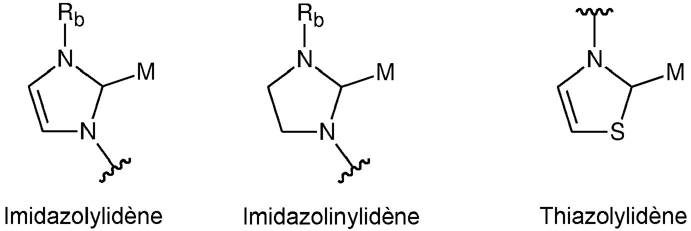 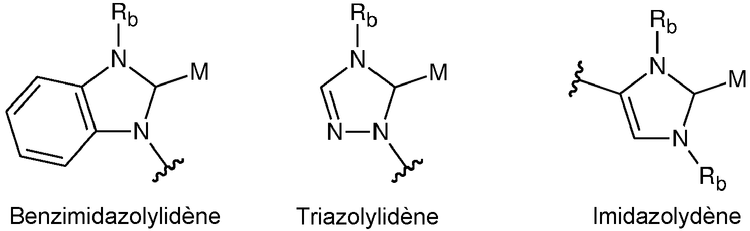 dans laquelle :
R_{b} est choisi de manière non exhaustive parmi :
- les alkyles tels que i-propyle et adamantyle,
- les groupes de formule CH₂-COOR_{c} où R_{c} est un alkyle ou un aryle,
- les aryles tels que phényle, éventuellement substitués notamment par un ou plusieurs alkyles, en particulier méthyle ou i-propyle, un ou plusieurs alkoxy, en particulier méthoxy, et
- les hétéroaryles, tels que pyridyle, furyle, pyrrolyle et indolyle.

Au sens de la présente invention, on entend par « phosphine » un composé de formule PR₂ lié au reste du calix[n]arène par l'atome de phosphore. De manière non exhaustive, on peut citer, en tant que groupement R :
- les alkyles tels que méthyle, éthyle, propyle, n-butyle, t-butyle, octyle, cyclohexyle, adamantyle,
- les aryles tels que phényle, éventuellement substitués notamment par un ou plusieurs alkyles, en particulier méthyles, un ou plusieurs alkoxy, en particulier méthoxy, naphthyle, éventuellement substitués,
- les hétéroaryles, tels que pyridyle, furyle, pyrrolyle et indolyle, ou
- les deux groupements R peuvent former ensemble un carbocycle.

De nombreux exemples de phosphines sont connus de l'art antérieur et les ligands correspondants peuvent être introduits par l'Homme du Métier à partir de l'enseignement de la présente demande de brevet.

De manière plus avantageuse, la phosphine est choisie dans le groupe constitué de la dicyclohexylphosphine, la diphénylphosphine et la di-tert-butylphosphine.

Au sens de la présente invention, on entend par « phosphonite » un composé de formule P(OR)₂, dans laquelle R est tel que défini pour les phosphines ci-dessus.

Au sens de la présente invention, on entend par « phosphinite » un composé de formule PRₐ(OR), dans laquelle Rₐ et R, indépendamment l'un de l'autre, sont tels que définis pour les phosphines ci-dessus.

Au sens de la présente invention, on entend par « ligand salen » un composé de formule 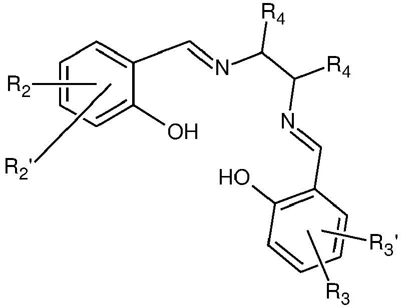 dans laquelle :
les groupements R₂, R₂', R₃, R₃' et R₄ sont choisis parmi :
   - les alkyles tels que méthyle, éthyle, propyle, n-butyle, t-butyle, octyle, cyclohexyle, adamantyle,
   - les aryles tels que phényle, éventuellement substitués notamment par un ou plusieurs alkyles, en particulier méthyles, un ou plusieurs alkoxy, en particulier méthoxy, naphthyle, éventuellement substitués,
   - les hétéroaryles, tels que pyridyle, furyle, pyrrolyle et indolyle, ou
   - les deux groupements R peuvent former ensemble un carbocycle,
lié au reste du calix[n]arène par l'intermédiaire de l'un des groupements R₂, R₂', R₃ ou R₃'.

Les carbones porteurs des groupements R₄ peuvent être racémiques, énantioenrichis ou énantiopurs.

Le présent texte décrit et enseigne un composé de formule générale (I) suivante : 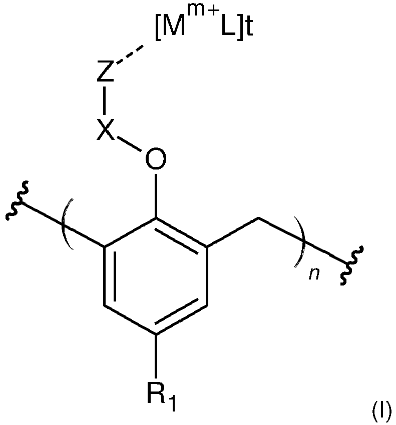 dans laquelle :
n représente un nombre entier de 7 à 20 ou supérieur à 20, notamment de 21 à 220,
X est un alkyle linéaire ou ramifié comprenant de 1 à 10 atomes de carbone, un polyéthylène glycol comprenant de 1 à 5 unités éthylène glycol ou (alkyle linéaire ou ramifié comprenant de 0 à 10 atomes de carbone)-aryle, l'aryle étant notamment choisi parmi phényle et naphthyle,
R₁ représente un alkyle linéaire ou ramifié comprenant de 1 à 8 atomes de carbone, O-alkyle linéaire ou ramifié comprenant de 1 à 8 atomes de carbone ou O-(alkyle linéaire ou ramifié comprenant de 0 à 3 atomes de carbone)-aryle,
M^{m+} représente un métal à l'état d'oxydation m ou un agrégat métallique comprenant un ensemble de métaux à l'état d'oxydation m, m étant 0, 1, 2, 3, 4 ou 5, notamment 0, 1, 2 ou 3,
L est constitué d'un ou plusieurs ligands neutres ou chargés négativement liés au métal, et
ledit composé a la formule (IA) dans laquelle t vaut 0 et Z représente un groupement Q choisi dans le groupe constitué des ligands phosphorés tels que les phosphonites et les phosphinites, à l'exception des phosphines et des oxydes de phosphine, des carbènes N-hétérocycliques tels que les 1,3-imidazolylidènes, les 1,3-imidazolinylidènes, les 1,2,4-triazolylidènes, les 1,3-benzimidazolylidènes, les 1,2,4-triazolylidènes et les 1,3-thiazolylidènes,
ledit composé a la formule (IB) dans laquelle t vaut 0 et Z représente un groupement Q', précurseur d'un groupement Q, choisi dans le groupe constitué des azoliums tels que les 1,3-imidazolium, les 1,3-imidazolinium, les 1,3-benzimidazolium, les 1,2,4-triazolium, les 1,3-thiazolium, les précurseurs de ligands phosphorés à l'exception des phosphines et des oxydes de phosphine, ou les chalcogénures, en particulier les sulfures, de phosphine,
ledit composé a la formule (IC) dans laquelle t vaut 1 et Z représente un groupement Q choisi dans le groupe constitué des ligands phosphorés tels que les phosphines, les phosphonites, les phosphinites, et des carbènes N-hétérocycliques tels que les 1,3-imidazolylidènes, les 1,3-imidazolinylidènes, les 1,2,4-triazolylidènes, les 1,3-benzimidazolylidènes, les 1,2,4-triazolylidènes et les 1,3-thiazolylidènes.

Dans un mode de réalisation les calix[n]arènes selon la présente invention contiennent de 7 à 20 motifs phénoliques. Ces calixarènes peuvent être isolés purs ou être sous la forme de mélanges comprenant des calixarènes de tailles différentes.

Dans un mode de réalisation avantageux, les calixarènes sont sous forme pure.

De manière plus avantageuse, les calixarènes selon la présente invention sont des calix[8]arènes ou des calix[16]arènes.

Dans un autre mode de réalisation, les calixarènes contiennent plus de 20 motifs phénoliques, notamment de 21 à 220 motifs phénoliques. Ces calixarènes dits « larges » ou « géants » sont notamment préparés selon la méthode décrite dans les demandes internationales WO 2014/033407 et WO 2014/033406. Ils sont isolés sous la forme d'un mélange de calixarènes et le nombre n indique donc un nombre moyen de motifs phénoliques.

Avantageusement, les calixarènes selon la présente invention dans lesquels n est supérieur à 20 contiennent de 21 à 35, 35 à 50, 51 à 199 ou 100 à 220 motifs phénoliques. Plus avantageusement, le nombre moyen de motifs phénoliques dans ces calixarènes est d'environ 35.

Dans les composés selon la présente invention, le groupement X est avantageusement une chaîne alkyle linéaire comprenant de 2 à 8 ou de 3 à 8 atomes de carbone, notamment 2, 3, 4, 5, 6, 7 ou 8. De manière plus avantageuse, ladite chaîne akyle linéaire comprend de 3 à 6 atomes de carbone. Dans un mode de réalisation particulier, le groupement X est un alkyle linéaire comprenant 3 ou 4 atomes de carbone, en particulier 4 atomes de carbone. La présente invention concerne donc un composé de formule (IC) tel que défini ci-dessus, dans laquelle X est un alkyle linéaire comprenant de 2 à 8 ou de 3 à 8 atomes de carbone, notamment de 2 à 6 ou de 3 à 6 atomes de carbone, de préférence 3 ou 4 atomes de carbone.

Dans les composés selon la présente invention, le groupement R₁ est avantageusement choisi parmi n-octyle, *t*-butyle, O-benzyle et O-alkyle, notamment O-méthyle, O-éthyle, O-propyle et O-n-octyle, de préférence t-butyle et O-benzyle. Dans un mode de réalisation particulier, R₁ est O-benzyle.

Dans un mode de réalisation, les composés sont sous la forme d'un mélange d'au moins deux composés de formule (IA), d'au moins deux composés de formule (IB) ou d'un mélange d'au moins deux composés selon l'invention de formule (IC).

Le présent texte décrit et enseigne des ligands basés sur un motif calix[n]arène, lesdits ligands ayant la formule générale (IA) suivante : 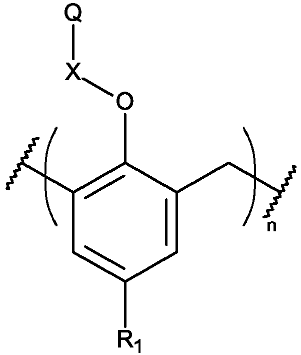 dans laquelle : n, X, R₁ sont tels que définis précédemment.

Dans les composés de formule (IA), le groupement Q est choisi dans le groupe des ligands phosphorés tels que les phosphonites, et les phosphinites, à l'exception des phosphines et des oxydes de phosphine, et des carbènes N-hétérocycliques tels que les 1,3-imidazolylidènes, les 1,3-imidazolinylidènes, les 1,2,4-triazolylidènes, les 1,3-benzimidazolylidènes, les 1,2,4-triazolylidènes et les 1,3-thiazolylidènes.

Dans les composés de formule (IA), les composés sont donc aptes à se lier à un métal M.

Le présent texte décrit et enseigne un composé répondant à la formule (IB) suivante : 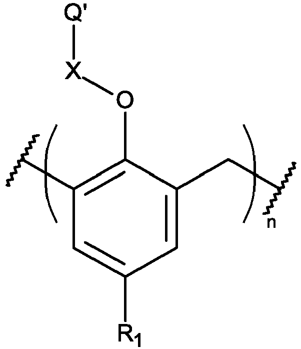 dans laquelle :
n, X et R₁ sont tels que définis précédemment.

Dans les composés de formule (IB), le groupement Q' est un précurseur d'un groupement Q, choisi dans le groupe constitué des azoliums tels que les 1,3-imidazolium, les 1,3-imidazolinium, les 1,3-benzimidazolium, les 1,2,4-triazolium, les 1,3-thiazolium, les précurseurs de ligands phosphorés à l'exception des phosphines et des oxydes de phosphine ou les chalcogénures, en particulier les sulfures, de phosphine.

Par « précurseur d'un groupement Q », on entend que le groupement Q' est susceptible de conduire au groupement Q préalablement à sa liaison avec le métal ou concomitamment à sa liaison avec le métal. Par exemple, le composé de formule (IB) dans lequel Q' est un imidazolium peut conduire à la formation du composé de formule (IA) dans lequel Q est un imidazolylidène par réaction avec une base telle qu'un alcoolate, notamment le *t*-butylate de potassium ou de sodium.

Les oxydes de phosphine représentent un exemple de précurseurs de phosphine. Ils sont en particulier utiles dans le cas des phosphines hautement sensibles à l'humidité et/ou à l'oxygène telles que les dialkylphosphines comme par exemple la dicyclohexylphosphine ou la di-t-butylphosphine.

Avantageusement, Q' est un azolium choisi dans le groupe constitué des 1 ,3-imidazolium, des 1 ,3-imidazolinium, des 1 ,2,4-triazolium, des 1,3-benzimidazolium et des 1,3-thiazolium. Il s'agit notamment d'un aryl-imidazolium, l'aryle étant en particulier le 1,3,5-mésityle ou le 2,6-diisopropyl-phényle.

Un autre objet de la présente invention est un complexe métallique comprenant un ligand de formule (IA) tel que défini précédemment.

Au sens de la présente invention, on entend par « complexe métallique » un composé comprenant un composé de formule (IA) dans lequel un au moins des groupements Q est lié à un atome métallique M, de préférence ayant le degré d'oxydation 0, 1, 2, 3, 4 ou 5, notamment 0, 1, 2 ou 3.

De manière inattendue, les Inventeurs de la présente invention ont mis en évidence que des composés contenant autant de métal M que de ligand de formule Q pouvaient être obtenus avec les ligands décrit dans le présent texte.

Le nombre d'atomes de métal M dépend bien entendu de la nature du ligand, du métal et de la stoechiométrie (c'est-à-dire du ratio M/Q). Par exemple, dans le cas où le métal est le rhodium et Q représente une phosphine et dans le cas où le métal est le palladium et Q représente un imidazolylidène, des complexes métalliques contenant 8 atomes métalliques ont été obtenus avec le calix[8]arène.

Les complexes métalliques selon la présente invention ont donc en particulier la formule (IC) suivante : 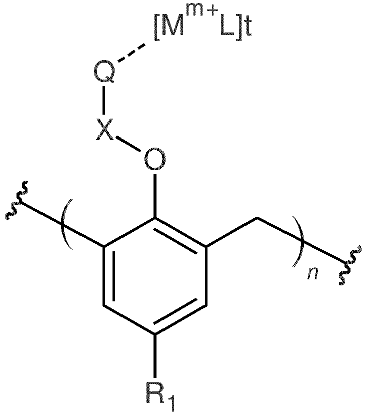 dans laquelle :
n, X, M^{m+}, R₁ et L sont tels que définis précédemment,
t vaut 1,
Q est choisi dans le groupe constitué des ligands phosphorés tels que les phosphines, les phosphonites, les phosphinites, et des carbènes N-hétérocycliques tels que les 1,3-imidazolylidènes, les 1,3-imidazolinylidènes, les 1,2,4-triazolylidènes, les 1,3-benzimidazolylidènes, les 1,2,4-triazolylidènes et les 1,3-thiazolylidènes.

Le groupement Q est notamment un 1 ,3-imidazolylidène, en particulier un aryl-imidazolylidène dans lequel l'aryle est en particulier le 1,3,5-mésityle ou le 2,6-diisopropyl-phényle.

Avantageusement, les complexes métalliques selon la présente invention, notamment de formule (IC) contiennent au moins un métal de transition appartenant au groupe IB, IIB, IIIB, IVB, VB, VIB, VIIB ou VIIIB.

Plus avantageusement, le métal est choisi parmi les métaux connus pour posséder une activité catalytique. Il s'agit notamment d'un métal choisi dans le groupe constitué de Mn, Cr, Fe, Co, Ni, Pd, Ru, Rh, Au, Pt, Cu, Ag, Bi, Re, Mo, Ir, V, Cd et Zn, en particulier un métal choisi dans le groupe constitué de Ni, Pd, Ru, Rh, Cu, Co ou Pt.

De manière encore plus avantageuse, le métal est choisi dans le groupe constitué de Pd⁰, Pd²⁺, Rh⁰, Rh¹⁺, Rh³⁺, Co²⁺, Co³⁺, Ru⁰ et Ru²⁺. Le métal peut également appartenir à un agrégat métallique, tel que Ru₃(CO)₁₂.

Dans un mode de réalisation avantageux, la présente invention concerne un complexe métallique dans lequel chaque groupement Q est lié à un atome M unique. La présente invention concerne donc un complexe métallique dans lequel le nombre de métaux M est égal à n du calix[n]arène, de formule (IC) suivante : 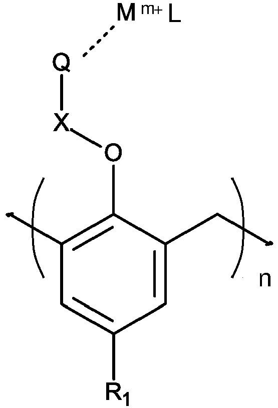 dans laquelle :
n, X et R¹ sont tels que définis précédemment,
Q est choisi dans le groupe constitué des ligands phosphorés tels que les phosphines, les phosphonites, les phosphinites, et des carbènes N-hétérocycliques tels que les 1,3-imidazolylidènes, les 1,3-imidazolinylidènes, les 1,2,4-triazolylidènes, les 1,3-benzimidazolylidènes, les 1,2,4-triazolylidènes et les 1,3-thiazolylidènes,
M^{m+} représente un métal à l'état d'oxydation m ou un agrégat métallique comprenant un ensemble de métaux à l'état d'oxydation m, m étant 0, 1, 2, 3, 4 ou 5, notamment 0, 1, 2 ou 3,
L est constitué d'un ou plusieurs ligands neutres ou chargés négativement liés au métal.

Le groupe M^{m+}L dans le complexe peut être notamment Ru₃(CO)₁₂, (Norbornadiène)RhCI, (cyclooctadiène)RhCl, RhCl₃, PdCl₂, des complexes obtenus à partir du Pd(dba)₂. D'autres complexes de métaux de transition avec des phosphines ou des carbènes sont connus et pourront être préparés par l'Homme du Métier en mettant en oeuvre l'enseignement de la présente demande.

La présente invention concerne également un composé de formule (IC) : 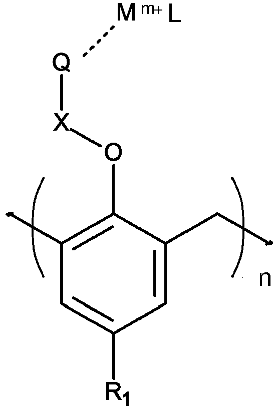 dans laquelle :
n, X, R¹ sont tels que définis précédemment,
Q est choisi dans le groupe constitué des ligands phosphorés tels que les phosphines, les phosphonites, les phosphinites, et des carbènes N-hétérocycliques tels que les 1,3-imidazolylidènes, les 1,3-imidazolinylidènes, les 1,2,4-triazolylidènes, les 1,3-benzimidazolylidènes, les 1,2,4-triazolylidènes et les 1,3-thiazolylidènes,
M^{m+} représente un métal à l'état d'oxydation m ou un agrégat métallique comprenant un ensemble de métaux à l'état d'oxydation m, m étant 0, 1, 2, 3, 4 ou 5, notamment 0, 1, 2 ou 3, et notamment un métal de transition du groupe IB, IIB, IIIB, VA, IVB, VB, VIB, VIIB ou VIIIB, en particulier choisi dans le groupe constitué de Ni, Pd, Ru, Rh, Cu, Co ou Pt, et
L est constitué d'un ou plusieurs ligands neutres ou chargés négativement liés au métal.

La présente invention concerne également un composé de formule (IC) choisi parmi les composés de formule suivante :

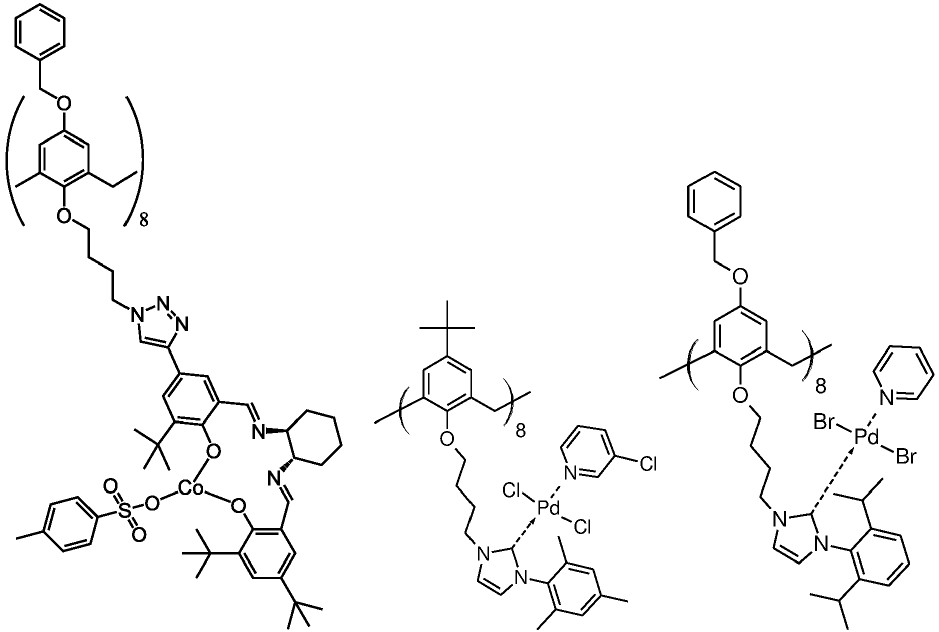

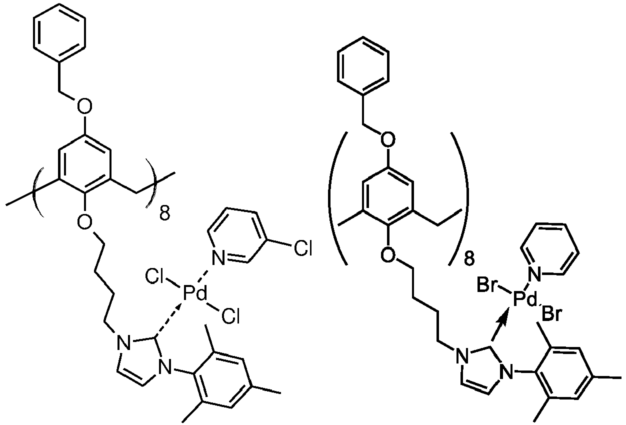

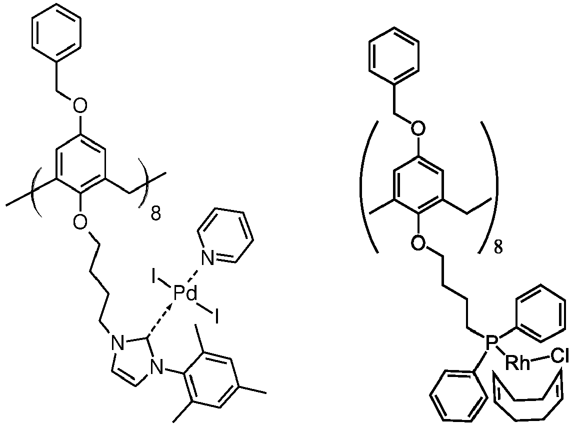

Ledit composé de formule (IC) peut être sous forme d'une solution dans un solvant notamment choisi dans le groupe constitué du DMF, du DMSO, du THF, du NMP, du dioxane, du toluène, du chloroforme et du dichlorométhane.

Ledit composé de formule (IC) peut également être sous forme d'une suspension dans un solvant notamment choisi dans le groupe constitué des alcools, tels que le méthanol, l'éthanol, l'isopropanol et le butanol, de l'eau ou d'un mélange de ces solvants.

Le composé de formule (IC) peut également être sous la forme d'un solide sec.

Le présent texte décrit et enseigne un composé de formule (IA1) dans laquelle :
n représente un nombre entier de 7 à 20,
X est un alkyle linéaire comprenant 3 à 6 atomes de carbone,
t vaut 0 et Z représente un groupement Q choisi dans le groupe constitué des ligands phosphorés, notamment des phosphonites, et des phosphinites, à l'exception des phosphines et des oxydes de phosphine et des carbènes N-hétérocycliques tels que les 1,3-imidazolylidènes, les 1,3-imidazolinylidènes, les 1,2,4-triazolylidènes, les 1,3-benzimidazolylidènes, les 1,2,4-triazolylidènes et les 1,3-thiazolylidènes, de préférence une phosphine ou un 1,3-imidazolylidène,
R₁ représente n-octyle, t-butyle, O-benzyle ou O-alkyle, notamment O-méthyle, O-éthyle, O-propyle ou O-n-octyle de préférence t-butyle ou O-benzyle,
ou un précurseur dudit composé de formule (IA1) répondant à la formule (IB1) dans laquelle Q' est choisi dans le groupe constitué des azoliums tels que les 1,3-imidazolium, les 1,3-imidazolinium, les 1,3-benzimidazolium, les 1,2,4-triazolium, les 1,3-thiazolium, des précurseurs de ligands phosphorés à l'exception des phosphines et des oxydes de phosphine ou les chalcogénures, en particulier les sulfures de phosphine, de préférence un 1,3-imidazolium ou un oxyde de phosphine,
ou un complexe métallique comprenant un composé de formule (IA1), en particulier de formule (IC1) dans laquelle :
   M^{m+} représente un métal à l'état d'oxydation m ou un agrégat métallique comprenant un ensemble de métaux à l'état d'oxydation m, m étant 0, 1, 2, 3, 4 ou 5, notamment 0, 1, 2 ou 3.

Le présent texte décrit et enseigne un composé de formule (IA2), dans laquelle :
n représente un nombre entier de 7 à 20,
X est un alkyle linéaire comprenant 4 atomes de carbone,
t vaut 0 et Z représente un groupement Q choisi dans le groupe constitué des ligands phosphorés, notamment des phosphonites, et des phosphinites, à l'exception des phosphines et des oxydes de phosphine et des carbènes N-hétérocycliques tels que les 1,3-imidazolylidènes, les 1,3-imidazolinylidènes, les 1,2,4-triazolylidènes, les 1,3-benzimidazolylidènes, les 1,2,4-triazolylidènes et les 1,3-thiazolylidènes, de préférence une phosphine ou un 1,3-imidazolylidène,
R₁ représente n-octyle, t-butyle, O-benzyle ou O-alkyle, notamment O-méthyle, O-éthyle, O-propyle ou O-n-octyle de préférence t-butyle ou O-benzyle,
ou un précurseur dudit composé de formule (IA2) répondant à la formule (IB2) dans laquelle Q' est choisi dans le groupe constitué des azoliums tels que les 1,3-imidazolium, les 1,3-imidazolinium, les 1,3-benzimidazolium, les 1,2,4-triazolium, les 1,3-thiazolium, des précurseurs de ligands phosphorés à l'exception des phosphines et des oxydes de phosphine ou les chalcogénures, en particulier les sulfures de phosphine, de préférence un 1,3-imidazolium ou un oxyde de phosphine,
ou un complexe métallique comprenant un composé de formule (IA2), en particulier de formule (IC2) dans laquelle :
   M^{m+} représente un métal à l'état d'oxydation m ou un agrégat métallique comprenant un ensemble de métaux à l'état d'oxydation m, m étant 0, 1, 2, 3, 4 ou 5, notamment 0, 1, 2 ou 3.

Le présent texte décrit et enseigne aussi un composé de formule (IA3) suivante, dans laquelle :
n représente 8,
X est un alkyle linéaire comprenant 4 atomes de carbone,
t vaut 0 et Z représente un groupement Q choisi dans le groupe constitué des ligands phosphorés, notamment des phosphonites, et des phosphinites, à l'exception des phosphines et des oxydes de phosphine et des carbènes N-hétérocycliques tels que les 1,3-imidazolylidènes, les 1,3-imidazolinylidènes, les 1,2,4-triazolylidènes, les 1,3-benzimidazolylidènes, les 1,2,4-triazolylidènes et les 1,3-thiazolylidènes, de préférence une phosphine ou un 1,3-imidazolylidène,
R₁ représente n-octyle, t-butyle, O-benzyle ou O-alkyle, notamment O-méthyle, O-éthyle, O-propyle ou O-n-octyle de préférence t-butyle ou O-benzyle,
ou un précurseur dudit composé de formule (IA3) répondant à la formule (IB3) dans laquelle Q' est choisi dans le groupe constitué des azoliums tels que les 1,3-imidazolium, les 1,3-imidazolinium, les 1,3-benzimidazolium, les 1,2,4-triazolium, les 1,3-thiazolium, des précurseurs de ligands phosphorés à l'exception des phosphines et des oxydes de phosphine ou les chalcogénures, en particulier les sulfures de phosphine, de préférence un 1,3-imidazolium ou un oxyde de phosphine,
ou un complexe métallique comprenant un composé de formule (IA3), en particulier de formule (IC3) dans laquelle :
   M^{m+} représente un métal à l'état d'oxydation m ou un agrégat métallique comprenant un ensemble de métaux à l'état d'oxydation m, m étant 0, 1, 2, 3, 4 ou 5, notamment 0, 1, 2 ou 3.

Le présent texte décrit et enseigne un composé de formule générale (I) suivante : 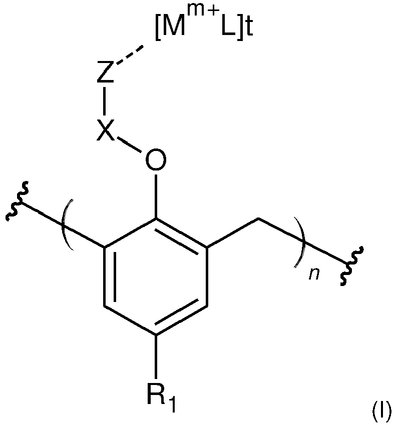 dans laquelle :
n représente un nombre entier de 7 à 20 ou supérieur à 20, notamment de 21 à 220,
X est un alkyle linéaire ou ramifié comprenant de 1 à 10 atomes de carbone, un polyéthylène glycol comprenant de 1 à 5 unités éthylène glycol ou (alkyle linéaire ou ramifié comprenant de 0 à 10 atomes de carbone)-aryle, l'aryle étant notamment choisi parmi phényle et naphtyle,
R₁ représente un alkyle linéaire ou ramifié comprenant de 1 à 8 atomes de carbone, O-alkyle linéaire ou ramifié comprenant de 1 à 8 atomes de carbone ou O-(alkyle linéaire ou ramifié comprenant de 0 à 3 atomes de carbone)-aryle,
M^{m+} représente un métal à l'état d'oxydation m ou un agrégat métallique comprenant un ensemble de métaux à l'état d'oxydation m, m étant 0, 1, 2, 3, 4 ou 5, notamment 0, 1, 2 ou 3,
L est constitué d'un ou plusieurs ligands neutres ou chargés négativement liés au métal, et
ledit composé a la formule (IA) dans laquelle t vaut 0 et Z représente un groupement Q choisi dans le groupe constitué des ligands salen, en particulier des ligands salen énantiopurs, notamment dérivés de la cyclohexyldiamine et de la diphényléthylènediamine, et de dérivés des susdits ligands salen,
ledit composé a la formule (IB) dans laquelle t vaut 0 et Z représente un groupement Q', précurseur d'un groupement Q, choisi dans le groupe constitué des précurseurs de ligands salen, notamment les dérivés de salicylaldéhyde,
ledit composé a la formule (IC) dans laquelle t vaut 1 et Z représente un groupement Q choisi dans le groupe constitué des ligands salen, en particulier des ligands salen énantiopurs, notamment dérivés de la cyclohexyldiamine et de la diphényléthylènediamine, et des dérivés des susdits ligands salen.

Le présent texte décrit et enseigne des ligands basés sur un motif calix[n]arène, lesdits ligands ayant la formule générale (IA) suivante : 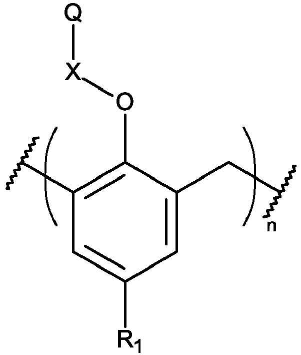 dans laquelle :
n, X, R₁ sont tels que définis précédemment,
le groupement Q est choisi dans le groupe constitué des ligands salen, en particulier des ligands salen énantiopurs, notamment dérivés de la cyclohexyldiamine et de la diphényléthylènediamine, et des dérivés des susdits ligands salen.

Le présent texte décrit et enseigne un composé répondant à la formule (IB) suivante : 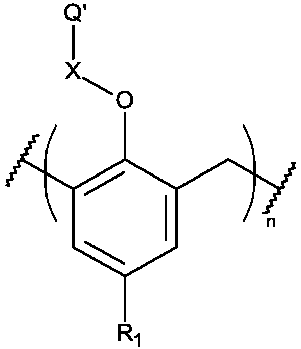 dans laquelle :
n, X et R₁ sont tels que définis précédemment,
le groupement Q' est un précurseur d'un groupement Q, choisi dans le groupe constitué des précurseurs de ligands salen, notamment les dérivés de salicylaldéhyde.

Dans un mode de réalisation avantageux, la présente invention est un composé répondant à la formule (IC) suivante : 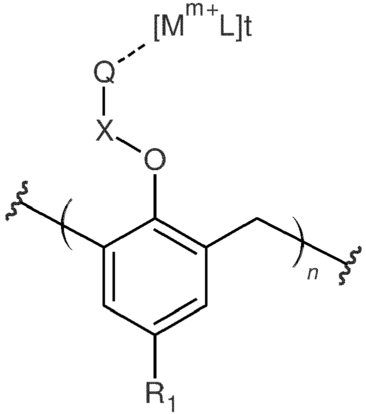 dans laquelle :
n, X, M^{m+}, R₁ et L sont tels que définis précédemment,
t vaut 1,
Q est choisi dans le groupe constitué des ligands salen, en particulier des ligands salen énantiopurs, notamment dérivés de la cyclohexyldiamine et de la diphényléthylènediamine, et des dérivés des susdits ligands salen.

Un autre objet de la présente invention concerne l'utilisation d'un composé de formule (IC) tel que défini ci-dessus en tant que catalyseur dans une réaction de chimie organique.

Les composés selon la présente invention, en raison de leur solubilité particulière, peuvent être utilisés soit en tant que catalyseurs homogènes, soit en tant que catalyseurs hétérogènes.

Les composés de formule (IA), (IB) et (IC) tels que définis ci-dessus sont en effet solubles dans certains solvants et ne le sont pas dans d'autres.

Dans un mode de réalisation, les composés de formule (IC) peuvent donc être employés en tant que catalyseurs homogènes dans un solvant dans lequel ils sont solubles. On peut citer, à titre d'exemple de solvants utilisables pour la catalyse homogène le DMF, le DMSO, le THF, le dioxane, la NMP, le toluène, le chloroforme et le dichlorométhane.

Lorsqu'ils sont utilisés en tant que catalyseurs homogènes, les composés de formule (IC) peuvent être séparés du produit final par filtration en ajoutant au milieu réactionnel un solvant dans lequel ils ne sont pas solubles et dans lequel le produit de la réaction de chimie organique est soluble. Des exemples de tels solvants sont les alcools, l'eau ou un mélange de ces solvants. Le composé de formule (IC) peut également être séparé du produit de la réaction par lavage dudit produit de la réaction avec un solvant dans lequel le composé de formule (IC) est soluble et le produit de la réaction ne l'est pas.

Dans un autre mode de réalisation, les composés de formule (IC) peuvent être utilisés en tant que catalyseur hétérogène dans un solvant dans lequel ils sont insolubles. Des exemples de tels solvants sont les alcools tels que le méthanol, l'éthanol l'isopropanol et le butanol, l'eau ou d'un mélange de ces solvants.

Dans la présente invention, le composé de formule (IC) peut être sous forme d'une suspension dans le milieu réactionnel. Selon un autre mode de réalisation, le composé de formule (IC) peut être déposé sur les parois d'un réacteur dans lequel la réaction de chimie organique est mise en oeuvre, par exemple par évaporation d'une solution contenant le composé de formule (IC), introduit dans une cartouche destinée à un réacteur à flux continu ou dispersé dans un matériau organique ou inorganique.

De manière avantageuse, la présente invention concerne l'utilisation d'un composé de formule (IC) tel que défini ci-dessus en tant que catalyseur dans une réaction choisie dans le groupe constitué des réactions de réduction, notamment en présence d'H₂, telle que l'hydrogénation de carbonyles, d'alcènes, d'alcynes ou d'arènes, les réactions d'oxydations, notamment en présence d'O₂, les réactions de formation de liaisons carbone-carbone telles que la réaction de Suzuki, de Heck, de Stille, de Kumada et de Sonogashira, les réactions de formation de liaison carbone-hétéroatome, notamment de formation de liaison carbone-azote, carbone-oxygène, carbone-phosphore et carbone-soufre, les réactions de carbonylations en présence de CO, telle que la réaction de Fischer-Tropsch, les réactions de carboxylations en phase gazeuse en présence de CO₂, et les réaction de catalyses asymétriques comme les réactions d'ouverture d'époxyde ou les réactions de catalyses asymétriques permettant la formation de liaison C-C ou C-X.

La présente invention concerne donc l'utilisation d'un composé de formule (IC) tel que défini ci-dessus en tant que catalyseur dans une réaction de chimie organique, notamment choisie dans le groupe constitué des réactions de réductions, notamment en présence d'H₂, telles que l'hydrogénation de carbonyles, d'alcènes, d'alcynes ou d'arènes, les réactions d'oxydations, notamment en présence d'O₂, les réactions de formation de liaisons carbone-carbone telles que la réaction de Suzuki, de Heck, de Stille, de Kumada et de Sonogashira, les réactions de formation de liaison carbone-hétéroatome, notamment de formation de liaisons carbone-azote, carbone-oxygène, carbone-phosphore et carbone-soufre, les réactions de carbonylations en présence de CO, telle que la réaction de Fischer-Tropsch, les réactions de carboxylations en phase gazeuse en présence de CO₂, et les réaction de catalyses asymétriques comme les réactions d'ouverture d'époxyde ou les réactions de catalyses asymétriques permettant la formation de liaison C-C ou C-X.

Dans un mode de réalisation, la présente invention concerne l'utilisation d'un composé de formule (IC) tel que défini ci-dessus dans laquelle M est le palladium dans une réaction de formation de liaison carbone-carbone, en particulier dans la réaction de Heck ou la réaction de Suzuki. De manière avantageuse, on utilise un composé dans lequel le groupement Q est un carbène N-hétérocyclique, en particulier un imidazolylidène. De manière plus avantageuse, le composé de formule (IC) est un composé de formule (IC1), (IC2) ou (IC3), notamment dans lequel Q est un carbène N-hétérocyclique, en particulier un imidazolylidène.

Dans un autre mode de réalisation, la présente invention concerne l'utilisation d'un composé de formule (IC) tel que défini ci-dessus, dans laquelle M est le rhodium dans une réaction d'hydrogénation, notamment d'hydrogénation d'une double liaison et/ou d'un cycle aromatique, en particulier d'un alcène. La sélectivité des complexes du rhodium selon la présente invention vis-à-vis du cycle aromatique ou de la double liaison peut être contrôlée en modifiant la température de la réaction. De manière avantageuse, on utilise un composé dans lequel le groupement Q est un ligand phosphoré, notamment une phosphine. De manière plus avantageuse, le composé de formule (IC) est un composé de formule (IC1), (IC2) ou (IC3), notamment dans lequel Q est un ligand phosphoré, en particulier une phosphine.

Dans un autre mode de réalisation, la présente invention concerne l'utilisation d'un composé de formule (IC) tel que défini ci-dessus, dans laquelle M est le cobalt dans une réaction énantiosélective d'ouverture d'époxyde. De manière avantageuse, on utilise un composé dans lequel le groupement Q est un ligand salen, notamment en particulier des ligands salen énantiopurs, notamment dérivés de la cyclohexyldiamine et de la diphényléthylènediamine, et des dérivés des susdits ligands salen.

Dans un autre mode de réalisation, les composés de formule (IC) peuvent être utilisés comme un catalyseur dans lequel le taux de lixiviation du métal de ce catalyseur est inférieur à 10%, en particulier inférieur à 5%, du poids total du métal contenu dans ce catalyseur.

Le présent texte décrit et enseigne un procédé de préparation d'un composé de formule (I) tel que défini ci-dessus.

Le présent texte décrit et enseigne un procédé de préparation d'un composé de formule (IA) tel que défini précédemment : 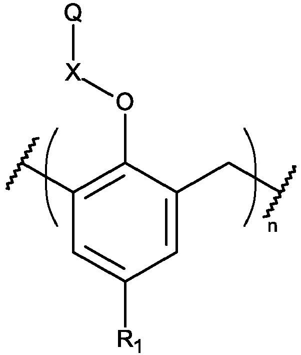 dans laquelle Q est un ligand phosphoré, tel qu'un phosphonite secondaire, ou un phosphinite secondaire à l'exception d'une phosphine et d'un oxyde de phosphine,
comprenant une étape de mise en contact d'un composé de formule (II) : 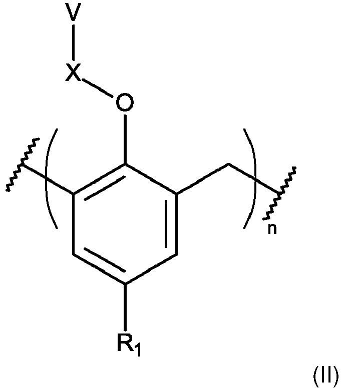 dans laquelle :
n, X, R₁ sont tels que définis précédemment,
V représente un groupe partant, notamment choisi dans le groupe constitué des halogènes tels que CI, Br et I et des sulfonates tels que OSO₂Me, OSO₂(C₇H₇) et OSO₂CF₃,
avec un composé de formule Q-A dans lequel Q est choisi dans le groupe constitué des ligands phosphorés, tels qu'un phosphonite secondaire, ou un phosphinite secondaire, à l'exception des phosphines et des oxydes de phosphine, et A représente un métal alcalin choisi dans le groupe constitué de Na, K et Li ou A représente H et la réaction est mise en oeuvre en présence d'une base.

Le groupement Q est introduit par une réaction de substitution nucléophile. Lorsque X représente un (alkyle linéaire ou ramifié comprenant de 1 à 10 atomes de carbone)-aryle, le groupement Q peut être introduit sur l'aryle à l'aide d'un catalyseur métallique approprié. Selon un autre mode de réalisation, le composé de formule (IA) peut être préparé en faisant réagir le calix[n]arène ayant un groupe phénol OH libre avec un composé de formule Q-X-W dans lequel W représente un groupe partant, notamment choisi dans le groupe constitué des halogènes tels que CI, Br et I et des sulfonates tels que OSO₂Me, OSO₂(C₇H₇) et OSO₂CF₃.

Le présent texte décrit et enseigne un procédé de préparation d'un composé de formule (IB) tel que défini précédemment : 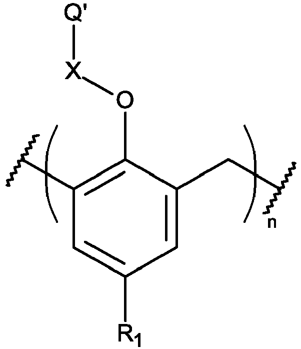 dans laquelle Q' est choisi parmi les ligands phosphorés à l'exception des phosphines et des oxydes de phosphine ou les chalcogénures, en particulier les sulfures de phosphine,
comprenant une étape de mise en contact d'un composé de formule (II) : 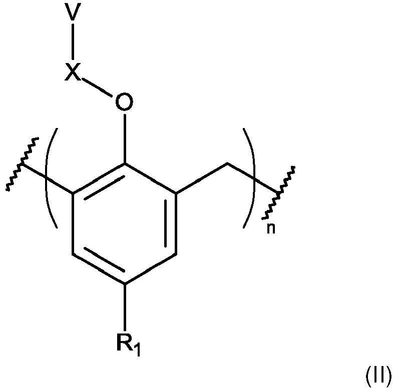 dans laquelle :
n, X, R₁ sont tels que définis précédemment,
V représente un groupe partant, notamment choisi dans le groupe constitué des halogènes tels que CI, Br et I et des sulfonates tels que OSO₂Me, OSO₂(C₇H₇) et OSO₂CF₃, avec un composé de formule Q'-A dans lequel Q' est choisi dans le groupe constitué d'un ligand phosphoré à l'exception d'une phosphine et d'un oxydes de phosphine, d'un chalcogénure, notamment un sulfure de phosphine secondaire, d'un phosphinate secondaire ou d'un phosphonate secondaire et A représente un métal alcalin choisi dans le groupe constitué de Na, K et Li ou A représente H et la réaction est mise en oeuvre en présence d'une base.

Les sels de potassium, sodium et lithium des phosphines, phosphinites et phosphonites sont des composés connus, disponibles dans le commerce.

Le composé de formule (IB) peut être préparé en faisant réagir le calix[n]arène ayant un groupe phénol OH libre avec un composé de formule Q-X-W dans lequel W représente un groupe partant, notamment choisi dans le groupe constitué des halogènes tels que CI, Br et I et des sulfonates tels que OSO₂Me, OSO₂(C₇H₇) et OSO₂CF₃.

Le présent texte décrit et enseigne un procédé de préparation d'un composé de formule (IB) tel que défini précédemment : 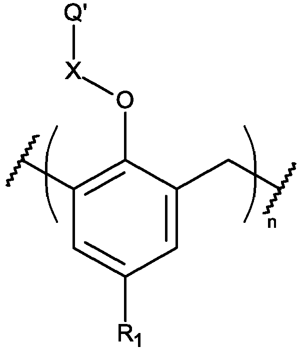 dans laquelle Q' est choisi dans le groupe constitué des azoliums tels que les 1,3-imidazolium, les 1,3-imidazolinium, les 1,3-benzimidazolium, les 1,2,4-triazolium, les 1,3-thiazolium,
comprenant une étape de mise en contact d'un composé de formule (II) : 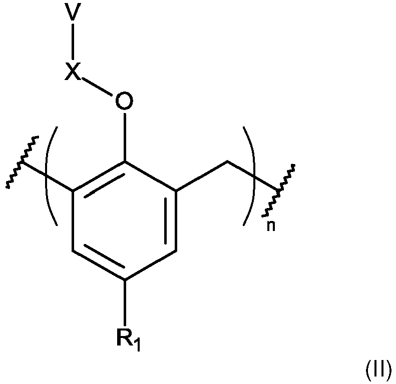 dans laquelle :
n, X, R₁ sont tels que définis précédemment,
V représente un groupe partant, notamment choisi dans le groupe constitué des halogènes tels que CI, Br et I et des sulfonates tels que OSO₂Me, OSO₂(C₇H₇) et OSO₂CF₃,
avec un composé de formule Q' choisi dans le groupe constitué des azoles tels que les 1,3-imidazoles, les 1 ,3-imidazolines, les 1 ,3-benzimidazoles, les 1 ,2,4-triazoles et les 1,3-thiazoles.

La préparation des composés de formule (IB) dans lesquels le groupement Q' est un azolium peut être réalisée selon d'autres méthodologies bien connues de l'Homme du Métier. Il s'agit par exemple d'un procédé dans lequel un composé de formule (II) dans lequel V représente un azole est alkylé avec un agent alkylant, tel qu'un halogénure d'alkyle.

Le composé de formule (IB) peut être préparé en faisant réagir le calix[n]arène ayant un groupe phénol OH libre avec un composé de formule Q'-X-W dans lequel W représente un groupe partant, notamment choisi dans le groupe constitué des halogènes tels que CI, Br et I et des sulfonates tels que OSO₂Me, OSO₂(C₇H₇) et OSO₂CF₃.

Dans un mode de réalisation, la présente invention concerne un procédé de préparation d'un complexe métallique tel que défini ci-dessus, en particulier d'un composé de formule (IC).

Les méthodes pour la préparation des composés de formule (IC) diffèrent selon le métal, le précurseur utilisé et la nature du ligand. L'Homme du Métier saura, sur la base du présent texte, préparer les complexes métalliques correspondants.

La présente invention concerne donc dans un mode de réalisation un procédé de préparation d'un composé de formule (IC) tel que défini précédemment : 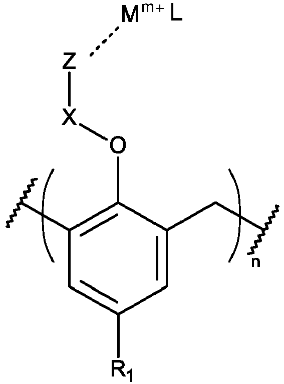 dans laquelle :
n, X, L, M^{m+} et R₁ sont tels que définis précédemment,
Z représente un groupement Q choisi dans le groupe constitué des phosphines, des phosphonites, des phosphinites, et des carbènes N-hétérocycliques tels que les 1,3-imidazolylidènes, les 1,3-imidazolinylidènes, les 1,2,4-triazolylidènes, les 1,3-benzimidazolylidènes, les 1,2,4-triazolylidènes et les 1,3-thiazolylidènes.
comprenant une étape de mise en contact d'un composé de formule I dans laquelle t vaut 0 et Z représente un groupement Q choisi dans le groupe constitué des ligands phosphorés tels que les phosphines, les phosphonites, les phosphinites, et des carbènes N-hétérocycliques tels que les 1,3-imidazolylidènes, les 1,3-imidazolinylidènes, les 1,2,4-triazolylidènes, les 1,3-benzimidazolylidènes, les 1,2,4-triazolylidènes et les 1,3-thiazolylidènes. 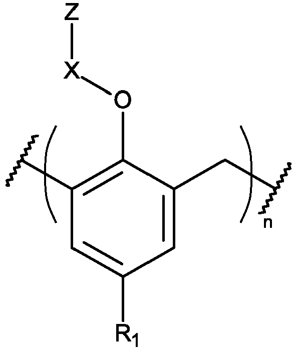
avec un complexe métallique de formule (L')M^{m+} où M^{m+} représente un métal à l'état d'oxydation m ou un agrégat métallique comprenant un ensemble de métaux à l'état d'oxydation m, m étant 0, 1, 2, 3, 4 ou 5, notamment 0, 1, 2 ou 3, et L' est constitué d'un ou plusieurs ligands neutres ou chargés négativement liés au métal.

Les précurseurs métalliques utilisables pour la préparation des complexes métalliques, en particulier de formule (IC) sont par exemple dans le cas du rhodium des complexes alcéniques du rhodium tels que le [(Norbornadiène)RhCl]₂, [(cyclooctadiène)RhCl]₂ ou des sels tels que RhCl₃, dans le cas du palladium du PdCl₂, du (cyclooctadiène)PdCl₂, des complexes du palladium et de la dibenzylidènacétone tels que Pd(dba)₂ et Pd₂(dba)₃, du Pd(CH₃CN)₂Cl₂ ou dans le cas du Cobalt du CoCl₂ ou du Co(OAc)₂.

Les précurseurs métalliques utilisables pour la préparation des composés de formule (IC) sont bien connus de l'Homme du Métier qui sera à même de sélectionner le précurseur et les conditions réactionnelles appropriées pour obtenir les complexes désirés.

Les composés de formule (IC) dans lesquels Q représente un azolylidène peuvent être préparés selon différentes méthodologies connues de l'Homme du Métier. Lorsque le précurseur métallique ne contient pas de ligand susceptible de conduire à la formation du carbène N-hétérocyclique (tel qu'un ligand basique), on peut préparer le carbène N-hétérocyclique avant ou préparer un complexe pouvant être utilisé dans une réaction de transmétallation (par exemple un complexe avec l'argent). Le complexe peut également être préparé par génération du carbène *in situ,* c'est à dire par réaction avec un précurseur métallique contenant un ligand susceptible de générer le carbène ou en présence d'une base.

Dans un autre mode de réalisation, la présente invention concerne un procédé de préparation d'un composé de préparation d'un composé de formule (IC) tel que défini précédemment : 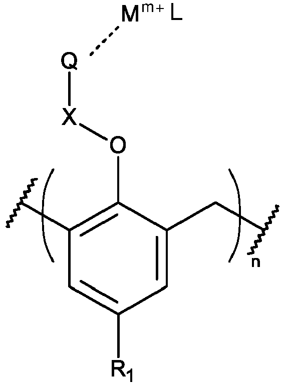 dans laquelle :
n, X, L, M^{m+} et R₁ sont tels que définis précédemment,
comprenant une étape de mise en contact d'un composé de formule (IB) : 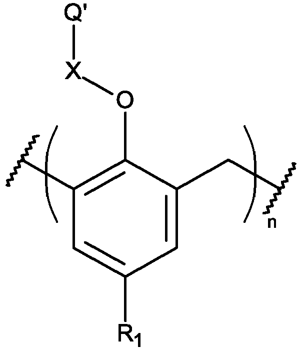
tel que défini précédemment, dans laquelle Q' est choisi dans le groupe constitué des azoliums tels que les 1,3-imidazolium, les 1,3-imidazolinium, les 1,3-benzimidazolium, les 1,2,4-triazolium et les 1,3-thiazolium,
avec un complexe métallique de formule (L')M^{m+} où M^{m+} représente un métal à l'état d'oxydation m, m étant 0, 1, 2, 3, 4 ou 5, notamment 0, 1, 2 ou 3, et L' est constitué d'un ou plusieurs ligands neutres ou chargés négativement liés au métal, éventuellement en présence d'une base.

La présente invention concerne également dans un autre mode de préparation un composé de formule (IC) tel que défini précédemment : 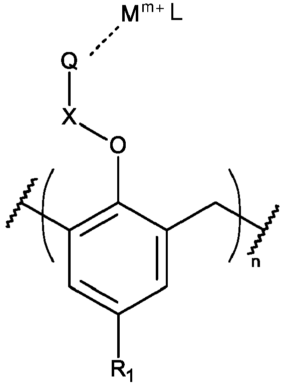 dans laquelle :
n, X, L, M^{m+} et R₁ sont tels que définis précédemment,
comprenant les étapes de :
   (a) mise en contact d'un composé de formule (IB) : 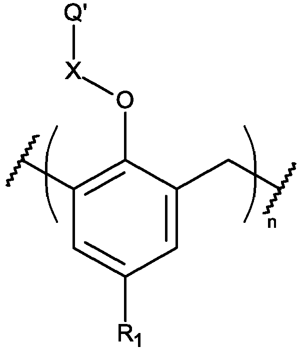 tel que défini précédemment, dans laquelle Q' est choisi dans le groupe constitué des azoliums tels que les 1,3-imidazolium, les 1,3-imidazolinium, les 1,3-benzimidazolium, les 1,2,4-triazolium, les 1,3-thiazolium avec une base, pour donner un carbène N-hétérocyclique tels qu'un 1,3-imidazolylidène, un 1,3-imidazolinylidène, un 1,2,4-triazolylidène, un 1,3-benzimidazolylidène, un 1,2,4-triazolylidène ou un 1,3-thiazolylidène de formule (IA) tel que défini précédemment,
   (b) mise en contact du carbène N-hétérocyclique obtenu à l'étape (a) avec un complexe métallique de formule (L')M^{m+} où M^{m+} représente un métal à l'état d'oxydation m ou un agrégat métallique comprenant un ensemble de métaux à l'état d'oxydation m, m étant 0, 1, 2, 3, 4 ou 5, notamment 0, 1, 2 ou 3, et L' est constitué d'un ou plusieurs ligands neutres ou chargés négativement liés au métal, pour donner le composé de formule (IC).

Le présent texte décrit et enseigne un composé de formule (IV) suivante : 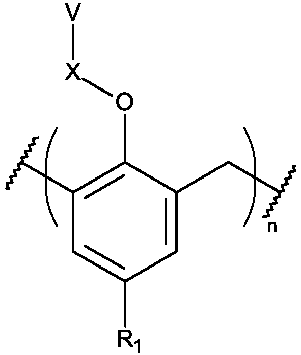 dans laquelle :
n et R₁ sont tels que définis ci-dessus,
X est un alkyle linéaire ou ramifié comprenant de 4 à 8 atomes de carbone, notamment 4 atomes de carbone,
V représente un groupe partant, notamment choisi dans le groupe constitué des halogènes tels que CI, Br et I et des sulfonates tels que SOsMe, SO₃(C₇H₇) et SO₃CF₃.

Le présent texte décrit et enseigne un procédé de préparation d'un composé de formule (IV) telle que définie précédemment : 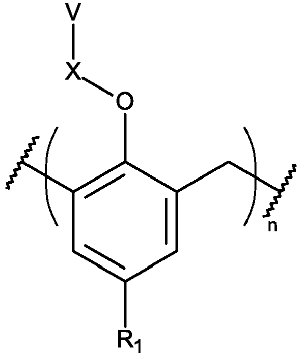 comprenant une réaction de substitution nucléophile impliquant un composé de formule générale (III) 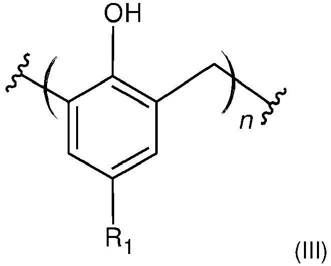
et un précurseur du groupe de formule générale -X-V, dans laquelle X et V sont tels que définis ci-dessus, comme par exemple les dihalogénures d'alkyle, avantageusement le 1-bromo-4-chlorobutane,
en présence d'une base, avantageusement l'hydrure de sodium ou le carbonate de potassium,
et d'un solvant, avantageusement le diméthylformamide (DMF), pour donner le composé de formule générale (IV) :
   dans laquelle R₁ et n sont tels que définis ci-dessus, n étant avantageusement de 7 à 20, notamment 8.

Cette méthodologie permet d'obtenir le calix[n]arène avec un rendement supérieur à 90 % (contre 51 % dans l'art antérieur).

De manière avantageuse, ledit composé de formule (IV) est isolé par au moins une étape de trituration dans un alcool, avantageusement le méthanol ou l'éthanol, en l'absence d'un autre solvant.

De manière avantageuse, le composé de formule (V) est isolé par une première trituration avec du méthanol et une deuxième trituration avec de l'éthanol.

En utilisant cette méthodologie, le produit de formule (IV) est obtenu de manière quasiment pure, c'est-à-dire un degré de pureté supérieur à 95 %, sans étape de chromatographie.

Le présent texte décrit et enseigne en outre un procédé de préparation d'un composé de formule (IA) tel que défini précédemment : 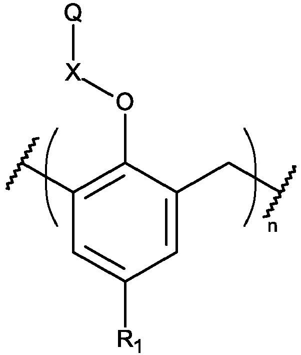 dans laquelle Q est un ligand phosphoré tel qu'un phosphinite secondaire ou un phosphonite secondaire, à l'exception d'une phosphine et d'un oxyde de phosphine,
ou
de préparation d'un composé de formule (IB) tel que défini précédemment : 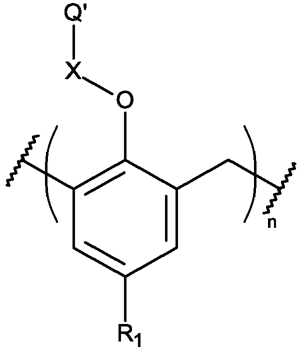 dans laquelle Q' est choisi dans le groupe constitué des azoliums tels que les 1,3-imidazolium, les 1,3-imidazolinium, les 1,3-benzimidazolium, les 1,2,4-triazolium, les 1,3-thiazolium, comprenant une étape de mise en contact d'un composé de formule (II) : 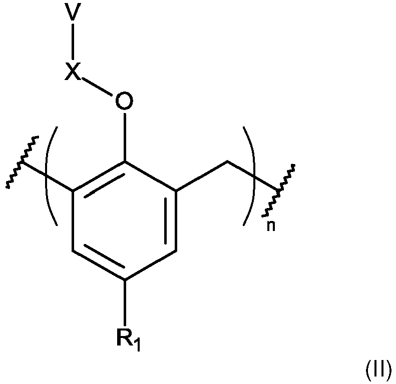 dans laquelle :
n, X, R¹ sont tels que définis précédemment,
V représente un groupe partant, notamment choisi dans le groupe constitué des halogènes tels que CI, Br et I et des sulfonates tels que OSO₂Me, OSO₂(C₇H₇) et OSO₂CF₃,
avec un composé de formule Q-A dans lequel Q est choisi dans le groupe constitué des ligands phosphorés tels que un phosphonite secondaire, ou un phosphinite secondaire, à l'exception des phosphines et des oxydes de phosphine et A représente un métal alcalin choisi dans le groupe constitué de Na, K et Li ou A représente H et la réaction est mise en oeuvre en présence d'une base, pour donner un composé de formule (IA),
ou avec un composé de formule Q' choisi dans le groupe constitué des azoles tels que les 1,3-imidazoles, les 1,3-imidazolines, les 1,3-benzimidazoles, les 1,2,4-triazoles et les 1,3-thiazoles.

La présente invention concerne en outre un procédé de préparation d'un composé de formule (IC) : 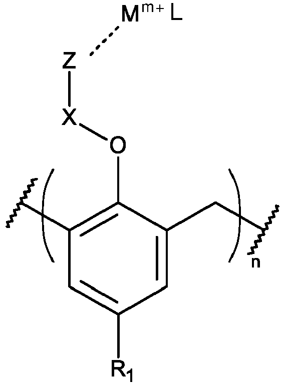 dans laquelle :
n, X, L, M^{m+} et R₁ sont tels que définis précédemment,
Z représente un groupement Q choisi dans le groupe constitué des phosphines, des phosphonites, des phosphinites, et des carbènes N-hétérocycliques tels que les 1,3-imidazolylidènes, les 1,3-imidazolinylidènes, les 1,2,4-triazolylidènes, les 1,3-benzimidazolylidènes, les 1,2,4-triazolylidènes et les 1,3-thiazolylidènes,
comprenant une étape de mise en contact d'un composé de formule I dans laquelle t vaut 0 et Z représente un groupement Q choisi dans le groupe constitué des ligands phosphorés tels que les phosphines, les phosphonites, les phosphinites, et des carbènes N-hétérocycliques tels que les 1,3-imidazolylidènes, les 1,3-imidazolinylidènes, les 1,2,4-triazolylidènes, les 1,3-benzimidazolylidènes, les 1,2,4-triazolylidènes et les 1,3-thiazolylidènes, 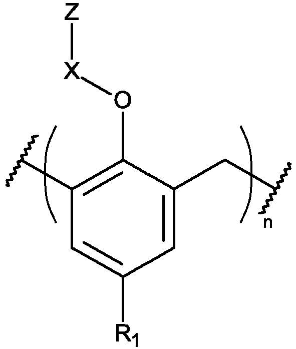
avec un complexe métallique de formule (L')M^{m+} où M^{m+} représente un métal à l'état d'oxydation m ou un agrégat métallique comprenant un ensemble de métaux à l'état d'oxydation m, m étant 0, 1, 2, 3, 4 ou 5, notamment 0, 1, 2 ou 3, et L' est constitué de 0, un ou plusieurs ligands neutres ou chargés négativement liés au métal.

Le présent texte décrit et enseigne un procédé de préparation d'un composé de formule (IA) tel que défini précédemment : 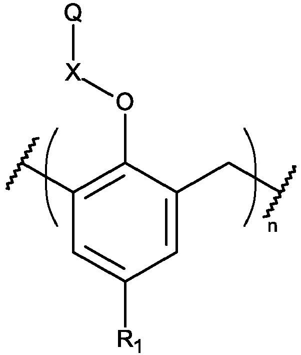 dans laquelle :
n, X, R₁ sont tels que définis précédemment,
Q est choisi dans le groupe constitué des ligands salen, en particulier des ligands salen énantiopurs, notamment dérivés de la cyclohexyldiamine et de la diphényléthylènediamine, et des dérivés des susdits ligands salen,
comprenant une étape de mise en contact d'un composé de formule (IB) : 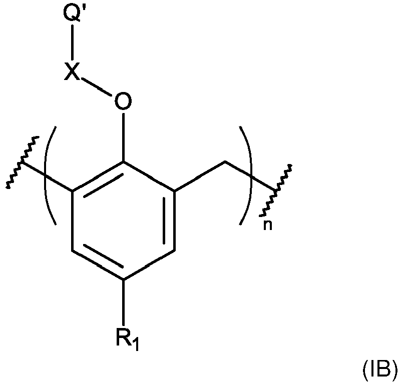 dans laquelle :
   n, X, R₁ sont tels que définis précédemment,
   Q' représente un groupe, précurseur du ligand salen, en particulier les dérivés du salicylaldéhyde et notamment le 3-(tert-butyl)-5-triazole-2-hydroxybenzaldehyde,
   avec un autre groupement précurseur du ligand salen, en particulier les dérivés du salicylaldéhyde et notamment le composé de formule VII.

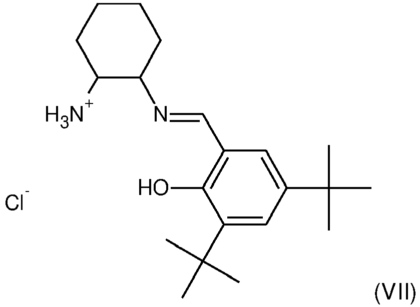

Le présent texte décrit et enseigne un procédé de préparation d'un composé de formule (IB) tel que défini précédemment : 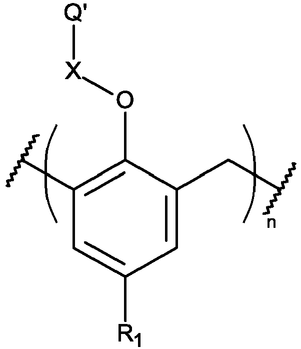 dans laquelle Q' est choisi dans le groupe des précurseurs de ligand salen, en particulier les dérivés du salicylaldéhyde et notamment le 3-(tert-butyl)-5-triazole-2-hydroxybenzaldehyde,
comprenant une étape de mise en contact d'un composé de formule (VIII) : 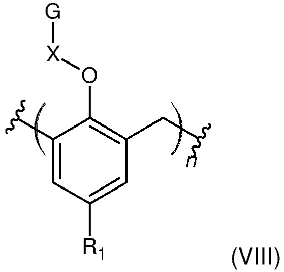 dans laquelle :
n, X, R₁ sont tels que définis précédemment,
G représente un groupe de greffage de Q', en particulier un groupe N₃,
avec le groupement Q' choisi dans le groupe des précurseurs de ligand salen, en particulier les dérivés du salicylaldéhyde et notamment le 3-(tert-butyl)-5-éthynyl-2-hydroxybenzaldehyde.

Le présent texte décrit et enseigne un procédé de préparation d'un composé de formule (VIII) tel que défini précédemment : 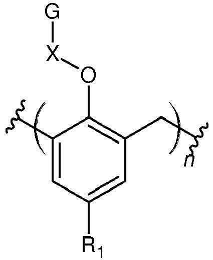 dans laquelle G est choisi comme ci-dessus,
comprenant une étape de mise en contact d'un composé de formule (II) : 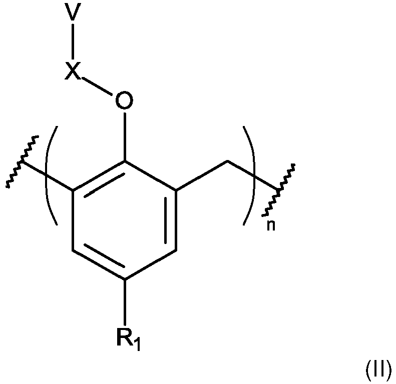 dans laquelle :
n, X, R₁ sont tels que définis précédemment,
V représente un groupe partant, notamment choisi dans le groupe constitué des halogènes tels que CI, Br et I et des sulfonates tels que OSO₂Me, OSO₂(C₇H₇) et OSO₂CF₃,
avec un précurseur d'un groupe de greffage de Q', en particulier l'azoture de sodium, avec Q' tel que défini précédemment.

Dans un autre mode de réalisation, la présente invention concerne un procédé de préparation d'un composé de préparation d'un composé de formule (IC) tel que défini précédemment : 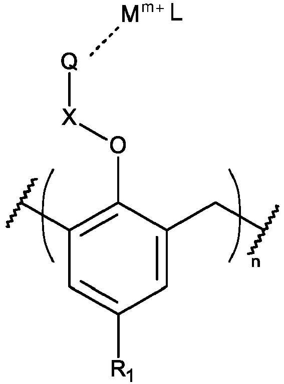 dans laquelle :
n, X, L, M^{m+} et R₁ sont tels que définis précédemment,
dans laquelle Q est choisi dans le groupe constitué des ligands salen, en particulier des ligands salen énantiopurs, notamment dérivés de la cyclohexyldiamine et de la diphényléthylènediamine, et des dérivés des susdits ligands salen
comprenant une étape de mise en contact d'un composé de formule (IA) : 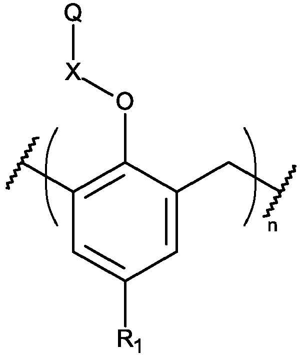
dans laquelle Q est choisi dans le groupe constitué des ligands salen, en particulier des ligands salen énantiopurs, notamment dérivés de la cyclohexyldiamine et de la diphényléthylènediamine, et des dérivés des susdits ligands salen,
avec un complexe métallique de formule LM^{m+} où M^{m+} représente un métal à l'état d'oxydation m, m étant 0, 1, 2, 3, 4 ou 5, notamment 0, 1, 2 ou 3, et L est constitué d'un ou plusieurs ligands neutres ou chargés négativement liés au métal, éventuellement en présence d'une base, en particulier avec de l'acétate de cobalt et de l'acide paratoluènesulfonique.

Dans un mode de réalisation, la présente invention concerne un procédé de préparation d'un composé de formule (IC) tel que défini précédemment : 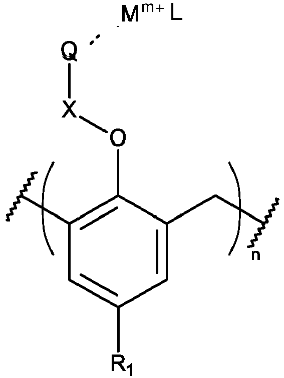 dans laquelle :
n, X, L, M^{m+} et R₁ sont tels que définis précédemment,
et Q est choisi dans le groupe constitué des ligands salen, en particulier des ligands salen énantiopurs, notamment dérivés de la cyclohexyldiamine et de la diphényléthylènediamine, et
des dérivés des susdits ligands salen,
comprenant une étape de mise en contact d'un composé de formule (II) : 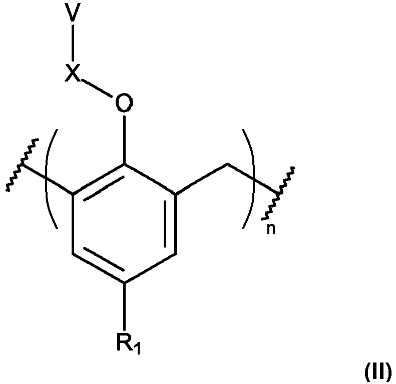 dans laquelle :
   n, X, R₁ sont tels que définis précédemment,
   V représente un groupe partant, choisi dans le groupe constitué des halogènes tels que CI, Br et I et des sulfonates tels que OSO₂Me, OSO₂(C₇H₇) et OSO₂CF₃, avec un précurseur d'un groupe de greffage du groupement Q', qui est l'azoture de sodium,
   Q' représentant le 3-(tert-butyl)-5-triazole-2-hydroxybenzaldehyde,
   pour obtenir un composé de formule (VIII) 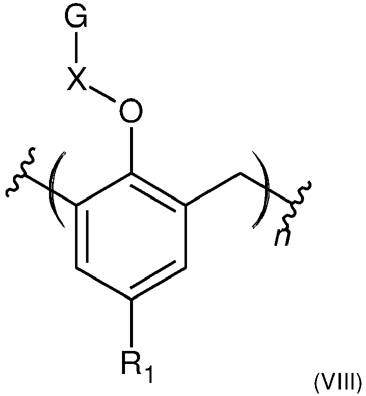 dans laquelle :
      n, X, R₁ sont tels que définis précédemment,
      G représente un groupe N₃, puis comprenant une étape de mise en contact dudit composé de formule (VIII) avec Q', pour obtenir un composé de formule (IB), 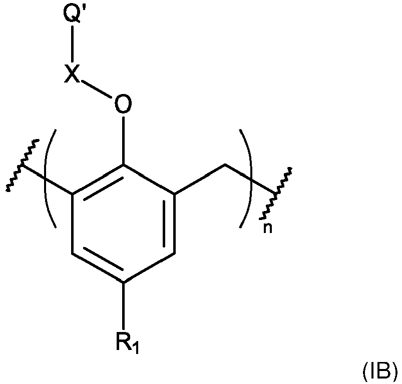 dans laquelle :
         n, X, R₁ et Q' sont tels que définis précédemment,
         puis comprenant une étape de mise en contact dudit composé de formule (IB), avec un autre groupement précurseur du ligand salen, qui est le composé de formule (VII), 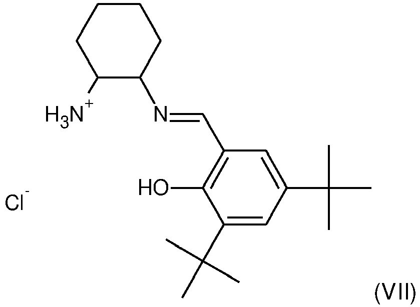 pour obtenir un composé de formule (IA), 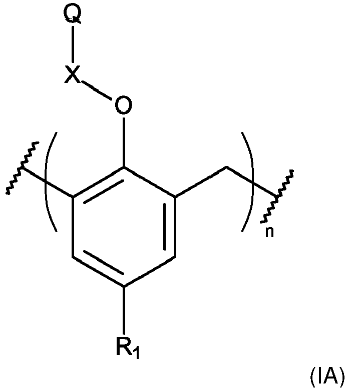 dans laquelle :
            n, X, R₁ et Q sont tels que définis précédemment,
            puis comprenant une étape de mise en contact dudit composé de formule (IA),
            avec un complexe métallique de formule LM^{m+} où M^{m+} représente un métal à l'état d'oxydation m, m étant 0, 1, 2, 3, 4 ou 5, notamment 0, 1, 2 ou 3 et L est constitué d'un ou plusieurs ligands neutres ou chargés négativement liés au métal, éventuellement en présence d'une base, en particulier avec de l'acétate de cobalt et de l'acide paratoluènesulfonique,
            pour obtenir ledit composé de formule (IC).

Le présent texe décrit et enseigne, les composés suivants :

| **n** | **R₁** | **X** | **Q** | **Q'** |
|---|---|---|---|---|
| 8 | OCH₂Ph | -(CH₂)₃- | Phosphine | - |
| 8 | OCH₂Ph | -(CH₂)₄- | Phosphine | - |
| 8 | OCH₂Ph | -(CH₂)₅- | Phosphine | - |
| 8 | OCH₂Ph | -(CH₂)₆- | Phosphine | - |
| 8 | OCH₂Ph | -(CH₂)₇- | Phosphine | - |
| 8 | OCH₂Ph | -(CH₂)₈- | Phosphine | - |
| 8 | OCH₂Ph | -(CH₂)₃- | NHC | - |
| 8 | OCH₂Ph | -(CH₂)₄- | NHC | - |
| 8 | OCH₂Ph | -(CH₂)₅- | NHC | - |
| 8 | OCH₂Ph | -(CH₂)₆- | NHC | - |
| 8 | OCH₂Ph | -(CH₂)₇- | NHC | - |
| 8 | OCH₂Ph | -(CH₂)₈- | NHC | - |
| 8 | OCH₂Ph | -(CH₂)₃- | - | Azolium |
| 8 | OCH₂Ph | -(CH₂)₄- | - | Azolium |
| 8 | OCH₂Ph | -(CH₂)₅- | - | Azolium |
| 8 | OCH₂Ph | -(CH₂)₆- | - | Azolium |
| 8 | OCH₂Ph | -(CH₂)₇- | - | Azolium |
| 8 | OCH₂Ph | -(CH₂)₈- | - | Azolium |
| 8 | *t*-Bu | -(CH₂)₃- | Phosphine | |
| 8 | *t*-Bu | -(CH₂)₄- | Phosphine | |
| 8 | *t*-Bu | -(CH₂)₅- | Phosphine | |
| 8 | *t*-Bu | -(CH₂)₆- | Phosphine | |
| 8 | *t*-Bu | -(CH₂)₇- | Phosphine | |
| 8 | *t*-Bu | -(CH₂)₈- | Phosphine | |
| 8 | *t*-Bu | -(CH₂)₃- | NHC | |
| 8 | *t*-Bu | -(CH₂)₄- | NHC | |
| 8 | *t*-Bu | -(CH₂)₅- | NHC | |
| 8 | *t*-Bu | -(CH₂)₆- | NHC | |
| 8 | *t*-Bu | -(CH₂)₇- | NHC | |
| 8 | *t*-Bu | -(CH₂)₈- | NHC | |
| 8 | *t*-Bu | -(CH₂)₃- | - | Azolium |
| 8 | *t*-Bu | -(CH₂)₄- | - | Azolium |
| 8 | *t*-Bu | -(CH₂)₅- | - | Azolium |
| 8 | *t*-Bu | -(CH₂)₆- | - | Azolium |
| 8 | *t*-Bu | -(CH₂)₇- | - | Azolium |
| 8 | *t*-Bu | -(CH₂)₈- | - | Azolium |
| 8 | *n*-octyl | -(CH₂)₃- | Phosphine | - |
| 8 | *n*-octyl | -(CH₂)₄- | Phosphine | - |
| 8 | *n*-octyl | -(CH₂)₅- | Phosphine | - |
| 8 | *n*-octyl | -(CH₂)₆- | Phosphine | - |
| 8 | *n*-octyl | -(CH₂)₇- | Phosphine | - |
| 8 | *n*-octyl | -(CH₂)₈- | Phosphine | - |
| 8 | *n*-octyl | -(CH₂)₃- | NHC | - |
| 8 | *n*-octyl | -(CH₂)₄- | NHC | - |
| 8 | *n*-octyl | -(CH₂)₅- | NHC | - |
| 8 | *n*-octyl | -(CH₂)₆- | NHC | - |
| 8 | *n*-octyl | -(CH₂)₇- | NHC | - |
| 8 | *n*-octyl | -(CH₂)₈- | NHC | - |
| 8 | *n*-octyl | -(CH₂)₃- | - | Azolium |
| 8 | *n*-octyl | -(CH₂)₄- | - | Azolium |
| 8 | *n*-octyl | -(CH₂)₅- | - | Azolium |
| 8 | *n*-octyl | -(CH₂)₆- | - | Azolium |
| 8 | *n*-octyl | -(CH₂)₇- | - | Azolium |
| 8 | *n*-octyl | -(CH₂)₈- | - | Azolium |
| 16 | OCH₂Ph | -(CH₂)₃- | Phosphine | - |
| 16 | OCH₂Ph | -(CH₂)₄- | Phosphine | - |
| 16 | OCH₂Ph | -(CH₂)₅- | Phosphine | - |
| 16 | OCH₂Ph | -(CH₂)₆- | Phosphine | - |
| 16 | OCH₂Ph | -(CH₂)₇- | Phosphine | - |
| 16 | OCH₂Ph | -(CH₂)₈- | Phosphine | - |
| 16 | OCH₂Ph | -(CH₂)₃- | NHC | - |
| 16 | OCH₂Ph | -(CH₂)₄- | NHC | - |
| 16 | OCH₂Ph | -(CH₂)₅- | NHC | - |
| 16 | OCH₂Ph | -(CH₂)₆- | NHC | - |
| 16 | OCH₂Ph | -(CH₂)₇- | NHC | - |
| 16 | OCH₂Ph | -(CH₂)₈- | NHC | - |
| 16 | OCH₂Ph | -(CH₂)₃- | - | Azolium |
| 16 | OCH₂Ph | -(CH₂)₄- | - | Azolium |
| 16 | OCH₂Ph | -(CH₂)₅- | - | Azolium |
| 16 | OCH₂Ph | -(CH₂)₆- | - | Azolium |
| 16 | OCH₂Ph | -(CH₂)₇- | - | Azolium |
| 16 | OCH₂Ph | -(CH₂)₈- | - | Azolium |
| 16 | *t*-Bu | -(CH₂)₃- | Phosphine | |
| 16 | *t*-Bu | -(CH₂)₄- | Phosphine | |
| 16 | *t*-Bu | -(CH₂)₅- | Phosphine | |
| 16 | *t*-Bu | -(CH₂)₆- | Phosphine | |
| 16 | *t*-Bu | -(CH₂)₇- | Phosphine | |
| 16 | *t*-Bu | -(CH₂)₈- | Phosphine | |
| 16 | *t*-Bu | -(CH₂)₃- | NHC | |
| 16 | *t*-Bu | -(CH₂)₄- | NHC | |
| 16 | *t*-Bu | -(CH₂)₅- | NHC | |
| 16 | *t*-Bu | -(CH₂)₆- | NHC | |
| 16 | *t*-Bu | -(CH₂)₇- | NHC | |
| 16 | *t*-Bu | -(CH₂)₈- | NHC | |
| 16 | *t*-Bu | -(CH₂)₃- | - | Azolium |
| 16 | *t*-Bu | -(CH₂)₄- | - | Azolium |
| 16 | *t*-Bu | -(CH₂)₅- | - | Azolium |
| 16 | *t*-Bu | -(CH₂)₆- | - | Azolium |
| 16 | *t*-Bu | -(CH₂)₇- | - | Azolium |
| 16 | *t*-Bu | -(CH₂)₈- | - | Azolium |
| 16 | *n-*octyl | -(CH₂)₃- | Phosphine | - |
| 16 | *n*-octyl | -(CH₂)₄- | Phosphine | - |
| 16 | *n*-octyl | -(CH₂)₅- | Phosphine | - |
| 16 | *n*-octyl | -(CH₂)₆- | Phosphine | - |
| 16 | *n*-octyl | -(CH₂)₇- | Phosphine | - |
| 16 | *n*-octyl | -(CH₂)₈- | Phosphine | - |
| 16 | *n*-octyl | -(CH₂)₃- | NHC | - |
| 16 | *n*-octyl | -(CH₂)₄- | NHC | - |
| 16 | *n*-octyl | -(CH₂)₅- | NHC | - |
| 16 | *n*-octyl | -(CH₂)₆- | NHC | - |
| 16 | *n*-octyl | -(CH₂)₇- | NHC | - |
| 16 | *n*-octyl | -(CH₂)₈- | NHC | - |
| 16 | *n*-octyl | -(CH₂)₃- | - | Azolium |
| 16 | *n*-octyl | -(CH₂)₄- | - | Azolium |
| 16 | *n*-octyl | -(CH₂)₅- | - | Azolium |
| 16 | *n*-octyl | -(CH₂)₆- | - | Azolium |
| 16 | *n*-octyl | -(CH₂)₇- | - | Azolium |
| 16 | *n*-octyl | -(CH₂)₈- | - | Azolium |
| 35 | OCH₂Ph | -(CH₂)₃- | Phosphine | - |
| 35 | OCH₂Ph | -(CH₂)₄- | Phosphine | - |
| 35 | OCH₂Ph | -(CH₂)₅- | Phosphine | - |
| 35 | OCH₂Ph | -(CH₂)₆- | Phosphine | - |
| 35 | OCH₂Ph | -(CH₂)₇- | Phosphine | - |
| 35 | OCH₂Ph | -(CH₂)₈- | Phosphine | - |
| 35 | OCH₂Ph | -(CH₂)₃- | NHC | - |
| 35 | OCH₂Ph | -(CH₂)₄- | NHC | - |
| 35 | OCH₂Ph | -(CH₂)₅- | NHC | - |
| 35 | OCH₂Ph | -(CH₂)₆- | NHC | - |
| 35 | OCH₂Ph | -(CH₂)₇- | NHC | - |
| 35 | OCH₂Ph | -(CH₂)₈- | NHC | - |
| 35 | OCH₂Ph | -(CH₂)₃- | - | Azolium |
| 35 | OCH₂Ph | -(CH₂)₄- | - | Azolium |
| 35 | OCH₂Ph | -(CH₂)₅- | - | Azolium |
| 35 | OCH₂Ph | -(CH₂)₆- | - | Azolium |
| 35 | OCH₂Ph | -(CH₂)₇- | - | Azolium |
| 35 | OCH₂Ph | -(CH₂)₈- | - | Azolium |
| 35 | *t*-Bu | -(CH₂)₃- | Phosphine | |
| 35 | *t*-Bu | -(CH₂)₄- | Phosphine | |
| 35 | *t*-Bu | -(CH₂)₅- | Phosphine | |
| 35 | *t*-Bu | -(CH₂)₆- | Phosphine | |
| 35 | *t*-Bu | -(CH₂)₇- | Phosphine | |
| 35 | *t*-Bu | -(CH₂)₈- | Phosphine | |
| 35 | *t*-Bu | -(CH₂)₃- | NHC | |
| 35 | *t*-Bu | -(CH₂)₄- | NHC | |
| 35 | *t*-Bu | -(CH₂)₅- | NHC | |
| 35 | *t*-Bu | -(CH₂)₆- | NHC | |
| 35 | *t*-Bu | -(CH₂)₇- | NHC | |
| 35 | *t*-Bu | -(CH₂)₈- | NHC | |
| 35 | *t*-Bu | -(CH₂)₃- | - | Azolium |
| 35 | *t*-Bu | -(CH₂)₄- | - | Azolium |
| 35 | *t*-Bu | -(CH₂)₅- | - | Azolium |
| 35 | *t*-Bu | -(CH₂)₆- | - | Azolium |
| 35 | *t*-Bu | -(CH₂)₇- | - | Azolium |
| 35 | *t*-Bu | -(CH₂)₈- | - | Azolium |
| 35 | *n*-octyl | -(CH₂)₃- | Phosphine | - |
| 35 | *n*-octyl | -(CH₂)₄- | Phosphine | - |
| 35 | *n*-octyl | -(CH₂)₅- | Phosphine | - |
| 35 | *n*-octyl | -(CH₂)₆- | Phosphine | - |
| 35 | *n*-octyl | -(CH₂)₇- | Phosphine | - |
| 35 | *n*-octyl | -(CH₂)₈- | Phosphine | - |
| 35 | *n*-octyl | -(CH₂)₃- | NHC | - |
| 35 | *n*-octyl | -(CH₂)₄- | NHC | - |
| 35 | *n*-octyl | -(CH₂)₅- | NHC | - |
| 35 | *n*-octyl | -(CH₂)₆- | NHC | - |
| 35 | *n*-octyl | -(CH₂)₇- | NHC | - |
| 35 | *n*-octyl | -(CH₂)₈- | NHC | - |
| 35 | *n*-octyl | -(CH₂)₃- | - | Azolium |
| 35 | *n*-octyl | -(CH₂)₄- | - | Azolium |
| 35 | *n*-octyl | -(CH₂)₅- | - | Azolium |
| 35 | *n*-octyl | -(CH₂)₆- | - | Azolium |
| 35 | *n*-octyl | -(CH₂)₇- | - | Azolium |
| 35 | *n*-octyl | -(CH₂)₈- | - | Azolium |
| 8 | OCH₂Ph | -(CH₂)₄- | Ligand salen | |
| 8 | OCH₂Ph | -(CH₂)₄- | | Salicylaldéhyde |

### EXEMPLES

Les trois schémas ci-dessous illustrent la synthèse des catalyseurs, selon la présente invention, contenant un carbène N-hétérocyclique ou une phosphine :

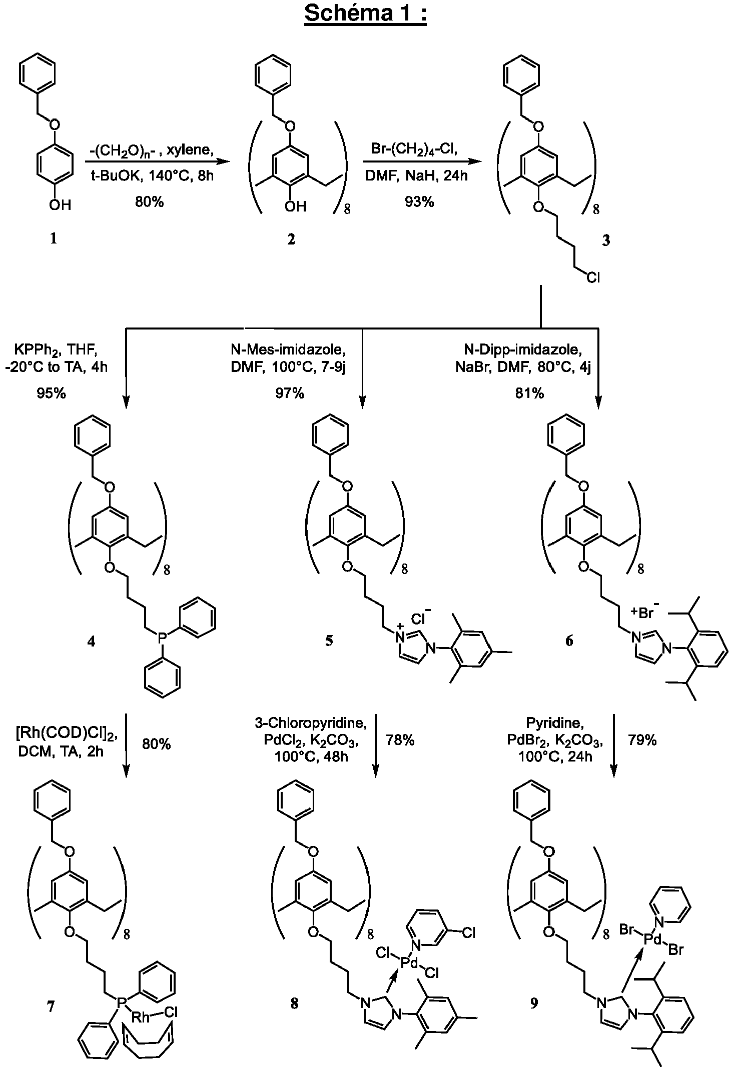

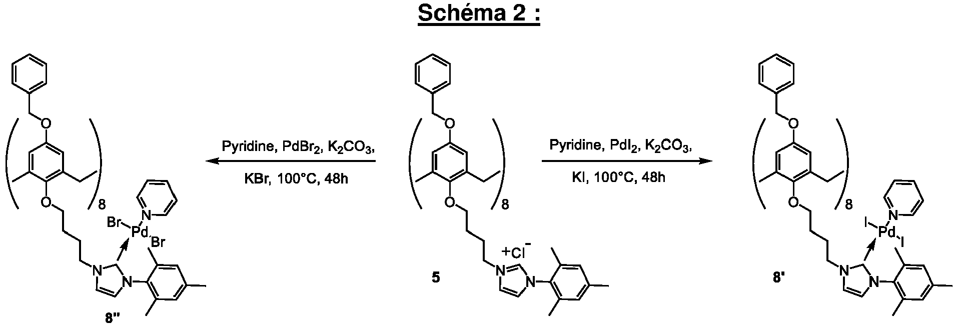

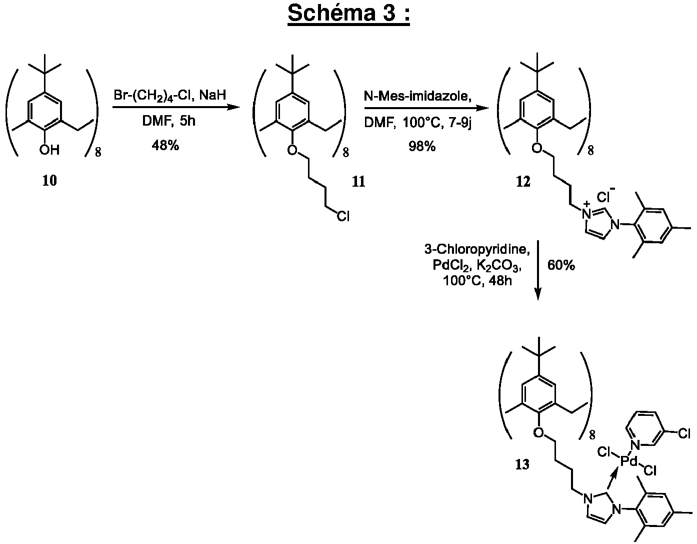

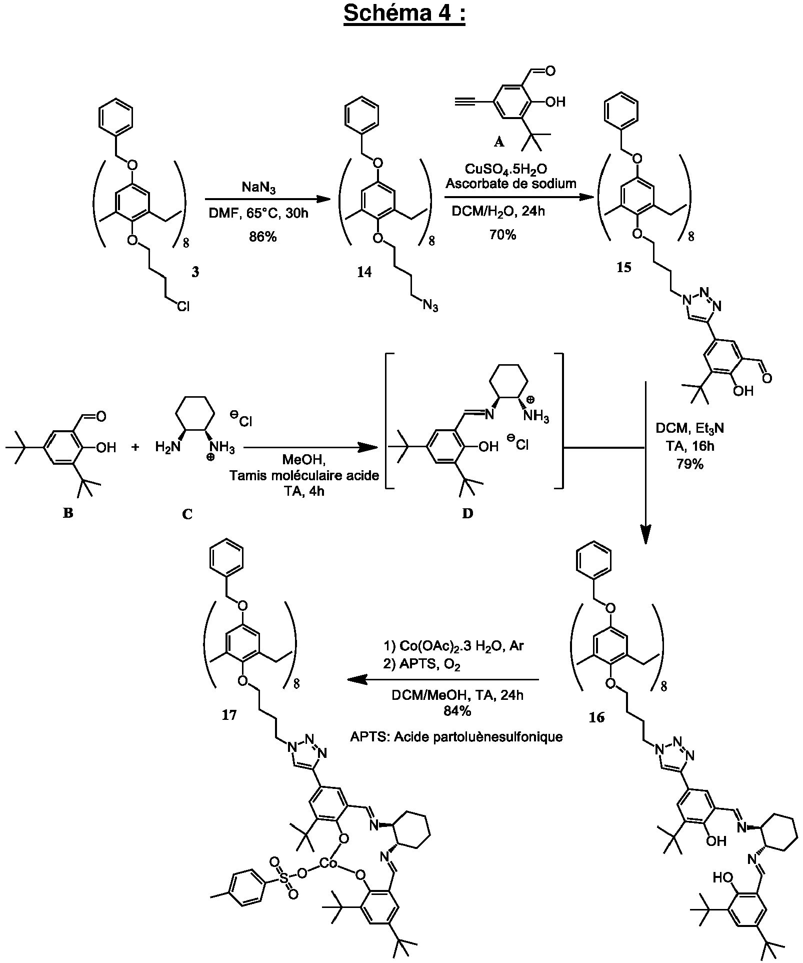

### Exemple 1 : Préparation des précurseurs chlorés (A titre d'enseignement)

### Préparation du calixarène 2 :

On charge le benzyloxyphénol **1** (200g, 1mol), le paraformaldéhyde (78.7 g) puis le xylène (2L), on place le milieu sous argon. On charge le *t*-BuOK (7,39g, 65,9mmol) et on réalise des cycles vide-argon. On porte 8h à reflux sous très forte agitation, en collectant l'eau formée avec un Dean-Stark. On laisse refroidir à température ambiante et on évapore le xylène à pression réduite. On chauffe le résidu solide à 45°C dans 3L de THF sous forte agitation. On filtre et on rince avec 500mL de THF. Le gâteau est dispersé sous forte agitation dans 2.5L de THF à 45°C pendant 30min. On évapore 1L de THF puis on additionne une solution THF / HCl (33%) (200 / 50mL). On agite le milieu 30min à température ambiante, on filtre et on rince avec 250mL de THF. On laisse sécher une nuit à l'air puis quelques heures à la pompe à palettes après broyage. On obtient 169,5g de produit très pur (rendement : 80%). ¹H NMR (DMSO-d6, ppm) : 8,67 (s, 8H), 7,30 (m, 40H), 6,58 (s, 16H), 4,80 (s, 16H) ; 3,77 (s, 16H). m/z (MALDI, matrice DHB): 1719,62 [M+Na⁺] (calc=1697,67).

### Préparation du calixarène 3 :

On broie et on charge le benzyloxycalix[8]arène **2** (60g, 35,3mmol), puis on charge le 1 -bromo-4-chlorobutane (520mL, 3mol) et le DMF (90mL) sous argon. On chauffe à 40°C, on coupe l'agitation, on introduit 1/3 de l'hydrure de sodium (22,6g, 5,65.10⁻¹mol), on place le milieu sous argon et on démarre progressivement l'agitation du milieu. On introduit l'hydrure de sodium restant en deux fractions, en espaçant chaque ajout d'un intervalle de 1h30. On laisse réagir à 30°C jusqu'au lendemain matin. On ajoute 350 mL de dichlorométhane, on filtre sur célite, on rince avec 200mL de dichlorométhane, on évapore les solvants à 60°C à pression réduite. On ajoute 2L de méthanol et on disperse le solide sous forte agitation pendant 24h. On filtre, on sèche le gâteau quelques heures à l'air puis à la pompe à palettes. On ajoute 2L d'éthanol et on disperse le solide sous forte agitation pendant 24h. On filtre, on sèche le gâteau quelques heures à l'air puis à la pompe à palettes. On obtient 80g d'un solide blanc pur (rendement=93%). ¹H NMR (DMSO-d6, ppm) : 7,15 (m, 40H), 6,51 (s, 16H), 4,69 (s, 16H), 3,89 (s, 16H), 3,56 (m, 16H), 3,47 (t, 16H, ³J(H,H)=6,4Hz), 1,75 (m, 16H), 1,65 (m, 16H). ¹³C NMR (DMSO-d6, ppm) : 155,17, 149,83, 138,08, 135,67, 129,34, 128,74, 128,64, 115,75, 73,38, 70,26, 46,29, 30,91, 30,20, 28,35. m/z (ESI, DCM-isopropanol, positive mode) : 2439,85 [M+Na⁺].

### Exemple 2 : Préparation de ligands phosphores (A titre d'enseignement)

### Ligand phoshoré 4 :

On introduit le calixarène **3** (10g, 4,13mmol) dans un réacteur, on le sèche sous vide pendant 30 min, puis on ajoute du THF (17mL) sous argon. On refroidit la solution à -20°C et on ajoute lentement une solution de KPPh₂ (70,2mL, 0,5M dans le THF, 35,1mmol). On agite la solution à température ambiante pendant 4h puis on ajoute du DCM (20 mL), on filtre sur célite et on rince au DCM. On évapore à sec le filtrat, on triture le résidu avec de l'éther diéthylique et on filtre. On triture le gâteau avec du pentane et on filtre. On sèche sous vide et on obtient 14,2g d'un produit jaune pâle (rendement : 95%). ¹H NMR (CDCl₃, ppm) : 7,39-7,33 (m, 40H), 7,26-7,23 (m, 40H), 7,00 (s, 30H), 6,45 (s, 16H), 4,43 (s, 16H), 3,88 (s, 16H), 3,60 (m, 16H), 2,09-1,97 (m, 16H), 1,78 (m, 16H), 1,57 (m, 16H). ³¹P NMR (CDCl₃, ppm) : - 16,33 (s).

### Exemple 3 : Préparation des sels d'imidazolium (précurseurs des ligands carbène N-hétérocyclique) (A titre d'enseignement)

### Ligand IMes.HCl 5 :

On introduit le calixarène **3** (10,1g, 4,2mmol) et le mésitylimidazole (25g, 134,2mmol), on place le réacteur sous atmosphère d'argon, puis on introduit le DMF anhydre (200mL). On réalise 3 cycles de vide / argon et on chauffe 7 à 9 jours à 100°C sous agitation (suivi de la réaction par RMN). On évapore le DMF, on solubilise le produit dans le DCM (200mL) et on précipite à l'éther (300mL). Le solide marron obtenu est lavé à l'éther diéthylique (300mL), trituré dans l'éther diéthylique (100mL) et filtré. On obtient 15,5g d'un solide marron (rendement = 97 %). ¹H NMR (DMSO-d6, ppm) : 10,04 (s, 8H), 8,21 (s, 8H), 7,95 (s, 16H), 7,06 (s, 56H), 6,48 (s, 16H), 4,61 (s, 16H), 4,39 (s, 16H), 3,89 (s, 16H), 3,71 (s, 16H), 2,89 (s, 32H), 2,73 (s, 32H), 2,28 (s, 24H), 2,03 (s, 16H), 1,66 (s, 48H), 1,65 (s, 16H). m/z (ESI, positive mode) : 942,49 [M+4Na⁺]/4 (calc=942,50), 1268,31 [M+3Na⁺]/3 (calc=1268,48), 1920,45 [M+2Na⁺]/2 (calc=1920,45).

### Ligand IPr.HBr 6 :

On introduit le calixarène **3** (3g, 1,24mmol), le diisopropylimidazole (4,24g, 18,57mmol) et le bromure de sodium (12,65g, 124mmol) dans un réacteur, on le place sous atmosphère d'argon et on introduit 30mL de DMF anhydre. On procède à trois cycles vide / argon et on chauffe à 80°C pendant 4j. On introduit du dichlorométhane (20mL) et on filtre sur célite. La solution est évaporée à sec puis le solide blanc obtenu est solubilisé dans un minimum de dichlorométhane. On précipite le produit avec du diéthyléther (80mL), on filtre, on rince à l'éther et on sèche le gâteau sous vide. On obtient 4,62g de produit blanc (rendement : 81%). ¹H NMR (DMSO-d6, ppm) : 9,87 (s, 8H), 8,21 (s, 8H), 8,12 (s, 8H), 7,61 (t, 8H), 7,42 (d, 16H), 7,02 (s, 40H), 6,52 (s, 16H), 4,56 (s, 16H), 4,42 (s, 16H), 3,79-3,87 (m, 32H), 2,19 (quintuplet, 16H), 2,07 (s, 16H), 1,71 (s, 16H), 1,08 (s, 96H). m/z (ESI, positive mode) : 1071,29 [M-3Br]³⁺/3 (calc=1071,03), 1455,03 [M-3Br]³⁺/3 (calc=1454,68).

### Exemple 4 : Préparation de ligands salen (A titre d'enseignement)

### Intermédiaire 14 :

On introduit le calixarène **3** (10g, 4,13mmol) et l'azoture de sodium NaN₃ (6,8g, 103mmol) dans un réacteur, on le sèche sous vide pendant 30 min, puis on ajoute du DMF anhydre (50mL) sous argon, et finalement on inerte par trois cycles vide/argon. On agite la solution à 65°C pendant 30h puis on laisse refroidir à température ambiante. On ajoute une solution saturée de NaCl pour précipiter le produit puis on filtre. Le solide blanc obtenu est lavé plusieurs fois à l'eau, au méthanol et enfin au pentane. On sèche sous vide et on obtient 8,8g d'une poudre blanche (rendement : 86%). ¹H NMR (CDCl₃, ppm) : 7,17 (s, 40 H), 6,55 (s, 16 H), 4,67 (s, 16 H), 3,95 (s, 16 H), 3,62-3,65 (m, 16 H), 3,20-317 (m, 16 H), 1,69 (bs, 32 H). ¹³C NMR (CDCl₃, ppm) : 154,7 ; 148,9 ; 137,0 ; 134,8 ; 128,3 ; 127,7 ; 127,5 ; 114,9 ; 72,9 ; 69,7 ; 51,2 ; 30,2 ; 27,4 ; 25,8. m/z (ESI, positive mode) : 2496,1626 [M+Na⁺] (calc=2496,1710).

### Intermédiaire 15 :

On introduit le calixarène **14** (1,21g, 0,49mmol) et l'alcyne **A** (0,894g, 4,42mmol) dans un réacteur sous atmosphère d'argon, puis le dichlorométhane (15mL). Une solution aqueuse (15mL) de sulfate de cuivre penta-hydraté CuSO₄.5H₂O (0,11g, 0,442mmol) et d'ascorbate de sodium (0,167g, 0,88mmol) est ajoutée dans le réacteur. La solution biphasique est laissée sous agitation à température ambiante et sous atmosphère d'argon pendant 24h. Du dichlorométhane (20mL) est ajouté et la solution biphasique est lavée avec une solution saturée d'hydrogénocarbonate de sodium NaHCOs (35mL). La phase aqueuse est extraite 3 fois avec du dichlorométhane (30mL). La phase organique est séchée avec du sulfate de magnésium puis évaporée. Le solide obtenu est solubilisé dans un minimum de dichlorométhane, précipité à l'éther, filtré puis séché sous vide. On obtient 1,5g d'un solide jaune (rendement = 75%). ¹H NMR (DMSO-D₆, ppm) : 11,74 (s, 8 H), 9,85 (s, 8 H), 8,37 (s, 8 H), 7,86 (s, 8H), 7,89 (s, 8 H), 7,02 (s, 40 H), 6,45 (s, 16 H), 4,58 (bs, 16 H), 4,27 (bs, 16 H), 3,85 (bs, 16 H), 3,55 (bs, 16 H), 1,91 (bs, 16 H), 1,55 (bs, 16 H), 1,30 (s, 72 H). ¹³C NMR (DMSO-D₆, ppm) : 197,2 ; 158,4 ; 152,9 ; 147,5 ; 144,4 ; 136,7 ; 135,7 ; 133,5 ; 129,5 ; 127,4 ; 127,0 ; 126,4 ; 126,3 ; 121,3 ; 119,6 ; 119,5 ; 113,5 ; 71,3 ; 68,0 ; 48,3 ; 33,4 ; 27,8 ; 27,7 ; 25,6 ; 25, 5. m/z (MALDI, matrice DCTB) : 4223,01 [M+Cs⁺] (calc=4222,88). Analyse élémentaire : C=72,7% (calc=72,3%), H=6,5% (calc=6,6%), N=8,2% (calc=7,7%), O=12,5% (calc=11,5%).

### Ligand 16 :

Dans un réacteur sous argon, on introduit le monochlorure d'ammonium de la cyclohexanediamine **C** (0,366g, 2,43mmol), le 3,5-di-tert-butyl-2-hydroxybenzaldehyde **B** (0,569g, 2,43mmol) et un tamis moléculaire 3A (1g), puis du méthanol anhydre (20mL). La réaction est laissée sous agitation à température ambiante pendant 4h puis une solution de calixarène **15** (1,1g, 0,27mmol) dans du dichlorométhane anhydre (30mL) est ajoutée sous argon. Ensuite, la triéthylamine (0,965mL, 7,02mmol) est ajoutée sous argon, et le mélange est laissé sous agitation pendant 16h à température ambiante. La solution est filtrée sur célite, puis évaporée et le solide obtenu est lavé au méthanol et à l'éthanol. Le solide jaune est solubilisé dans un minimum de diéthyl éther et précipité à l'éthanol. Le solide est filtré puis séché sous vide. On obtient 1,4g d'un solide jaune (rendement : 79%). ¹H NMR (CDCl₃, ppm) : 14,12 (s, 8 H), 13,58 (s, 8 H), 8,28 (s, 8 H), 8,19 (s, 8 H), 7,68 (s, 8 H), 7,61 (s, 8 H), 7,43 (s, 8 H), 7,03-6,95 (m, 40 H), 6,46 (s, 16 H), 4,55 (bs, 16 H), 4,13 (bs, 16 H), 3,86 (bs, 16 H), 3,54 (bs, 16 H), 3,24 (bs, 16 H), 1,79-1,88 (m, 48H), 1,79 (m, 48 H, 1,38 (s, 72 H), 1,36 (s, 72 H), 1,20 (s, 72 H). ¹³C NMR (CDCl₃, ppm) : 166,0 ; 165,3 ; 160,7 ; 158,0 ; 154,9 ; 149,0 ; 147,6 ; 140,1 ; 137,9 ; 136,9 ; 136,5 ; 134,9 ; 128,4 ; 127,8 ; 127,6 ; 127,1 ; 127,0 ; 126,1 ; 120,7 ; 119,0 ; 118,8 ; 117,9 ; 115,2 ; 72,9 ; 72,6 ; 71,9 ; 69,9 ; 50,1 ; 35,1 ; 35,0 ; 34,13 ; 33,2 ; 33,1 ; 31,5 ; 30,3 ; 29,5 ; 29,4 ; 27,3 ; 24,3. m/z (MALDI, matrice DCTB): 6724 [M+Cs+] (calc=6721). Analyse élémentaire : C=75,7% (calc=74,5%), H=7,9% (calc=7,9%), N=8,3% (calc=8,5%), O=7,9% (calc=7,7%). [a]_{D}²⁰ _ + 105,34 (c = 0,002 M dans le CHCl₃).

### Exemple 5 : Préparation des catalyseurs

### Préparation du catalyseur au rhodium 7 :

On introduit dans un réacteur le calixarène **3** (3,28g, 0,9mmol) et le chloro(1,5-cyclooctadiene)rhodium(I) dimer (1,87g, 3,8mmol), on sèche sous vide. On ajoute sous argon 30mL de dichlorométhane anhydre et on place le milieu réactionnel 2h à température ambiante. On filtre la solution sur papier filtre, on évapore le dichlorométhane, on dissout dans un minimum de dichlorométhane et on précipite avec de l'éther diéthylique. On obtient 4,05g d'une poudre jaune-orange (rendement : 80%). ¹H NMR (CD₂Cl₂, ppm) : 7,64 (m, 4H), 7,32 (m, 48H), 7,01 (s, 40), 6,56 (s, 16H), 5,41 (s, 16H), 4,48 (s, 16H), 3,97 (s, 16H), 3,79 (s, 16H), 3,05 (s, 16H), 1,66-2,5 (m, 14H). 31P NMR (CD₂Cl₂, ppm) : 26,26 (d, *J*_{P-Rh} = 148,9 Hz). Analyse élémentaire : C=62,38% (calc=62,36%), H=5,47% (calc=5,71%).

### Préparation du catalyseur au palladium 8 :

On introduit dans un réacteur le calixarène **5** (3g, 0,79 mmol), le carbonate de potassium (3g, 21,7mmol, séché à chaud sous vide pendant 30min) et le chlorure de palladium (1,5g, 8,5mmol). On sèche 30min sous vide puis on introduit sous argon 25mL de 3-chloropyridine. On réalise 3 cycles vide / argon, puis on chauffe sous agitation à 100°C pendant 48h. On dilue la solution avec 60mL de dichlorométhane puis on centrifuge, on sépare les sous-produits solides par filtration, on évapore le dichlorométhane et une partie de la chloropyridine, puis on précipite le complexe avec de l'éther diéthylique. On obtient un solide blanc-marron que l'on filtre et que l'on lave avec de l'éther diéthylique. On obtient après séchage sous vide 3,61g de produit (rendement : 78%). ¹H NMR (DMSO, ppm) : 8,63 (s, 8H), 8,56 (d, 8H), 7,97 (d, 8H), 7,49 (s, 8H), 7,33 (s, 16H), 7,25 (s, 8H), 7,01 (s, 8H), 6,97 (s, 40H). Analyse élémentaire : C=55,2% (calc=56,5%), H=4,6% (calc=4,6%), N=5,6% (calc=5,7%).

### Préparation du catalyseur au palladium 8' :

On introduit dans un réacteur le calixarène 5 (0,5g, 0,13mmol), le carbonate de potassium (0,72g, 5,2mmol, séché à chaud sous vide pendant 30min), l'iodure de potassium (0,863g, 5,2mmol, séché à chaud sous vide pendant 30min) et l'iodure de palladium (0,443g, 1 ,23mmol). On sèche 30min sous vide puis on introduit sous argon 5mL de pyridine. On réalise 3 cycles vide / argon, puis on chauffe sous agitation à 100°C pendant 48h. On dilue la solution avec 20mL de dichlorométhane puis on centrifuge, on sépare les sous-produits solides par filtration et on évapore le dichlorométhane et la pyridine. On dissout dans un minimum de dichlorométhane, on précipite le complexe avec de l'éther diéthylique, on filtre et on rince avec de l'éther diéthylique. On obtient, après séchage sous vide, 0,655g d'un solide jaune (rendement : 71%). ¹H NMR (DMSO-d₆, ppm) : 8,46 (d, J = 4,3 Hz, 16H), 7,72 (m, 8H), 7,47 (s, 8H), 7,27 (s, 8H), 7,20-7,23 (m, 24H), 6,97-7,03 (m, 56H), (s, 40H), 6,54 (bs, 16H), 4,57 (bs, 32H), 3,98 (bs, 16H), 3,86 (bs, 16H), 2,28 (s, 24H), 2,19 (s, 48H), 1,79 (s, 16H). Analyse élémentaire : C=46,89% (calc=47,13%), H=4,03% (calc=4,18%), N=4,63% (calc=4,71%).

### Préparation du catalyseur au palladium 8" :

On introduit dans un réacteur le calixarène **5** (0,5 g, 0,13 mmol), carbonate de potassium (0,72g, 5,2mmol, séché à chaud sous vide pendant 30min), bromure de potassium (0,619g, 5,2mmol, séché à chaud sous vide pendant 30min) et le bromure de palladium (0,33g, 1 ,23mmol). On sèche 30min sous vide puis on introduit sous argon 5mL de pyridine. On réalise 3 cycles vide / argon, puis on chauffe sous agitation à 100°C pendant 48h. On dilue la solution avec 20mL de dichlorométhane puis on centrifuge, on sépare les sous-produits solides par filtration et on évapore le dichlorométhane et la pyridine. On dissout dans un minimum de DCM, on précipite le complexe avec de l'éther diéthylique, on filtre et on rince avec l'éther diéthylique. On obtient après séchage sous vide 0,431g d'un solide jaune (rendement : 52%). ¹H NMR (DMSO-d6, ppm) : 8,51 (s, 16H), 7,77 (s, 8H), 6,98-7,24 (m, 88H), 6,53 (s, 16H), 4,63 (bs, 32H), 3,92 (bs, 32H), 2,28 (s, 24H), 2,13 (s, 48H), 1,91 (s, 16H).

### Préparation du catalyseur au palladium 9 :

On introduit dans un réacteur le calixarène **6** (0,3g, 6,5.10⁻² mmol), le carbonate de potassium (0,36g, 2,6mmol, séché à chaud sous vide pendant 30min) et le bromure de palladium (0,15g, 0,55mmol). On sèche 30min sous vide puis on introduit sous argon 3mL de pyridine. On réalise 3 cycles vide / argon, puis on chauffe sous agitation à 100°C pendant 24h. On dilue la solution avec 20mL de dichlorométhane puis on centrifuge, on sépare les sous-produits solides par filtration et on évapore le dichlorométhane et la pyridine. On dissout dans un minimum de DCM, on précipite le complexe avec de l'éther diéthylique, on filtre et on rince avec l'éther diéthylique. On obtient après séchage sous vide 0,35g d'un solide jaune (rendement : 79%). ¹H NMR (DMSO-d6, ppm) : 8,51 (s, 32H), 7,76 (s, 8H), 7,47 (s, 24H), 7,28-7,32 (m, 40H), 7,04 (s, 40H), 6,54 (s, 16H), 4,57-4,66 (m, 32H), 3,93 (s, 32H), 2,83 (s, 16H), 2,34 (s, 16H), 1,84 (s, 16H), 1,24 (s, 48H), 0,91 (s, 48H). Analyse élémentaire : C=54,46% (calc=54,27%), H=4,78% (calc=5,00%), N=5,19% (calc=5,27%).

### Préparation du catalyseur au palladium 13 :

On introduit dans un réacteur le carbonate de potassium (586mg, 4,24mmol) et on sèche sous vide le produit en chauffant. A température ambiante, on introduit le chlorure de palladium (261mg, 1,47mmol), le calixarène **12** (500mg, 0,14mmol) puis la 3-chloropyridine (3mL). On réalise 3 cycles de vide-argon et on chauffe 36h à 100°C. On dilue le milieu dans du dichlorométhane (10mL) puis on centrifuge et on filtre. On évapore les solvants et on dissout le produit dans un minimum de dichlorométhane. On précipite le produit avec un mélange éther diéthylique / pentane et on filtre. On obtient après séchage 469mg de produit (rendement 60%). ¹H NMR (DMSO-d6, ppm) : 8,65 (s, 8H), 8,57 (s, 8H), 8,01 (s, 8H), 7,54 (s, 8H), 7,40 (s, 8H), 7,31 (s, 8H), 6,97 (s, 16H), 6,91 (s, 16H), 4,68 (s, 16H), 4,00 (s, 16H), 3,80 (s, 16H), 2,28 (s, 40H), 2,08 (s, 48H), 1,81 (s, 16H), 0,96 (s, 72H). Analyse élémentaire : C=55,54% (calc=55,43%), H=5,70% (calc=5,52%), N=5,65% (calc=6,06%).

### Préparation du catalyseur au cobalt 17 :

Dans un réacteur sous argon, on introduit le calixarène **16** (0,5g, 0,075mmol) et du dichlorométhane (10mL) puis on agite jusqu'à solubilisation totale. Une solution de Co(OAc)₂.3H₂O (0,187g, 0,75mmol) dans le méthanol anhydre (6mL) est ajoutée à la solution de calixarène **16** sous argon. On laisse la réaction sous agitation pendant 4h à température ambiante. On refroidit le mélange à 0°C puis on ajoute de l'acide paratoluènesulfonique (0,143g, 0,75mmol) et 5mL supplémentaires de dichlorométhane. On place la réaction sous 1atm d'oxygène pur et on agite à température ambiante pendant 16h. La solution est évaporée et le solide est lavé au méthanol plusieurs fois puis séché sous vide. On obtient un solide vert 0,534g (rendement = 84%). ¹H NMR (DMSO-D₆, ppm) : 8,37 (s, 8 H) ; 8,03 (s, 8 H) ; 7,91 (s, 8 H) ; 7,81-7,83 (m, 16 H) ; 7,46-7,48 (m, 32 H) ; 7,03-7,08 (m, 56 H) ; 6,54 (bs, 16 H) ; 4,64 (bs, 16 H) ; 4,51 (bs, 16 H) ; 3,92 (bs, 8 H) ; 3,61 (s, 24 H) ; 3,05 (s, 16H) ; 2,25 (s, 24 H) ; 1,89-1,94 (m, 48 H), 1,73-1,74 (m, 144 H), 1,46-1,56 (m, 48 H), 1,30 (s, 72 H). ¹³C NMR (DMSO-D₆, ppm): 165,2 ; 164,7 ; 164,6 ; 162,2 ; 154,4 ; 147,0 ; 146,4 ; 143,4 ; 142,1 ; 137,9 ; 137,2 ; 136,5 ; 130,8 ; 129,7 ; 129,4 ; 129,0 ; 128,4 ; 127,8 ; 125,9 ; 119,7 ; 119,0 ; 117,6 ; 69,8 ; 69,4 ; 49,7 ; 49,0 ; 36,2 ; 36,1 ; 34,0 ; 31,9 ; 30,8 ; 30,6 ; 29,8 ; 27,2 ; 24,7 ; 21,1. Analyse élémentaire calculée pour le calixarène **17** + 5 CH₂Cl₂ : C=64,3% (calc=64,8%), H=6,5% (calc=6,5%), N=6,6% (calc=6,3%), S=2,3% (calc=2,9%). [a]_{D}²⁰ _ + 1020,4 (c = 8.10⁻⁵ M dans le DMF).

### Exemple 6 : Utilisation des catalyseurs au palladium pour la réaction de couplage de Suzuki

### Exemple 6.1 : Couplage entre le bromotoluène et l'acide phénylboronique

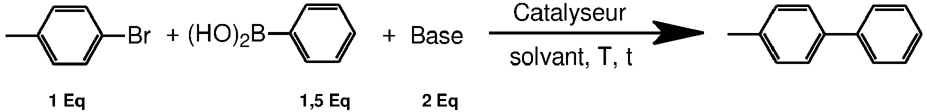

**Protocole standard** : On introduit dans un réacteur le catalyseur 8 (7,4mg, 1.10⁻⁵mol, 1mol%), l'acide phénylboronique (182,9mg, 1,5.10⁻³mol, 1 ,5eq) et le phosphate de potassium tribasique (424,5mg, 2.10⁻³mol, 2 eq). On sèche sous vide pendant 10 min puis on introduit le bromotoluène (171mg, 1.10⁻³mol, 1eq). On place le milieu sous atmosphère d'argon, on introduit l'éthanol anhydre (2mL) et on réalise 3 cycles vide / argon puis on chauffe sous agitation le milieu à 40°C pendant 2 h. Le suivi de la réaction est réalisé par chromatographie en phase gazeuse. Lors du couplage de substrats dihalogénés, le nombre d'équivalents d'acide boronique et de base a été modifié. Cas du 1,2-dibromobenzène : 3eq en base et en acide boronique ; cas du 1 ,9-dibromoanthracène et du 1 ,2-dichlobenzène : 3eq en base, 2,5eq en acide boronique.

Les résultats du couplage de Suzuki avec les catalyseurs **8** et **9,** en fonction de la température et du taux catalytique, sont présentés dans les tableaux 1 et 1'.

Les résultats du couplage de Suzuki avec les catalyseurs **8** et **9,** en fonction du solvant, sont présentés dans le tableau 2.

Les résultats du couplage de Suzuki avec les catalyseurs **8** et **9,** en fonction de la base, sont présentés dans le tableau 3.

Les résultats du couplage de Suzuki, en fonction du catalyseur, sont présentés dans les tableaux 4 et 4'.

Les résultats des réactions de couplage de Suzuki, en fonction de la concentration des réactifs, sont présentés dans le tableau 5.

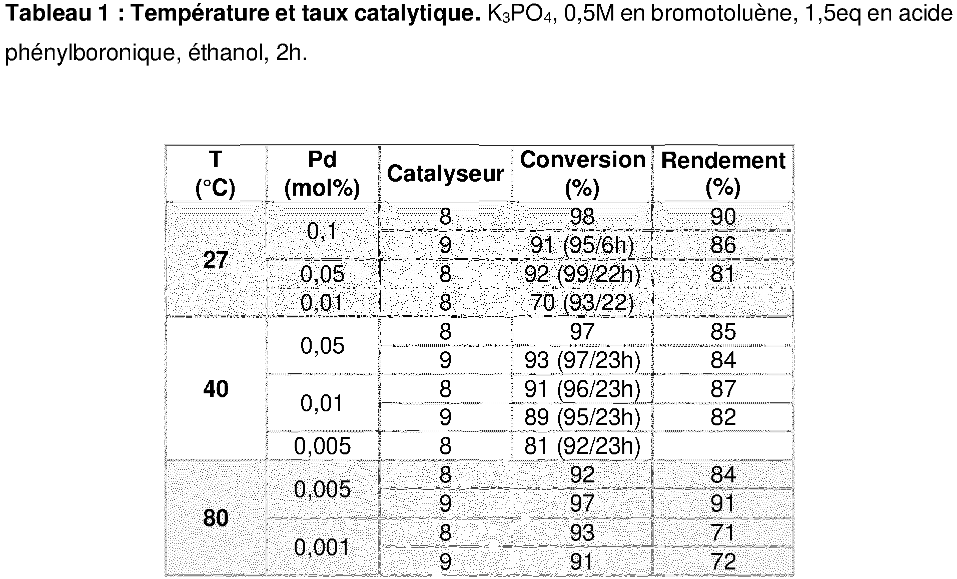

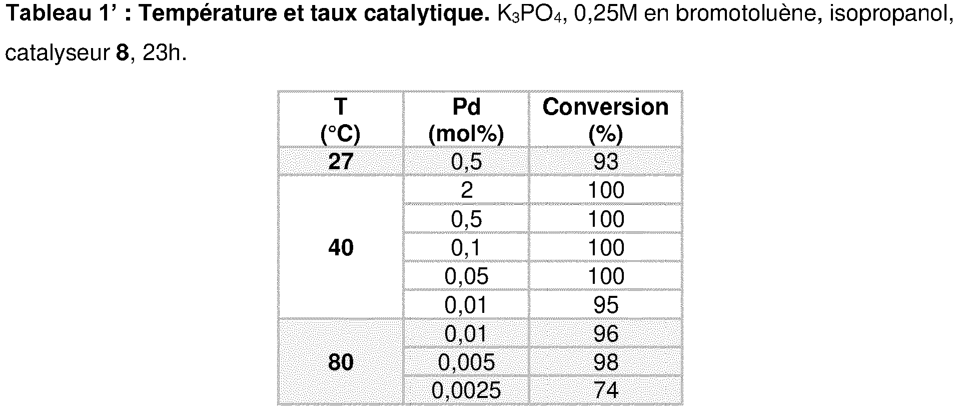

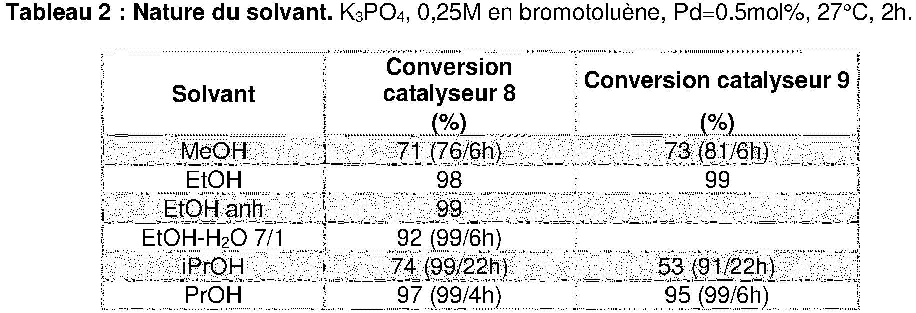

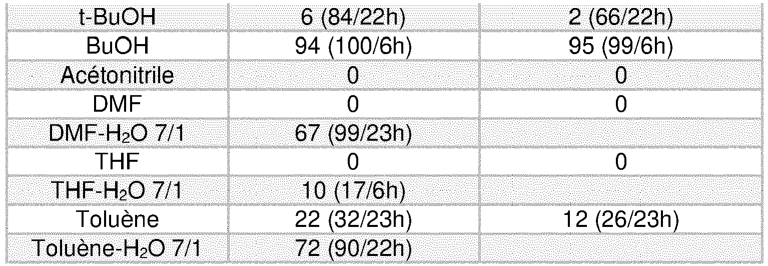

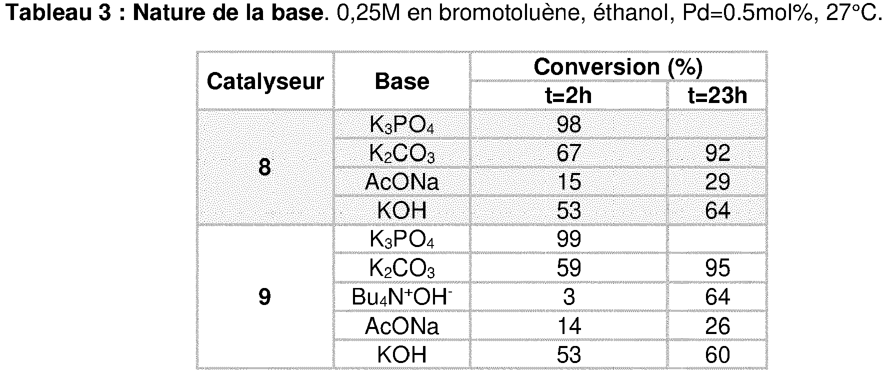

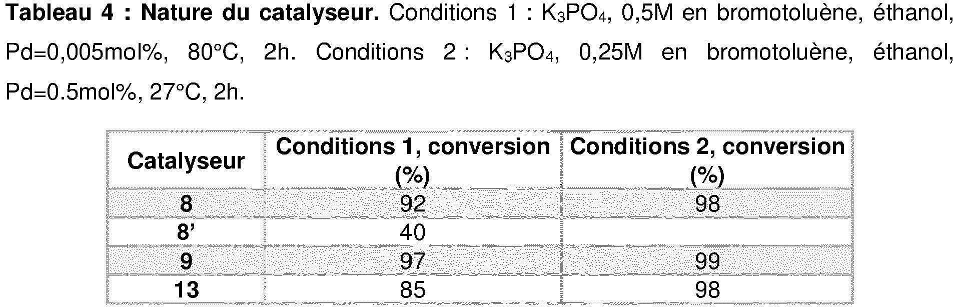

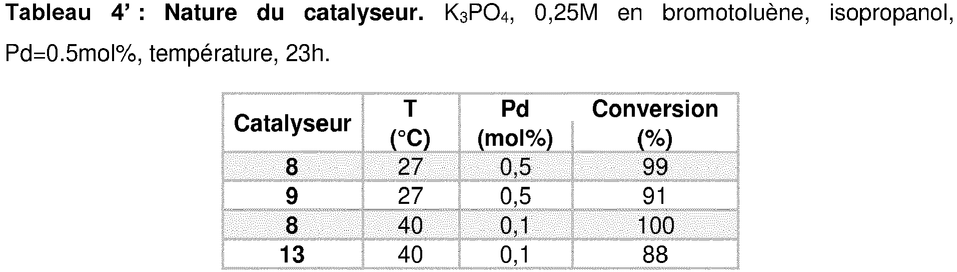

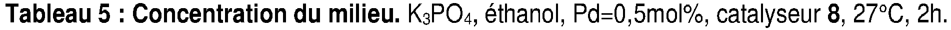

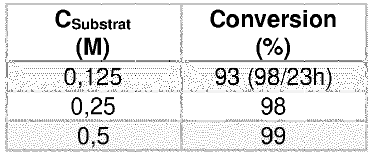

### Exemple 6.2 : Couplage de Suzuki entre divers substrats bromés et divers acides boroniques

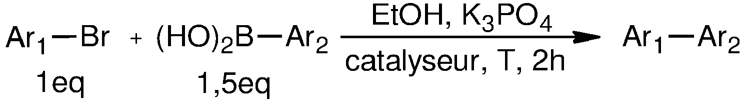

Les résultats sont présentés dans le tableau 6 suivant.

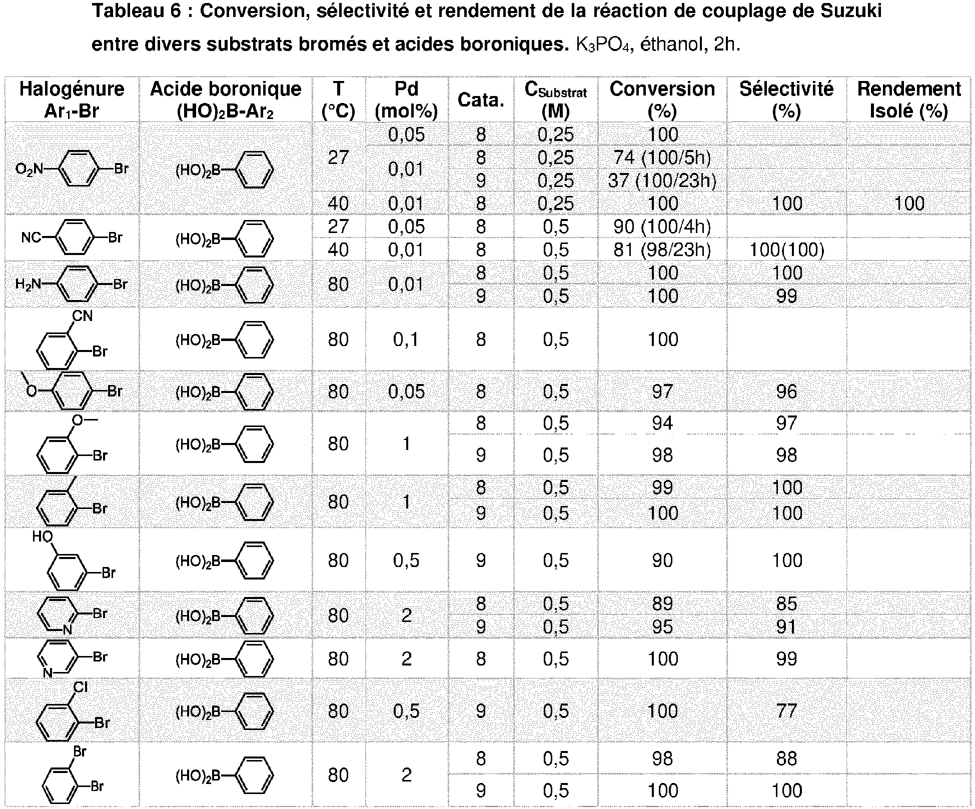

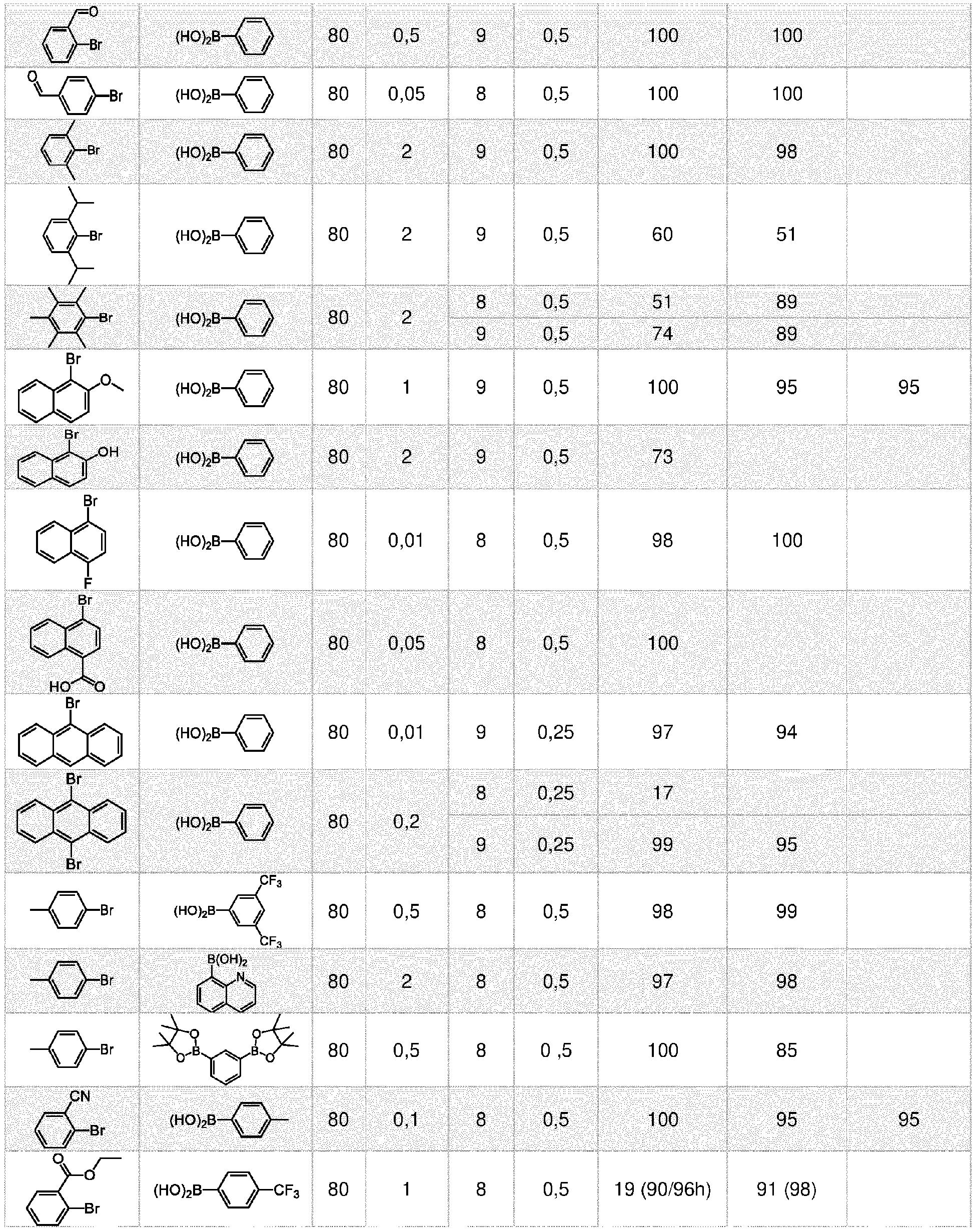

### Exemple 6.3 : Couplage de Suzuki entre divers substrats chlorés et l'acide phénylboronique

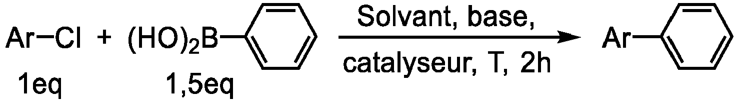

Les résultats sont présentés dans le tableau 7 suivant.

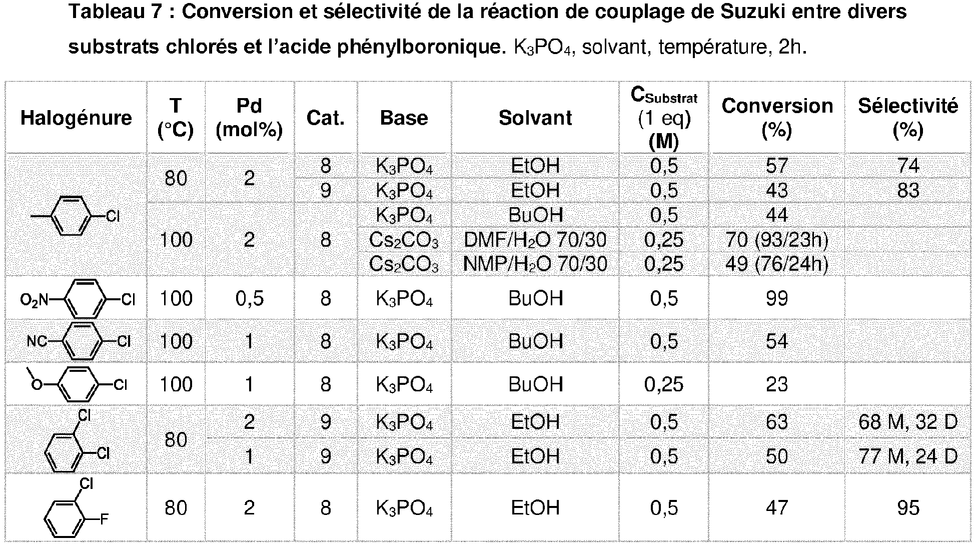

### Exemple 6.4 : Etudes de la teneur résiduelle en palladium dans les produits issus du couplage de Suzuki

On lave toute la verrerie utilisée par la suite à l'acide nitrique et on la rince avec de l'eau ultrapure. On réalise des couplages de Suzuki selon le protocole présenté à l'exemple 6.1 en partant de 1mmol. Après 2h de réaction, le milieu réactionnel est refroidi puis laissé 30min à température ambiante sans agitation. Le milieu est alors filtré sur papier filtre grade 5 et le gâteau est rincé avec de l'éthanol. On condense le filtrat sous vide et on ajoute de l'éther diéthylique ou de l'acétate d'éthyle (10mL) puis de l'eau. La phase aqueuse est ensuite extraite avec 3x10mL d'éther diéthylique ou d'acétate d'éthyle. Une fois les phases organiques réunies, séchées et condensées sous vide, le produit est évaporé sous vide à 200°C pendant une heure. Le résidu est minéralisé dans un ballon surmonté d'un réfrigérant en ajoutant 4 mL d'acide nitrique concentré que l'on porte 1h à reflux sous agitation jusqu'à obtention d'une solution limpide et homogène. La solution est alors analysée par ICP-MS. On obtient une teneur en métal exprimée en milligramme de palladium par kilogramme de produit issu du couplage de Suzuki.

Les résultats obtenus en fonction du taux catalytique sont présentés dans les tableaux 8 et 8' :

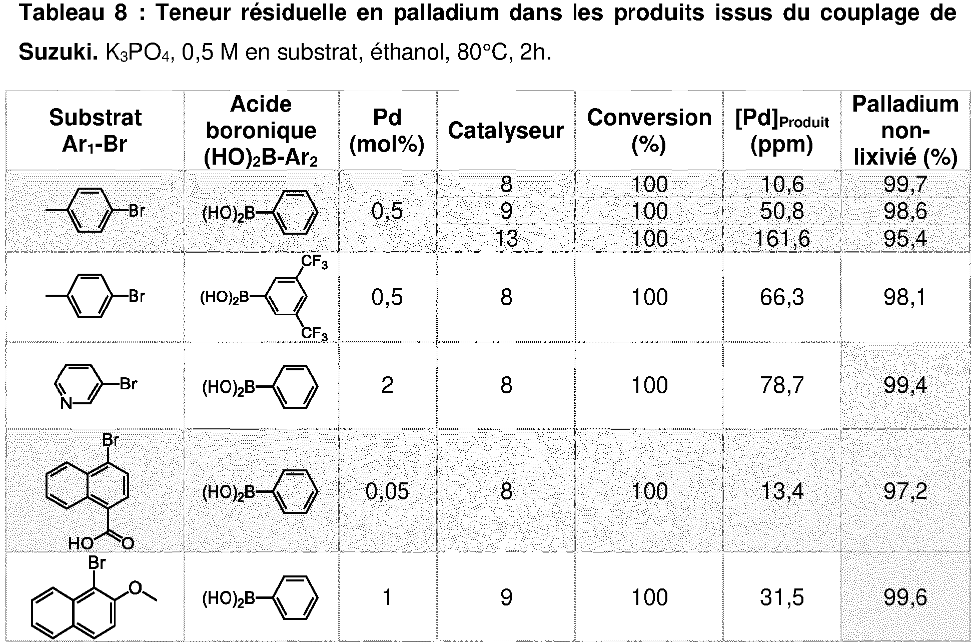

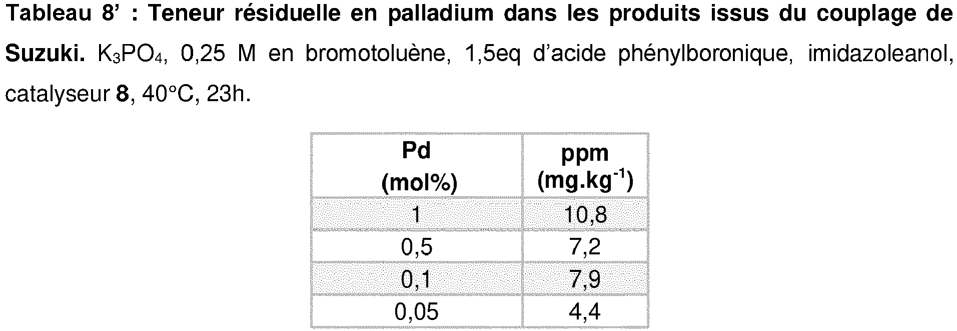

### Exemple 7 : Autre utilisation des complexes métalliques

### Exemple 7.1 : Utilisation du catalyseur au rhodium dans une réaction d'hydrogénation

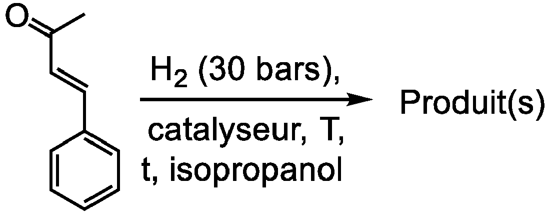

### Protocole standard :

On introduit dans un autoclave le calixarène **7** (3,36mg, 5,5.10⁻⁷mol, 0,3mol%), la benzylideneacétone (214,3mg, 1,467.10⁻³mol) et l'isopropanol (10mL). On place le réacteur sous atmosphère de dihydrogène en réalisant deux cycles de compression (10bars) / décompression, puis on injecte 30 bars. On agite le milieu à température ambiante et on analyse sa composition avec une chromatographie en phase gazeuse couplée à une spectrométrie de masse ESI.

Les résultats sont présentés dans le tableau 9 suivant.

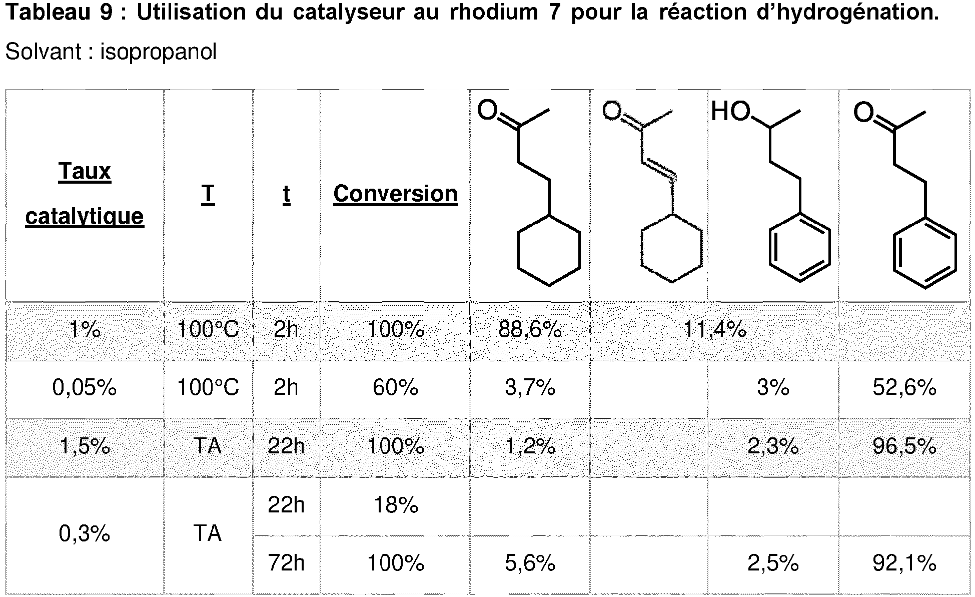

### Exemple 7.2 : Utilisation de catalyseurs au palladium dans le couplage de Heck

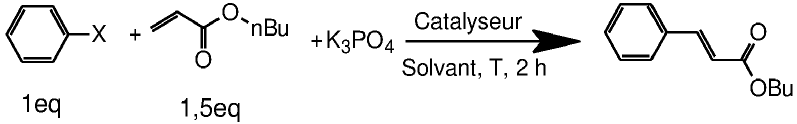

**Protocole standard** : On introduit dans un réacteur le catalyseur **8** (7,4mg, 1,25.10⁻³mmol) et le phosphate de potassium tribasique (424mg, 2mmol) puis on sèche sous vide pendant 10 min. On introduit sous atmosphère d'argon le bromobenzène (105µL, 1mmol), l'acrylate de butyle (213µL, 1,5mmol) puis le diméthyformamide anhydre (4mL). On réalise 3 cycles vide/argon puis on agite à 100°C pendant 18h. On obtient 57% de conversion.

Les résultats sont présentés dans le tableau 10 suivant :

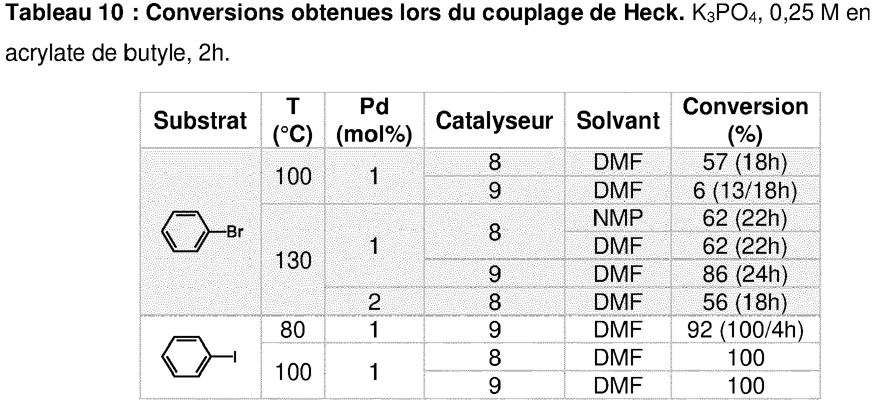

### Exemple 7.3 : Réaction d'ouverture des époxydes

### i. Ouverture de l'épibromohydrine

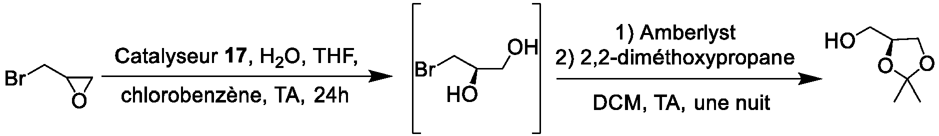

On introduit dans un réacteur le catalyseur **17** (32mg, 0,034mmol, 2mol%), l'épibromohydrine (0,141ml, 1,7mmol), le chlorobenzène (0,05ml, 0,5mmol) et 0,197ml de THF. On rajoute de l'eau (0,044ml, 2,5mmol) sous agitation. On laisse la réaction sous agitation pendant 24h à température ambiante. On ajoute 5ml de dichlorométhane, de l'Amberlyst 15 (16mg) et du 2,2-diméthoxypropane (0,418ml, 3,4mmol). On laisse agiter pendant 18h à température ambiante. Le suivi de la réaction est réalisé par chromatographie en phase gazeuse : l'utilisation d'une colonne achirale permet d'accéder à la conversion et celle d'une colonne chirale à l'excès énantiomérique (e.e). Après une première réaction catalytique, le catalyseur 17 est précipité au diéthyléther puis filtré et réengagé dans une nouvelle réaction catalytique avec un nouveau lot de produits et de solvants. Le catalyseur **17** a été ainsi évalué à travers 3 cycles catalytiques.

Les résultats sont présentés dans le tableau 11 suivant.

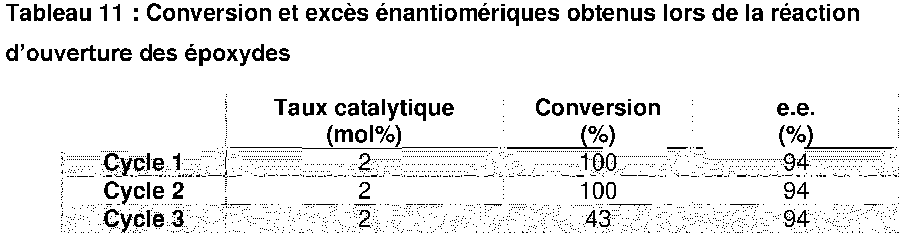

### ii. Ouverture de l'oxyde de cyclohexène

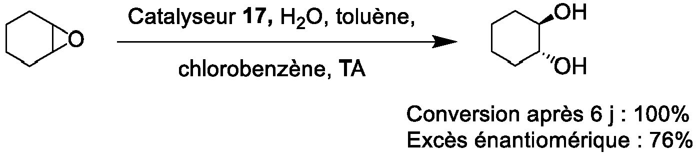

On introduit dans un réacteur le catalyseur **17** (17mg, 0,020mmol, 2mol%), de l'oxyde de cyclohexène (0,100ml, 0,99mmol), le chlorobenzène (0,025ml, 0,25mmol) et 0,210ml de toluène. On ajoute de l'eau (0,021ml, 1,18mmol) sous agitation. On laisse la réaction sous agitation pendant 6 jours à température ambiante. Le suivi de la réaction est réalisé par chromatographie en phase gazeuse : l'utilisation d'une colonne achirale permet d'accéder à la conversion et celle d'une colonne chirale à l'excès énantiomérique. On obtient 100% de conversion au bout de 6j avec un excès énantiomérique de 76%.

### Exemple 7.4 : Teneur résiduelle en cobalt dans le produit issu de l'ouverture de l'épibromohydrine

A la fin de la réaction, la solution de dichlorométhane est évaporée et le produit est extrait avec de l'éther. La suspension est filtrée sur papier filtre puis le filtrat est évaporé sous pression réduite. Le résidu obtenu est évaporé sous vide à 200°C pendant 1h. On ajoute 4 mL d'acide nitrique concentré que l'on porte 1h à reflux sous agitation jusqu'à obtention d'une solution limpide et homogène. La solution est alors analysée par ICP-MS. On obtient une teneur en métal exprimée en milligramme de cobalt par kilogramme de produit issu de l'ouverture de l'épibromohydrine.

Le résultat obtenu est présenté dans le tableau 12 :

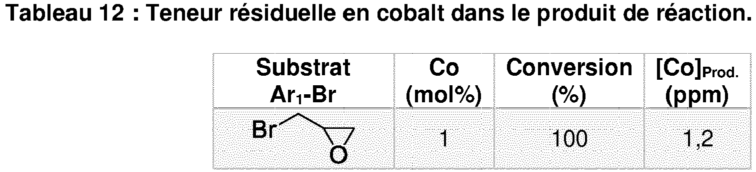

### Exemple 7.5 : Teneur résiduelle en rhodium dans des produits issus de la réaction d'hydrogénation

En fin de réaction, le milieu réactionnel est laissé 30 min à température ambiante, filtré puis un protocole de minéralisation et d'analyse identique à celui décrit dans l'exemple 5.4 est utilisé.

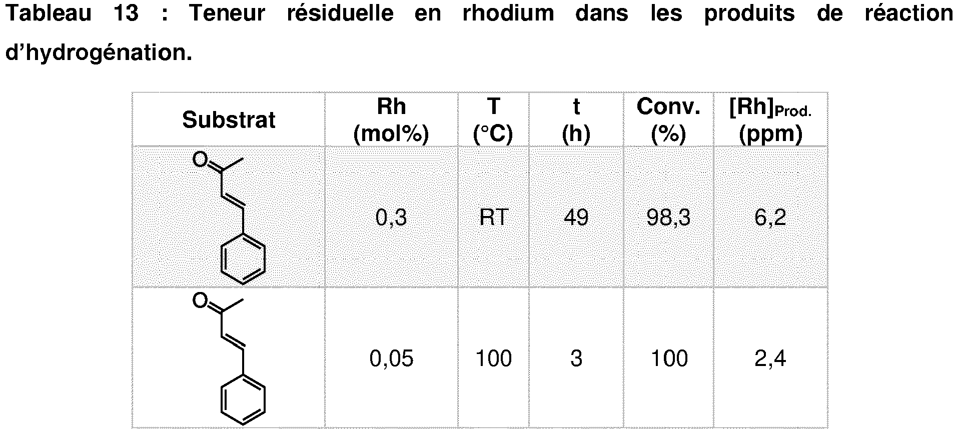

## Revendications

1. Composé cyclique de formule générale (IC) suivante : 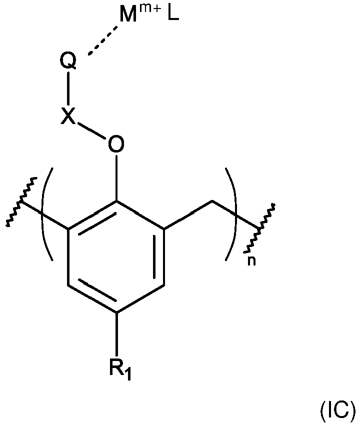 dans laquelle :
n représente un nombre entier de 7 à 220,
X est :
- un alkyle linéaire ou ramifié comprenant de 1 à 10 atomes de carbone, ou
- un polyéthylène glycol comprenant de 1 à 5 unités éthylène glycol ou
- (alkyle linéaire ou ramifié comprenant de 0 à 10 atomes de carbone)-aryle, l'aryle étant de préférence choisi parmi phényle et naphthyle,
R₁ représente :
- un alkyle linéaire ou ramifié comprenant de 1 à 8 atomes de carbone, ou
- O-alkyle linéaire ou ramifié comprenant de 1 à 8 atomes de carbone ou
- O-(alkyle linéaire ou ramifié comprenant de 0 à 3 atomes de carbone)-aryle,
M^{m+} représente un métal à l'état d'oxydation m ou un agrégat métallique comprenant un ensemble de métaux à l'état d'oxydation m, m étant 0, 1, 2, 3, 4 ou 5, de préférence 0, 1, 2 ou 3,
L est constitué d'un ou plusieurs ligands neutres ou chargés négativement liés au métal, et
Q représente un groupement choisi dans le groupe constitué des ligands phosphorés, et des carbènes N-hétérocycliques, ou des ligands salen.

2. Composé selon la revendication 1, de formule (IC) suivante : 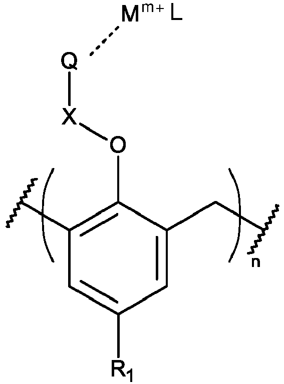 dans laquelle :
n, X, M^{m+}, R₁ et L sont tels que définis à la revendication 1,
Q est choisi dans le groupe constitué des ligands phosphorés et des carbènes N-hétérocycliques.

3. Composé de formule (IC) selon l'une des revendications 1 à 2, dans laquelle X est un alkyle linéaire comprenant de 2 à 8 ou de 3 à 8 atomes de carbone.

4. Composé de formule (IC) selon l'une des revendications 1 à 3, dans laquelle R₁ est choisi parmi *n*-octyle, *t*-butyle, O-benzyle et O-alkyle, de préférence *t*-butyle et O-benzyle.

5. Composé de formule (IC) selon l'une des revendications 1 à 4, dans laquelle :
n représente un nombre entier de 7 à 20,
X est un alkyle linéaire comprenant 3 à 6 atomes de carbone,
Q représente un groupement choisi dans le groupe constitué des ligands phosphorés, et des carbènes N-hétérocycliques,
R₁ représente *n*-octyle, *t*-butyle, O-benzyle,O-méthyle, O-éthyle et O-propyle, de préférence *t-*butyle et O-benzyle,
M^{m+} représente un métal à l'état d'oxydation m ou un agrégat métallique comprenant un ensemble de métaux à l'état d'oxydation m, m étant 0, 1, 2, 3, 4 ou 5, de préférence 0, 1, 2 ou 3,
L est constitué d'un ou plusieurs ligands neutres ou chargés négativement liés au métal.

6. Composé de formule (IC) selon la revendication 2 : 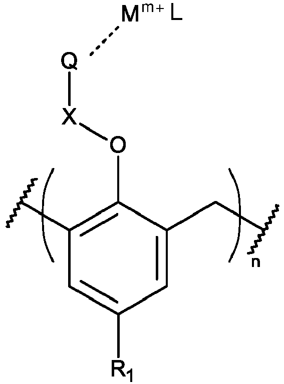 dans laquelle :
n, X, R¹ sont tels que définis à l'une des revendications 1 à 5,
Q est choisi dans le groupe constitué des ligands phosphorés et des carbènes N-hétérocycliques,
M^{m+} représente un métal à l'état d'oxydation m ou un agrégat métallique comprenant un ensemble de métaux à l'état d'oxydation m, m étant 0, 1, 2, 3, 4 ou 5 et
M est un métal de transition du groupe IB, IIB, IIIB, IVB, VB, VIB, VIIB ou VIIIB
L est constitué d'un ou plusieurs ligands neutres ou chargés négativement liés au métal.

7. Composé de formule (IC) selon la revendication 6, dans laquelle
M^{m+} représente un métal à l'état d'oxydation m ou un agrégat métallique comprenant un ensemble de métaux à l'état d'oxydation m, et
M est choisi dans le groupe constitué de Ni, Pd, Ru, Rh, Cu, Co ou Pt.

8. Composé de formule générale (IC) selon la revendication 1 : 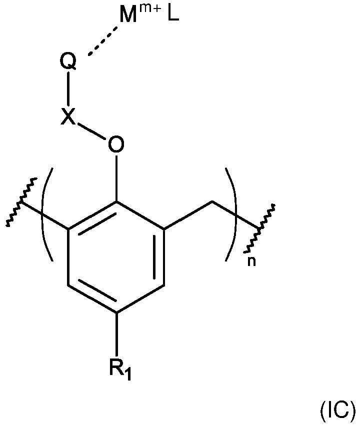 dans laquelle :
n, X, M^{m+}, R₁ et L sont tels que définis à la revendication 1,
Q représente un groupement choisi dans le groupe constitué des ligands salen.

9. Composé de formule (IC) selon la revendication 1 : 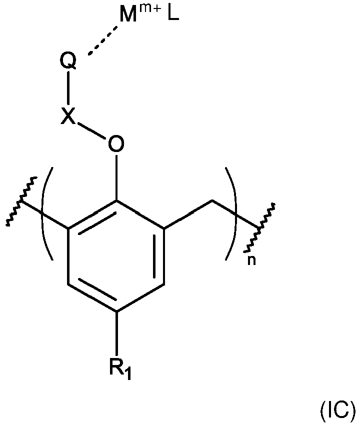 dans laquelle :
Q représente un groupement choisi dans le groupe constitué des phosphines, des phosphonites, des phosphinites, et des 1,3-imidazolylidènes, des 1,3-imidazolinylidènes, des 1,2,4-triazolylidènes, des 1,3-benzimidazolylidènes, des 1,2,4-triazolylidènes et des 1,3-thiazolylidènes, ou des ligands salen énantiopurs.

10. Composé de formule (IC) selon la revendication 1 choisi parmi :

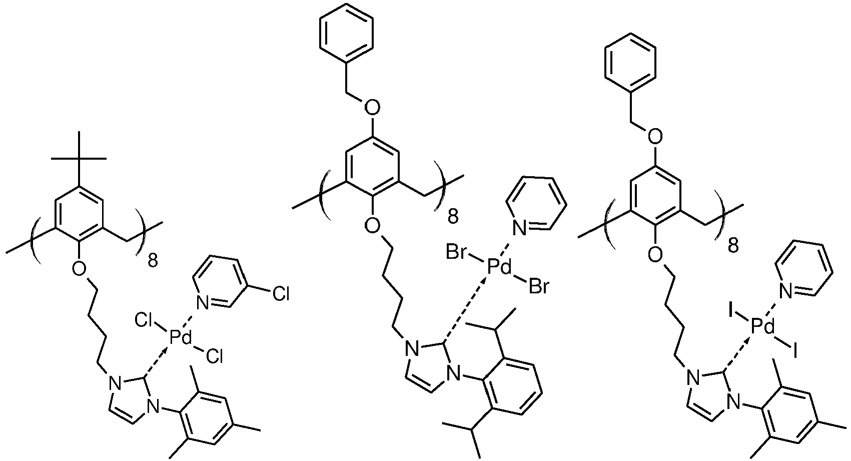

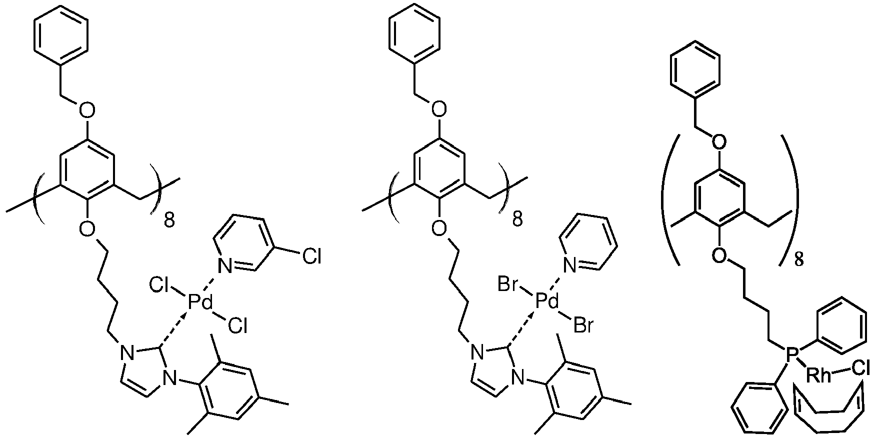

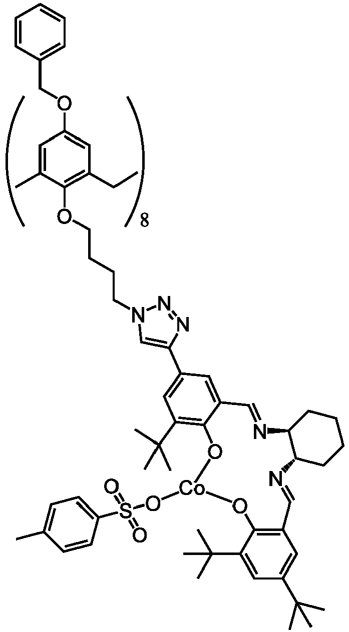

11. Utilisation d'un composé de formule (IC) selon l'une des revendications 1 à 10 en tant que catalyseur dans une réaction de chimie organique.

12. Utilisation selon la revendication 11 d'un composé de formule (IC) en tant que catalyseur dans une réaction de chimie organique choisie dans le groupe constitué des réactions de réduction, les réactions d'oxydation, les réactions de formation de liaisons carbone-carbone, les réactions de formation de liaison carbone-hétéroatome, les réactions de carbonylations en présence de CO, les réactions de carboxylations en présence de CO₂, et les réaction de catalyses asymétriques.

13. Utilisation selon l'une des revendications 11 à 12 d'un composé de formule (IC) en tant que catalyseur dans une réaction de chimie organique choisie dans le groupe constitué des réactions d'hydrogénation de carbonyles, d'alcènes, d'alcynes ou d'arènes, les réactions de formation de liaison carbone-carbone comme les couplages de Suzuki, de Heck, de Stille, de Kumada et de Sonogashira, les réactions de formation de liaison carbone-azote, carbone-oxygène, carbone-phosphore et carbone-soufre, les réactions de Fischer-Tropsch et les réactions d'ouverture d'époxyde.

14. Procédé de préparation d'un composé de formule (IC) : 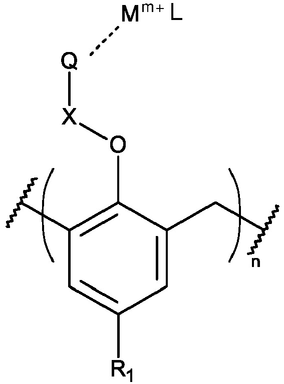 dans laquelle :
n, X, L, M^{m+} et R₁ sont tels que définis à la revendication 1,
Q représente un groupement choisi dans le groupe constitué des phosphines, des phosphonites, des phosphinites, et des carbènes N-hétérocycliques,
comprenant une étape de mise en contact d'un composé de formule (IA),
dans laquelle Z représente un groupement Q choisi dans le groupe constitué des ligands phosphorés et des carbènes N-hétérocycliques, 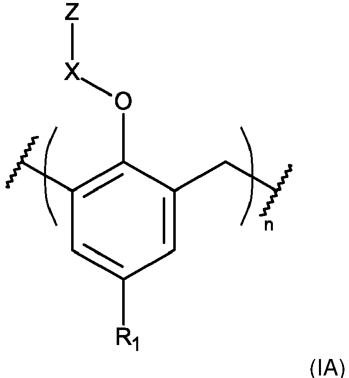
avec un complexe métallique de formule (L')M^{m+} où M^{m+} représente un métal à l'état d'oxydation m ou un agrégat métallique comprenant un ensemble de métaux à l'état d'oxydation m, m étant 0, 1, 2, 3, 4 ou 5, de préférence 0, 1, 2 ou 3, et L' est constitué de 0, un ou plusieurs ligands neutres ou chargés négativement liés au métal.

15. Procédé selon la revendication 14 de préparation d'un composé de formule (IC) : 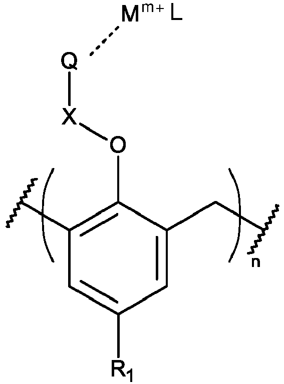 dans laquelle :
n, X, L, M^{m+} et R₁ sont tels que définis à la revendication 1,
Q représente un groupement choisi dans le groupe constitué des phosphines, des phosphonites, des phosphinites, des 1,3-imidazolylidènes, des 1,3-imidazolinylidènes, des 1,2,4-triazolylidènes, des 1,3-benzimidazolylidènes, des 1,2,4-triazolylidènes et des 1,3-thiazolylidènes,
comprenant une étape de mise en contact d'un composé de formule (IA),
dans laquelle Z représente un groupement Q choisi dans le groupe constitué des phosphines, des phosphonites, des phosphinites, des des 1,3-imidazolylidènes, des 1,3-imidazolinylidènes, des 1,2,4-triazolylidènes, des 1,3-benzimidazolylidènes, des 1,2,4-triazolylidènes et des 1,3-thiazolylidènes, 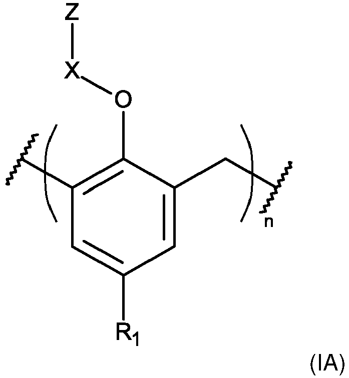
avec un complexe métallique de formule (L')M^{m+} où M^{m+} représente un métal à l'état d'oxydation m ou un agrégat métallique comprenant un ensemble de métaux à l'état d'oxydation m, m étant 0, 1, 2, 3, 4 ou 5, de préférence 0, 1, 2 ou 3, et L' est constitué de 0, un ou plusieurs ligands neutres ou chargés négativement liés au métal.

16. Procédé de préparation d'un composé de formule (IC) : 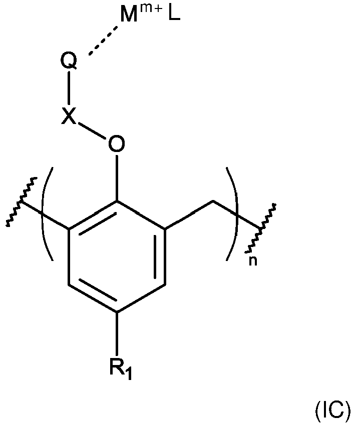 dans laquelle :
n, X, L, M^{m+} et R₁ sont tels que définis à la revendication 1,
Q représente un groupement choisi dans le groupe constitué des ligands salen,
comprenant une étape de mise en contact d'un composé de formule (II) : 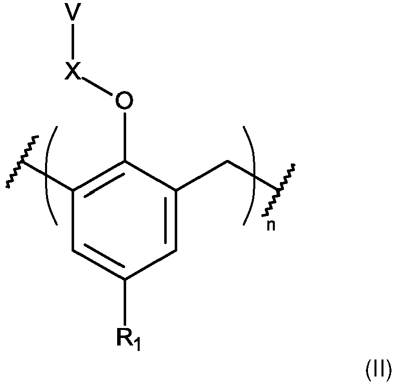 dans laquelle :
V représente un groupe partant choisi dans le groupe constitué des halogènes tels que CI, Br et I et des sulfonates tels que OSO₂Me, OSO₂(C₇H₇) et OSO₂CF₃,
avec l'azoture de sodium comme précurseur d'un groupe de greffage d'un groupement Q',
Q' étant le 3-(tert-butyl)-5-éthynyl-2-hydroxybenzaldehyde,
pour obtenir un composé de formule (VIII), 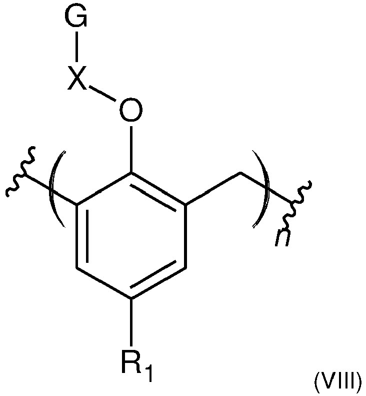
dans laquelle :
G représente un groupe N₃,
puis comprenant une étape de mise en contact dudit composé de formule (VIII) avec le susdit groupement Q',
pour obtenir un composé de formule (IB) 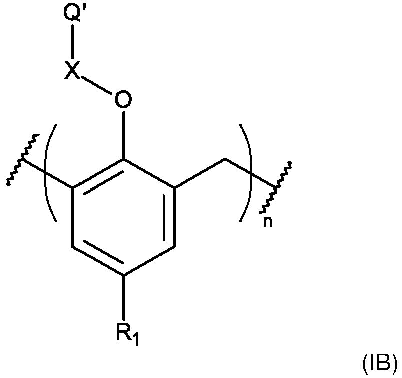
puis comprenant une étape de mise en contact dudit composé de formule (IB),
avec le composé de formule (VII), 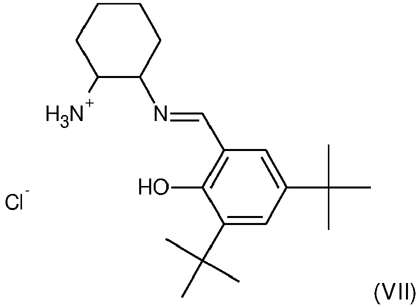
pour obtenir un composé de formule (IA), 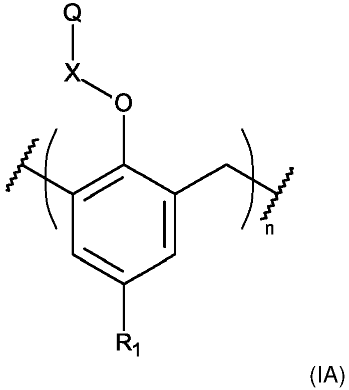
puis comprenant une étape de mise en contact dudit composé de formule (IA)
avec un complexe métallique de formule LM^{m+}, dans lequel M, L et m sont tels que définis à la revendication 1,
éventuellement en présence d'une base, et en particulier avec de l'acétate de cobalt et de l'acide paratoluènesulfonique,
pour obtenir ledit composé de formule (IC).

17. Utilisation selon l'une des revendications 11 à 13, le composé de formule (IC) étant utilisé en tant que catalyseur hétérogène, et dans laquelle le taux de lixiviation du métal dudit catalyseur est inférieur à 10%, en particulier inférieur à 5%, du poids total du métal contenu dans ledit catalyseur.

## Patentansprüche

1. Zyklische Verbindung der folgenden allgemeinen Formel (IC) 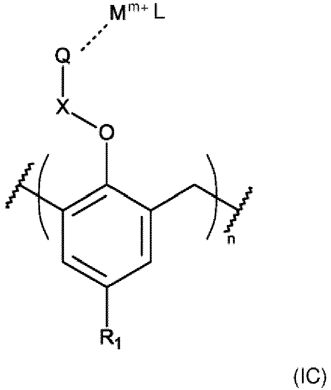 wobei:
n für eine ganze Zahl von 7 bis 220 steht,
X für:
- ein lineares oder verzweigtes Alkyl, umfassend 1 bis 10 Kohlenstoffatome, oder
- ein Polyethylenglykol, umfassend 1 bis 5 Ethylenglykoleinheiten oder
- (lineares oder verzweigtes Alkyl, umfassend 0 bis 10 Kohlenstoffatomen)-Aryl steht, wobei das Aryl vorzugsweise ausgewählt ist aus Phenyl und Naphthyl,
R₁ für:
- ein lineares oder verzweigtes Alkyl, umfassend 1 bis 8 Kohlenstoffatome, oder
- -O-lineares oder verzweigtes Alkyl, umfassend 1 bis 8 Kohlenstoffatome, oder
- -O-(lineares oder verzweigtes Alkyl, umfassend 0 bis 3 Kohlenstoffatome)-Aryl, steht,
M^{m+} für ein Metall im Oxidationszustand m oder ein Metallaggregat steht, umfassend eine Gesamtheit von Metallen im Oxidationszustand m, wobei m 0, 1, 2, 3, 4 oder 5, vorzugsweise 0, 1, 2 oder 3 ist,
L aus einem oder mehreren neutralen oder negativ geladenen Liganden besteht, die an das Metall gebunden sind, und
Q für eine Gruppierung steht, ausgewählt aus der Gruppe bestehend aus Phosphor-Liganden und N-heterocyclischen Carbenen oder Salen-Liganden.

2. Verbindung nach Anspruch 1 mit der folgenden Formel (IC) : 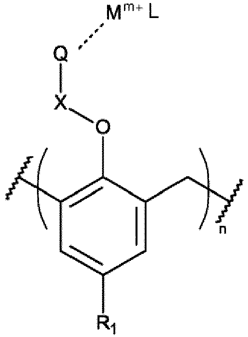 wobei:
n, X, M^{m+}, R₁ und L so sind, wie in Anspruch 1 definiert,
Q ausgewählt ist aus der Gruppe bestehend aus Phosphor-Liganden und N-heterocyclischen Carbenen.

3. Verbindung der Formel (IC) nach einem der Ansprüche 1 bis 2, wobei X ein lineares Alkyl ist, umfassend 2 bis 8 oder 3 bis 8 Kohlenstoffatome.

4. Verbindung der Formel (IC) nach einem der Ansprüche 1 bis 3, wobei R₁ ausgewählt ist aus n-Octyl, t-Butyl, O-Benzyl und O-Alkyl, vorzugsweise t-Butyl und O-Benzyl.

5. Verbindung der Formel (IC) nach einem der Ansprüche 1 bis 4, wobei: n für eine ganze Zahl von 7 bis 20 steht,
X ein lineares Alkyl ist, umfassend 3 bis 6 Kohlenstoffatome,
Q für eine Gruppierung steht, ausgewählt aus der Gruppe bestehend aus Phosphor-Liganden und N-heterocyclischen Carbenen,
R₁ für n-Octyl, t-Butyl, 0-Benzyl, O-Methyl, O-Ethyl und O-Propyl, vorzugsweise t-Butyl und O-Benzyl steht,
M^{m+} für ein Metall im Oxidationszustand m oder ein Metallaggregat steht, umfassend eine Gesamtheit von Metallen im Oxidationszustand m, wobei m 0, 1, 2, 3, 4 oder 5, vorzugsweise 0, 1, 2 oder 3 ist,
L aus einem oder mehreren neutralen oder negativ geladenen Liganden besteht, die an das Metall gebunden sind.

6. Verbindung der Formel (IC) nach Anspruch 2: 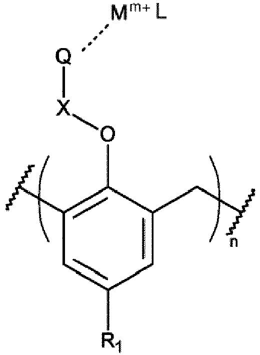 wobei:
n, X, R¹ so sind, wie in einem der Ansprüche 1 bis 5 definiert,
Q ausgewählt ist aus der Gruppe bestehend aus Phosphor-Liganden und N-heterocyclischen Carbenen,
M^{m+} für ein Metall im Oxidationszustand m oder ein Metallaggregat steht, umfassend eine Gesamtheit von Metallen im Oxidationszustand m, wobei m 0, 1, 2, 3, 4 oder 5 ist, und
M ein Übergangsmetall der Gruppe IB, IIB, IIIB, IVB, VB, VIB, VIIB oder VIIIB ist,
L aus einem oder mehreren neutralen oder negativ geladenen Liganden besteht, die an das Metall gebunden sind.

7. Verbindung der Formel (IC) nach Anspruch 6, wobei:
M^{m+} für ein Metall im Oxidationszustand m oder ein Metallaggregat steht, umfassend eine Gesamtheit von Metallen im Oxidationszustand m, und
M ausgewählt ist aus der Gruppe bestehend aus Ni, Pd, Ru, Rh, Cu, Co oder Pt.

8. Verbindung der Formel (IC) nach Anspruch 1: 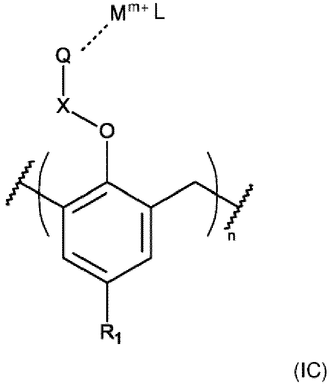 worin:
n, X, M^{m+}, R₁ und L so sind, wie in Anspruch 1 definiert,
Q für eine Gruppierung steht, die ausgewählt ist aus der Gruppe bestehend aus Salen-Liganden.

9. Verbindung der Formel (IC) nach Anspruch 1: 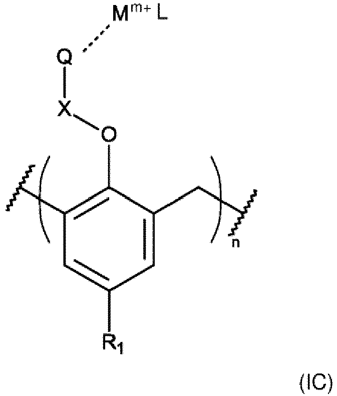 wobei:
Q für eine Gruppierung steht, ausgewählt aus der Gruppe bestehend aus Phosphinen, Phosphoniten, Phosphiniten und 1,3-Imidazolylidenen, 1,3-Imidazolinylidenen, 1,2,4-Triazolylidenen, 1,3-Benzimidazolylidenen, 1,2,4-Triazolylidenen und 1,3-Thiazolylidenen, oder enantiopuren Salen-Liganden.

10. Verbindung der Formel (IC) nach Anspruch 1, ausgewählt aus:

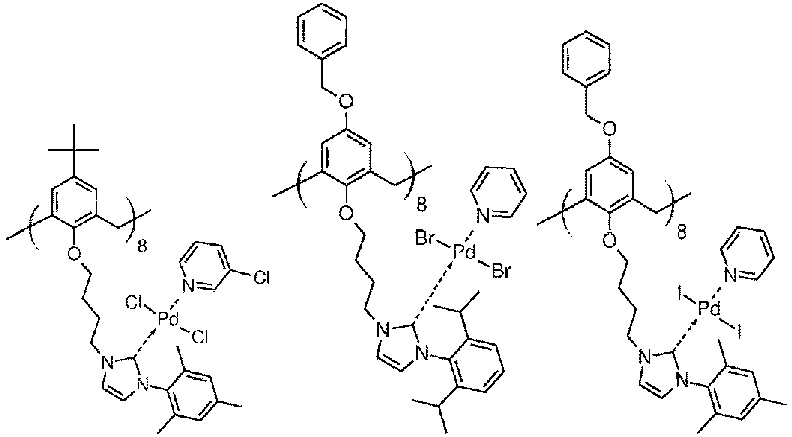

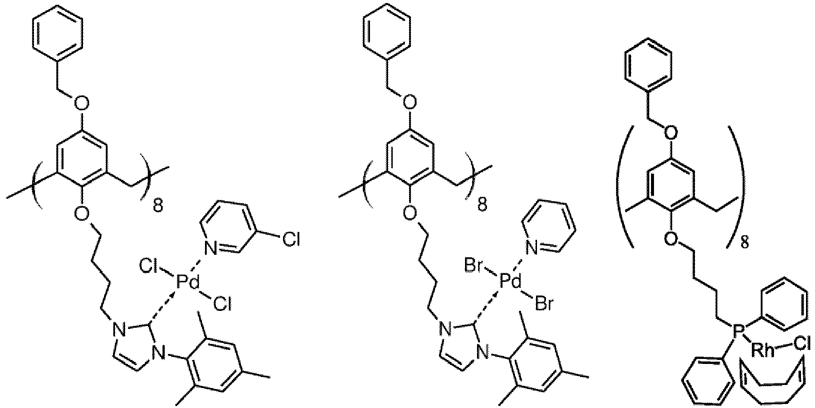

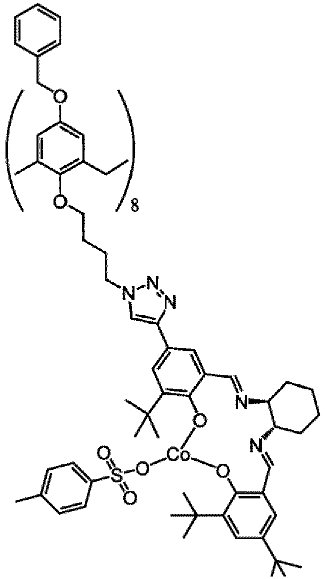

11. Verwendung einer Verbindung der Formel (IC) nach einem der Ansprüche 1 bis 10 als Katalysator in einer organisch-chemischen Reaktion.

12. Verwendung einer Verbindung der Formel (IC) nach Anspruch 11 als Katalysator in einer organisch-chemischen Reaktion, ausgewählt aus der Gruppe bestehend aus Reduktionsreaktionen, Oxidationsreaktionen, Reaktionen zur Bildung von Kohlenstoff-Kohlenstoff-Bindungen, Reaktionen zur Bildung von Kohlenstoff-Heteroatom-Bindungen, Carbonylierungsreaktionen in Gegenwart von CO, Carboxylierungsreaktionen in Gegenwart von CO₂ und asymmetrischen Katalysereaktionen.

13. Verwendung einer Verbindung der Formel (IC) nach einem der Ansprüche 11 bis 12 als Katalysator in einer organisch-chemischen Reaktion, ausgewählt aus der Gruppe bestehend aus Hydrierungsreaktionen von Carbonylen, Alkenen, Alkinen oder Arenen, Reaktionen zur Bildung von Kohlenstoff-Kohlenstoff-Bindungen wie Suzuki-, Heck-, Stille-, Kumada- und Sonogashira-Kupplungen, Reaktionen zur Bildung von Kohlenstoff-Stickstoff-, Kohlenstoff-Sauerstoff-, Kohlenstoff-Phosphor- und Kohlenstoff-Schwefel-Bindungen, Fischer-Tropsch-Reaktionen und Epoxid-Öffnungsreaktionen.

14. Verfahren zur Herstellung einer Verbindung der Formel (IC) : 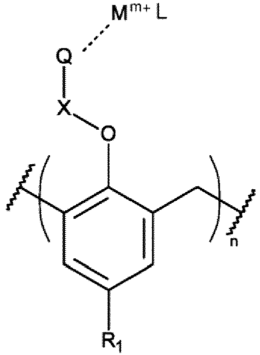 wobei:
n, X, L, M^{m+} und R₁ so sind, wie in Anspruch 1 definiert,
Q für eine Gruppierung steht, ausgewählt aus der Gruppe bestehend aus Phosphinen, Phosphoniten, Phosphiniten und N-heterocyclischen Carbenen,
umfassend einen Schritt zum Inkontaktbringen einer Verbindung der Formel (IA),
wobei Z für eine Gruppierung Q steht, ausgewählt aus der Gruppe bestehend aus Phosphor-Liganden und N-heterocyclischen Carbenen, 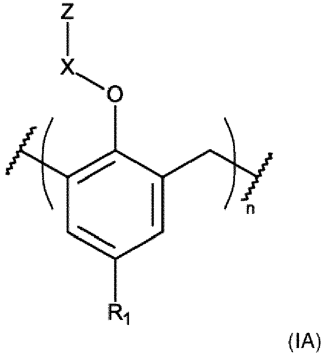
mit einem Metallkomplex der Formel (L')M^{m+}, wobei M^{m+} für ein Metall im Oxidationszustand m oder ein Metallaggregat steht, umfassen eine Gesamtheit von Metallen im Oxidationszustand m, wobei m 0, 1, 2, 3, 4 oder 5, vorzugsweise 0, 1, 2 oder 3 ist, und L' aus 0, einem oder Mehr Eren neutralen oder negativ geladenen Liganden besteht, die an das Metall gebunden sind,

15. Verfahren nach Anspruch 14 zur Herstellung einer Verbindung der Formel (IC): 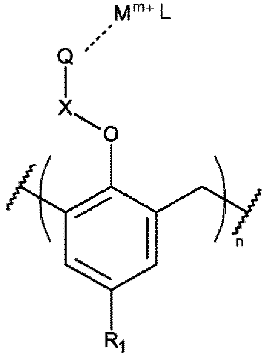 wobei:
n, X, L, M^{m+} und R₁ so sind, wie in Anspruch 1 definiert,
Q für eine Gruppierung steht, ausgewählt aus der Gruppe bestehend aus Phosphinen, Phosphoniten, Phosphiniten und 1,3-Imidazolylidenen, 1,3-Imidazolinylidenen, 1,2,4-Triazolylidenen, 1,3-Benzimidazolylidenen, 1,2,4-Triazolylidenen und 1,3-Thiazolylidenen,
umfassend einen Schritt zum Inkontaktbringen einer Verbindung der Formel (IA),
wobei Z für eine Gruppierung Q steht, ausgewählt aus der Gruppe bestehend aus Phosphinen, Phosphoniten, Phosphiniten, 1,3-Imidazolylidenen, 1,3-Imidazolinylidenen, 1,2,4-Triazolylidenen, 1,3-Benzimidazolylidenen, 1,2,4-Triazolylidenen und 1,3-Thiazolylidenen, 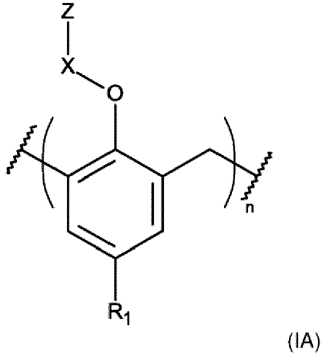
mit einem Metallkomplex der Formel (L')M^{m+}, wobei M^{m+} für ein Metall im Oxidationszustand m oder ein Metallaggregat steht, umfassend eine Gesamtheit von Metallen im Oxidationszustand m, wobei m 0, 1, 2, 3, 4 oder 5, vorzugsweise 0, 1, 2 oder 3 ist, und L' aus 0, einem oder mehreren neutralen oder negativ geladenen Liganden besteht, die an das Metall gebunden sind.

16. Verfahren zur Herstellung einer Verbindung der Formel (IC) : 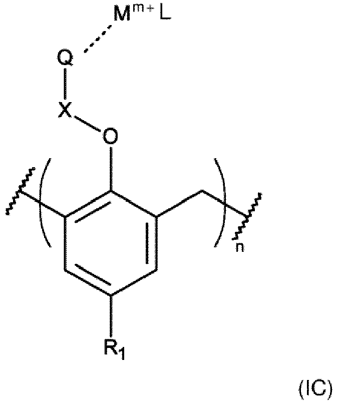 wobei:
n, X, L, M^{m+} und R₁ so sind, wie in Anspruch 1 definiert,
Q für eine Gruppierung steht, ausgewählt aus der Gruppe bestehend aus Salen-Liganden,
umfassend einen Schritt zum Inkontaktbringen einer Verbindung der Formel (II): 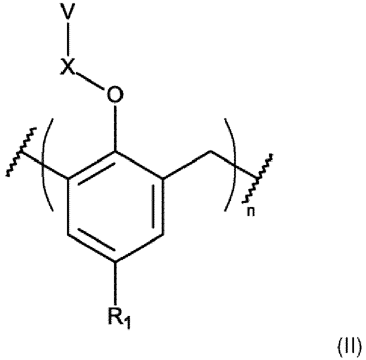 wobei:
V für eine Abgangsgruppe steht, ausgewählt aus der Gruppe bestehend aus Halogenen wie Cl, Br und I und Sulfonaten wie OSO₂Me, OSO₂(C₇H₇) und OSO₂CF₃,
mit Natriumazid als Vorläufer einer Gruppe zum Pfropfen einer Q'-Gruppierung,
wobei Q' 3-(tert-Butyl)-5-ethynyl-2-hydroxybenzaldehyd ist,
um eine Verbindung der Formel (VIII) zu erhalten, 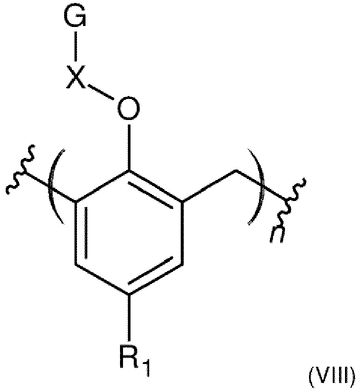 wobei:
G für eine Gruppe N₃ steht,
dann umfassend einen Schritt zum Inkontaktbringen der Verbindung der Formel (VIII) mit der oben genannten Gruppierung Q',
um eine Verbindung der Formel (IB) zu erhalten, 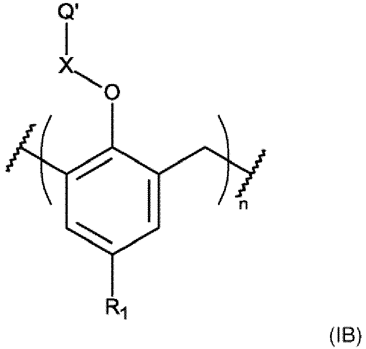
dann umfassend einen Schritt zum Inkontaktbringen der Verbindung der Formel (IB),
mit der Verbindung der Formel (VII), 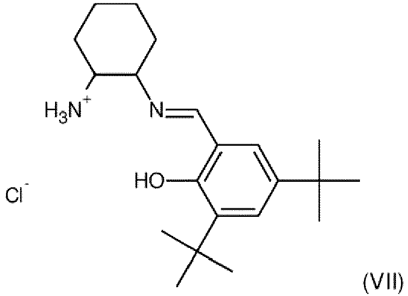
um eine Verbindung der Formel (IA) zu erhalten, 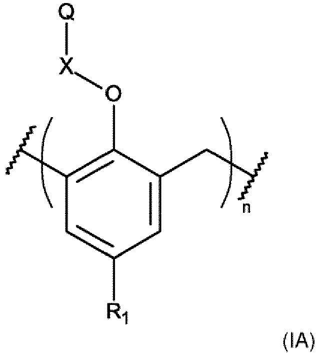
dann umfassend einen Schritt zum Inkontaktbringen der Verbindung der Formel (IA),
mit einem Metallkomplex der Formel LM^{m+}, wobei M, L und m so sind, wie in Anspruch 1 definiert,
gegebenenfalls in Gegenwart einer Base, und insbesondere mit Kobaltacetat und Paratoluolsulfonsäure,
um die Verbindung der Formel (IC) zu erhalten.

17. Verwendung nach einem der Ansprüche 11 bis 13, wobei die Verbindung der Formel (IC) als heterogener Katalysator verwendet wird und wobei die Auslaugrate des Metalls aus dem Katalysator weniger als 10 %, insbesondere weniger als 5 %, des Gesamtgewichts des in dem Katalysator enthaltenen Metalls beträgt.

## Claims

1. Cyclic compound of following general formula (IC): 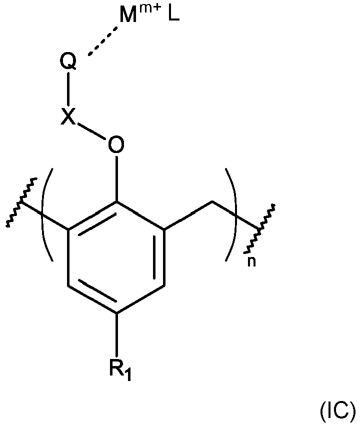 in which:
n represents an integer from 7 to 220,
X is :
- a linear or branched alkyl comprising 1 to 10 carbon atoms, or
- a polyethylene glycol comprising from 1 to 5 units of ethylene glycol, or
- (linear or branched alkyl comprising from 0 to 10 carbon atoms)-aryl, the aryl being preferably selected from phenyl and naphthyl,
R₁ represents :
- a linear or branched alkyl comprising 1 to 8 carbon atoms, or
- O-linear or branched alkyl comprising 1 to 8 carbon atoms or
- O-(linear or branched alkyl of 0-3 carbon atoms)-aryl,
M^{m+} represents a metal in oxidation state m or a metal cluster comprising a plurality of metals in the oxidation state m, where m is 0, 1, 2, 3, 4 or 5, preferably 0, 1, 2 or 3,
L consists of one or more neutral or negatively charged ligands linked to the metal, and
Q represents a group selected from the group consisting of phosphorus ligands, and N-heterocyclic carbenes, or salen ligands.

2. Compound according to claim 1, of following general formula (IC): 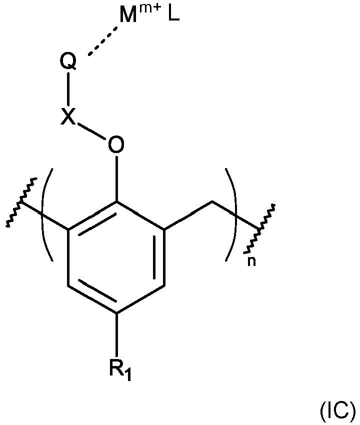 in which:
n, X, M^{m+}, R₁ and L are as defined in claim 1,
Q is selected from the group consisting of phosphorus ligands and N-heterocyclic carbenes.

3. Compound of formula (IC) according to any one of claims 1 to 2, wherein X is a linear alkyl chain comprising from 2 to 8 or from 3 to 8 carbon atoms.

4. Compound of formula (IC) according to any one of claims 1 to 3, wherein R₁ is selected from *n*-octyl, *t*-butyl, O-benzyl and O-alkyl, preferably t-butyl or O-benzyl.

5. Compound of formula (IC) according to any one of claims 1 to 4, in which
n represents an integer from 7 to 20,
X is a linear alkyl comprising 3 to 6 carbon atoms,
Q represents a group selected from the group consisting of phosphorus ligands, and N-heterocyclic carbenes,
R₁ represents n-octyl, t-butyl, O-benzyl, O-methyl, O-ethyl and O-propyl, preferably t-butyl or O-benzyl,
M^{m+} represents a metal in oxidation state m or a metal cluster comprising a plurality of metals in the oxidation state m, where m is 0, 1, 2, 3, 4 or 5, preferably 0, 1, 2 or 3,
L consists of one or more neutral or negatively charged ligands linked to the metal.

6. Compound of formula (IC) according to claim 2, 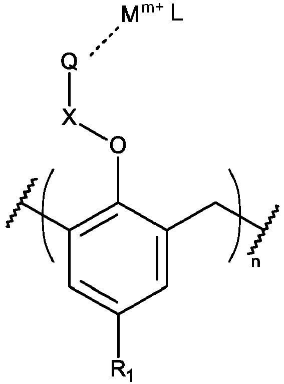 in which:
n, X, R₁ are as defined in one of the claims 1 to 5,
Q is selected from the group consisting of phosphorus ligands and N-heterocyclic carbenes,
M^{m+} is a metal in oxidation state m or a metal cluster comprising a plurality of metals in the oxidation state m, where m is 0, 1, 2, 3, 4 or 5, and
M is a transition metal of the group IB, IIB, IIIB, IVB, VB, VIB, VIIB or VIIIB,
L consists of one or more neutral or negatively charged ligands linked to the metal.

7. Compound of formula (IC) according to claim 6, wherein
M^{m+} is a metal in oxidation state m or a metal cluster comprising a plurality of metals in the oxidation state m, and
M is selected from the group consisting of Ni, Pd, Ru, Rh, Cu, Co or Pt.

8. Compound of general formula (IC) according to claim 1, 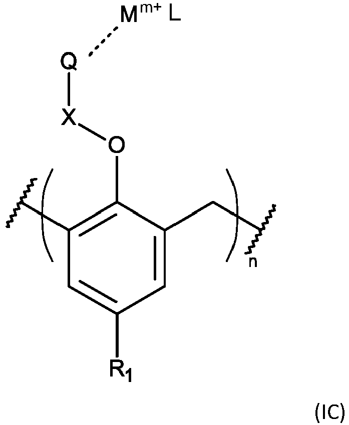 in which:
n, X, M^{m+}, R₁ and L are as defined in claim 1,
Q represents a group selected from the group consisting of salen ligands.

9. Compound of formula (IC) according to claim 1, 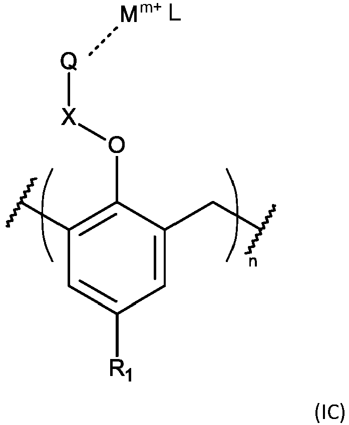 in which:
Q represents a group selected from the group consisting of phosphines, phosphonites, phosphinites, and 1,3-imidazolylidenes, 1,3-imidazolinylidenes, 1,2,4-triazolylidenes, 1,3-benzimidazolylidenes, 1,2,4 triazolylidenes and 1,3-thiazolylidenes, or enantiopure salen ligands.

10. Compound of formula (IC) according to claim 1 selected from:

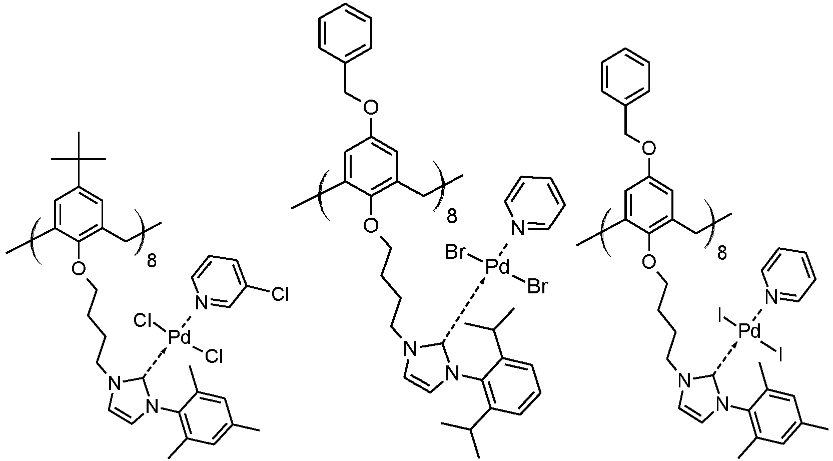

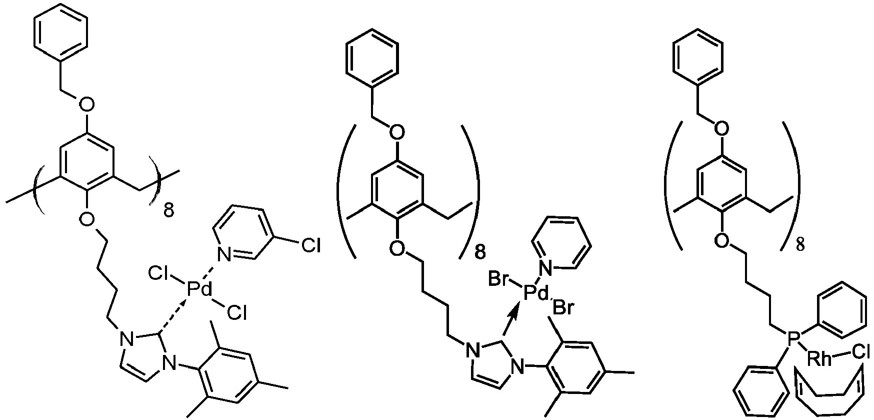

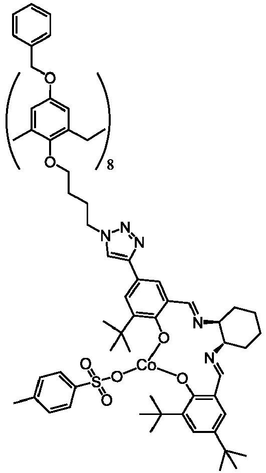

11. Use of a compound of formula (IC) according to any one of claims 1 to 10 as a catalyst in an organic chemical reaction.

12. Use according to claim 11 of a compound of formula (IC) as a catalyst in an organic chemical reaction selected from the group consisting of reduction reactions, the oxidation reactions, the carbon-carbon bond forming reactions, the carbon-heteroatom bond forming reactions, carbonylation reactions in the presence CO, carboxylation reactions in the presence of CO₂, and asymmetric catalysis reactions.

13. Use according to any one of claims 11 to 12 of a compound of formula (IC) as a catalyst in an organic chemical reaction selected from the group consisting of the hydrogenation reactions of carbonyl, alkene, alkyne or arene, the carbon-carbon bond forming reactions such as the Suzuki, Heck, Stille, Kumada and Sonogashira reactions, the carbon-nitrogen, carbon-oxygen, carbon-phosphorus and carbon-sulfur bond forming reactions, Fischer-Tropsch reactions and the epoxide opening reactions.

14. Process for preparing a compound of formula (IC): 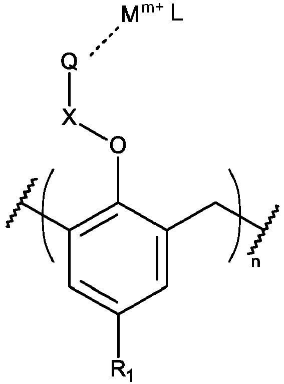 in which:
n, X, L, M^{m+} and R₁ are as defined in claim 1,
Q represents a group selected from the group consisting of phosphines, phosphonites, phosphinites, and N-heterocyclic carbenes,
comprising a step of contacting a compound of formula (IA),
wherein Z represents a group Q selected from the group consisting of phosphorus ligands and N-heterocyclic carbenes, 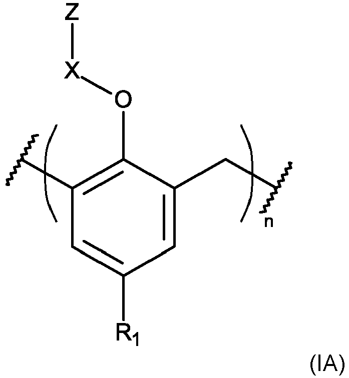
with a metal complex of formula (L')M^{m+} where M^{m+} is a metal in oxidation state m or a metal cluster comprising a plurality of metals in the oxidation state m, where m is 0, 1, 2, 3, 4 or 5, preferably 0, 1, 2 or 3, and L' is comprised 0, one or more neutral or negatively charged ligands bound to the metal.

15. Process according to claim 14 for preparing a compound of formula (IC): 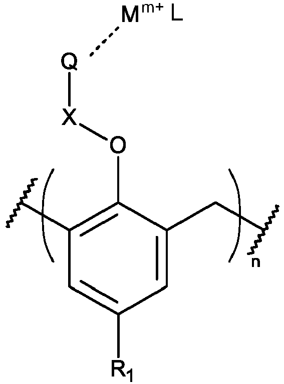 in which:
n, X, L, M^{m+} and R₁ are as defined in claim 1,
Q represents a group selected from the group consisting of phosphines, phosphonites, phosphinites, 1,3-imidazolylidenes, 1,3-imidazolinylidenes, 1,2,4-triazolylidenes, 1,3-benzimidazolylidenes, 1,2,4-triazolylidenes and 1,3-thiazolylidenes,
comprising a step of contacting a compound of formula (IA),
wherein Z represents a group Q selected from the group consisting of phosphines, phosphonites, phosphinites, 1,3-imidazolylidenes, 1,3-imidazolinylidenes, 1,2,4-triazolylidenes, 1,3-benzimidazolylidenes, 1,2,4-triazolylidenes and 1,3-thiazolylidenes, 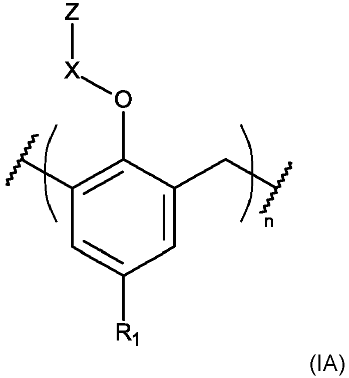
with a metal complex of formula (L')M^{m+} where M^{m+} is a metal in oxidation state m or a metal cluster comprising a plurality of metals in the oxidation state m, where m is 0, 1, 2, 3, 4 or 5, preferably 0, 1, 2 or 3, and L' is comprised 0, one or more neutral or negatively charged ligands bound to the metal.

16. Process for preparing a compound of formula (IC): 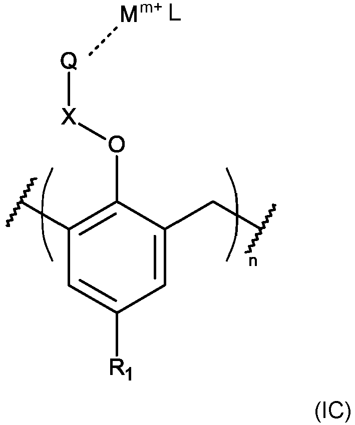 in which:
n, X, L, M^{m+} and R₁ are as defined in claim 1,
Q represents a group selected from the group consisting of salen ligands,
comprising a step of contacting a compound of formula (II): 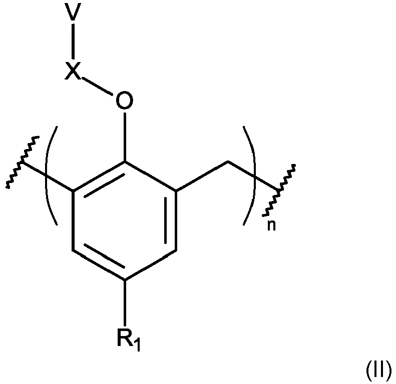 in which:
V represents a leaving group chosen from the group consisting of halogens selected from C!, Br and I and sulfonates selected from OSO₂Me, OSO₂(C₇H₇) et OSO₂CF₃,
with sodium azide as a precursor of a grafting group of a group Q',
Q' being 3-(tert-butyl)-5-triazol-2-hydroxybenzaldehyde,
to obtain a compound of formula (VIII) 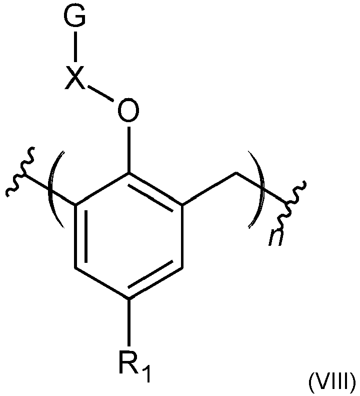 in which:
G represents N₃ group,
and comprising a step of contacting said compound of formula (VIII) with said group Q' to obtain a compound of formula (IB) 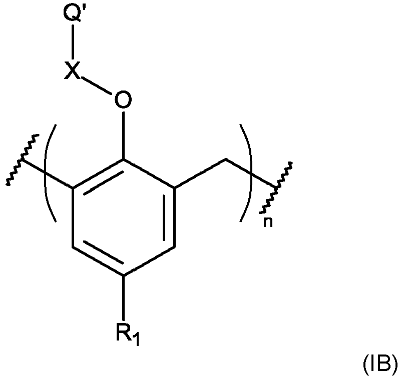
then comprising a step of contacting said compound of formula (IB), with the compound of formula (VII), 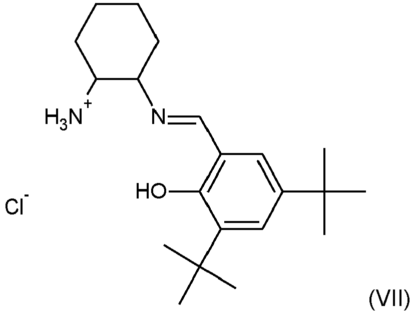
to obtain a compound of formula (IA), 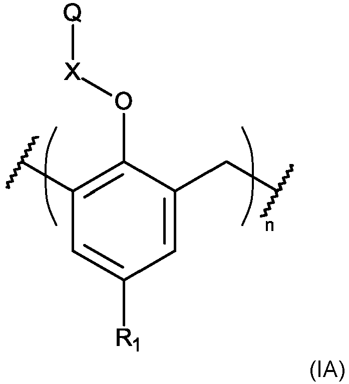
and comprising a step of contacting said compound of formula (IA),
with a metal complex of formula LM^{m+}, wherein M, L and m are as defined in claim 1,
optionally in the presence of a base, in particular with cobalt acetate and para-toluenesulfonic acid,
to obtain said compound of formula (IC).

17. Use according to any one of claims 11 to 13, wherein said compound of formula (IC) is used as heterogeneous catalyst, and wherein the leaching ratio of metal of said catalyst is less than 10%, in particular less than 5% of the total weight of the metal content in this catalyst.
